# EUROPEAN PATENT APPLICATION

(11) **EP 4 786 266 A1**
(43) Date of publication of application: **05.08.2026**
(21) Application number: 24873140.8
(22) Date of filing: 24.09.2024
(51) Int. Cl.: B60N 2/28, B60R 22/26, A01K 1/02, A47D 13/02

(54) **FIXING BELT ASSEMBLY, CONNECTING AND FIXING APPARATUS, ISOFIX CONNECTING ASSEMBLY, AND CARRIER**

(30) Priority: 28.09.2023 CN 202311281154; 13.10.2023 CN 202311331625; 27.10.2023 CN 202311426187; 07.11.2023 CN 202311479562; 10.01.2024 CN 202410041071; 11.04.2024 CN 202410437167; 13.09.2024 CN 202411287535
(71) Applicant: Jani International Pte. Ltd., Singapore 569874 (SG)
(72) Inventor: GUO, Zhengwen, Singapore 569874 (SG); CHEN, Yingzhong, Singapore 569874 (SG)
(74) Representative: Müller-Boré & Partner Patentanwälte PartG mbB
(86) International application number: PCT/SG2024/050617
(87) International publication number: WO 2025/071483

(57) **Abstract**

Provided in the present disclosure are a fixing belt assembly, a connecting and fixing apparatus, an ISOFIX connecting assembly, and a carrier, the fixing belt assembly being used for fixing the carrier to a vehicle seat, the carrier comprising a box body and a bottom support member, and the bottom support member being detachably connected to the box body and arranged below the box body.

## Description

### TECHNICAL FIELD

The present disclosure relates to a carrier, and more particularly to a carrier adapted to a vehicle seat.

### BACKGROUND

Some carriers in the existing technology require separate LATCH assemblies and/or Top Tether assemblies to be secured to vehicle seats. That is to say, a user must always have the LATCH assemblies and/or the Top Tether assemblies on hand to secure the carrier as needed. However, when not in use, such assemblies are prone to becoming disorganized and difficult to be stored, or require additional space for storage, which may also lead to loss of the relevant components.

### SUMMARY

The present disclosure provides a fixing belt assembly for securing a carrier to a vehicle seat, in which the carrier comprises a box body and a bottom support member, the bottom support member is detachably connected to the box body and is arranged below the box body, and the fixing belt assembly is configured to be connected to the carrier and at least a portion of the fixing belt assembly is capable of being stored in a storage space of the carrier.

In one embodiment, the storage space is provided in the bottom support member.

In one embodiment, the fixing belt assembly comprises: a first belt assembly, at least a portion of which being routed from a side of the carrier away from a backrest of the vehicle seat to a bottom of the carrier, and one end of the first belt assembly is provided with a first connecting device connected to a top of the vehicle seat; and a second belt assembly provided at the bottom of the carrier, one end of the second belt assembly is connected to the other end of the first belt assembly, and the other end of the second belt assembly is provided with a second connecting device, and the second connecting device is connected to the vehicle seat, so as to secure the carrier to the vehicle seat.

In one embodiment, the first belt assembly is fixedly connected to the second belt assembly, or the first belt assembly and the second belt assembly are integrally formed.

In one embodiment, the storage space comprises a first storage groove and a second storage groove. The first storage groove is configured to store at least a portion of the second connecting device and the second belt assembly, and the second storage groove is configured to store at least a portion of the first connecting device and the first belt assembly.

In one embodiment, the first storage groove and the second storage groove are respectively provided on opposite sides of the bottom support member along a width direction.

In one embodiment, the first storage groove is located in a middle of a side of the bottom support member that is close to a backrest of the vehicle seat, and the second storage groove is located in the middle of an opposite side of the first storage groove.

In one embodiment, the carrier further comprises a bottom covering member that covers outside the bottom support member. The bottom covering member is provided with a first storage cover and a second storage cover that are capable of being opened and closed, in which the first storage cover is configured to shield the first storage groove, and the second storage cover is configured to shield the second storage groove.

In one embodiment, the bottom support member is provided with a fixing belt limiting structure, and the fixing belt limiting structure is configured to position the fixing belt assembly such that at least a portion of the fixing belt assembly is connected to the carrier.

In one embodiment, the fixing belt limiting structure comprises: a first limiting structure configured to limit the second belt assembly, the first limiting structure being provided close to the second connecting device or on a side of the bottom support member that is close to the backrest of the vehicle seat; and a second limiting structure configured to limit the first belt assembly and/or the second belt assembly, the second limiting structure being provided close to a connection point between the first belt assembly and the second belt assembly or on a side of the bottom support member that is away from the backrest of the vehicle seat.

In one embodiment, the number of the first limiting structures is proportional to the number of the second connecting devices, and the number of the second limiting structures is proportional to the number of ends of the first belt assembly that are connected to the second belt assembly.

In one embodiment, the carrier further comprises a reinforcing bracket provided at an underside of the bottom support member, and the fixing belt limiting structure is provided on the reinforcing bracket.

In one embodiment, the reinforcing bracket comprises: a first reinforcing rod extending along a length direction of the bottom support member; and a second reinforcing rod connected to the first reinforcing rod and extending along a width direction of the bottom support member. The fixing belt limiting structure comprises a first limiting structure for limiting the second belt assembly and a second limiting structure for limiting the first belt assembly. The first limiting structure is provided at a connection between one end of the second reinforcing rod and the first reinforcing rod, and the second limiting structure is provided at the other end of the second reinforcing rod.

In one embodiment, two first reinforcing rods and two second reinforcing rods are provided, the two first reinforcing rods being provided substantially parallel to each other, and the two second reinforcing rods being provided between the two first reinforcing rods and spaced apart from each other to form a ring-shaped structure with the two first reinforcing rods. Each of the two first reinforcing rods is provided with one of the first limiting structures, and each of the two second reinforcing rods is provided with one of the second limiting structures.

In one embodiment, the second reinforcing rod has a non-linear structure, such that a spacing between the two second limiting structures is greater than or equal to a spacing between the two first limiting structures.

In one embodiment, the second reinforcing rod has a non-linear structure and comprises a first section and a second section. The first section extends substantially linearly along a transverse axis direction, and the second section is slightly inclined relative to the transverse axis direction, such that the second sections of the two second reinforcing rods are inclined towards each other.

In one embodiment, the fixing belt limiting structure comprises two first limiting structures and two second limiting structures, and the spacing between the two second limiting structures is greater than or equal to the spacing between the two first limiting structures.

In one embodiment, the second reinforcing rod comprises an extending section, which has an arcuate structure to be matched with the side of the bottom support member that is away from the backrest of the vehicle seat, and the second limiting structure is provided on the extending section.

In one embodiment, the fixing belt limiting structure comprises a seat body and a limiting rod, the seat body being provided on the reinforcing bracket, and the limiting rod being provided on the seat body, such that the fixing belt assembly passes between the seat body and the limiting rod.

In one embodiment, the fixing belt limiting structures are provided in two, the two fixing belt limiting structures being provided at the two ends of the bottom support member along its longitudinal axis direction to limit the second belt assembly.

In one embodiment, the two fixing belt limiting structures are symmetrically provided with respect to a centerline of the bottom support member in a longitudinal axis direction.

In one embodiment, the fixing belt limiting structure comprises a first tubular structure and/or a second tubular structure. The first tubular structure has a length extending along a longitudinal axis direction of the bottom support member, and a clearance gap is formed in the first tubular structure through which the fixing belt assembly passes. The second tubular structure is provided to intersect with the first tubular structure. The clearance gap through which the fixing belt assembly passes is formed on the first tubular structure or the second tubular structure, or between the first tubular structure and the second tubular structure.

In one embodiment, the first tubular structure is provided substantially perpendicular to the second tubular structure.

In one embodiment, at least a portion of the second tubular structure is inclined relative to both the longitudinal axis direction and a transverse axis direction of the carrier, such that a distance between first ends of the two second tubular structures of the two fixing belt limiting structures is less than a distance between second ends of the two second tubular structures.

In one embodiment, the first tubular structure and the second tubular structure are separate structures that are nested together and in communication with each other.

In one embodiment, the first tubular structure and the second tubular structure are integrally formed as a unitary structure.

In one embodiment, the reinforcing bracket comprises a reinforcing rod, which is provided in a middle of the bottom support member along the transverse axis direction and extends along the longitudinal axis direction.

In one embodiment, the bottom support member is provided with two supporting feet, which are respectively located at the two ends of the bottom support member along the longitudinal axis direction. The two ends of the reinforcing rod are respectively confined between each supporting foot and the bottom support member to keep the reinforcing rod in place.

In one embodiment, the fixing belt limiting structure is provided in two, and the two fixing belt limiting structures are located at the two ends of the reinforcing rod to limit the second belt assembly.

In one embodiment, the fixing belt limiting structure comprises a first tubular structure or a second tubular structure. The first tubular structure has a length extending along the longitudinal axis direction, is sleeved and fixed on the reinforcing rod. A clearance gap through which the fixing belt assembly passes is formed between an inner surface of the first tubular structure and an outer surface of the reinforcing rod. The second tubular structure is provided to intersect with the first tubular structure, in which the clearance gap through which the fixing belt assembly passes.

In one embodiment, the fixing belt limiting structure comprises a first tubular structure and a second tubular structure. The first tubular structure has a length extending along the longitudinal axis direction and is sleeved on the reinforcing rod. The second tubular structure is provided to intersect with the first tubular structure. A clearance gap through which the fixing belt assembly passes is formed between an inner surface of the second tubular structure and the outer surface of the reinforcing rod.

In one embodiment, a convex rib is formed on a side wall of the first tubular structure within the second tubular structure, and the clearance gap is located between the convex rib and an inner surface of an upper wall of the second tubular structure.

In one embodiment, the reinforcing rod is located between two side walls of the first tubular structure.

In one embodiment, the first tubular structure and the second tubular structure are separate structures that are nested together and in communication with each other.

In one embodiment, the first tubular structure and the second tubular structure are integrally formed as a unitary structure.

The present disclosure further provides a carrier. The carrier comprises the fixing belt assembly according to any one of the preceding embodiments.

The present disclosure provides a buffer structure. The buffer structure is provided on the connecting and fixing apparatus for securing the carrier to the vehicle seat. The connecting and fixing apparatus comprises a first connecting end and a second connecting end. The first connecting end is connected to a first anchoring point, at least a portion of the connecting and fixing apparatus is routed from a side of the carrier away from a backrest of the vehicle seat to the underside of the carrier so that the second connecting end is connected to a second anchoring point.

In one embodiment, the buffer structure is provided between the first connecting end and the second connecting end of the connecting and fixing apparatus.

In one embodiment, the buffer structure is provided on the bottom of the carrier.

In one embodiment, the buffer structure comprises at least one buffer belt, the two ends of which are respectively connected to the connecting and fixing apparatus by a first fixing member and a second fixing member.

In one embodiment, at least one of the buffer belts is provided above the connecting and fixing apparatus.

In one embodiment, the at least one buffer belt comprises a buffer belt that is formed in a ring-shaped structure or used in a folded manner.

In one embodiment, the at least one buffer belt comprises a plurality of buffer belts, which have the same elongation or different elongations.

In one embodiment, an initial effective length of the buffer belt between the first fixing member and the second fixing member is less than an initial effective length of the connecting and fixing apparatus between the first fixing member and the second fixing member.

In one embodiment, an elongation of the buffer belt is greater than an elongation of the connecting and fixing apparatus on which the buffer belt is provided.

In one embodiment, the buffer structure comprises at least one first knot point, and the at least one first knot point is provided on the connecting and fixing apparatus and located between the first fixing member and the second fixing member.

In one embodiment, the buffer belt is provided with at least one second knot point. When the at least one second knot point is released, a buffering effective length of the buffer belt between the first fixing member and the second fixing member is less than an effective length of the connecting and fixing apparatus between the first fixing member and the second fixing member.

In one embodiment, the buffer belt is provided with at least one second knot point. When the at least one second knot point is released, a buffering effective length of the buffer belt between the first fixing member and the second fixing member is greater than an effective length of the connecting and fixing apparatus between the first fixing member and the second fixing member. An elongation of the buffer belt is less than an elongation of the connecting and fixing apparatus on which the buffer belt is provided.

In one embodiment, the buffer structure comprises at least one first knot point, and the at least one first knot point is provided on the connecting and fixing apparatus and located between the first fixing member and the second fixing member.

The present disclosure also provides a connecting and fixing apparatus. The connecting and fixing apparatus comprises a first belt connecting assembly and a second belt connecting assembly that are detachably connected to each other. One end of the first belt connecting assembly forms a first connecting end of the connecting and fixing apparatus. The other end of the first belt connecting assembly is connected to one end of the second belt connecting assembly, and the other end of the second belt connecting assembly forms the second connecting end of the connecting and fixing apparatus; and the buffer structure according to any one of the preceding embodiments.

In one embodiment, the first belt connecting assembly comprises a first belt structure and a second belt structure having different elongations. The first belt structure and the second belt structure are alternatively used and are detachably connected to the second belt connecting assembly, respectively.

In one embodiment, the elongation of the first belt structure is greater than the elongation of the second belt structure. When the first anchoring point is close to the carrier, the first belt structure is connected to the second belt connecting assembly. When the first anchoring point is away from the carrier, the second belt structure is connected to the second belt connecting assembly.

In one embodiment, the buffer structure is provided on at least one of the first belt structure, the second belt structure, and the second belt connecting assembly.

The present disclosure also provides a carrier. The carrier is secured to the vehicle seat by the connecting and fixing apparatus according to any one of the preceding embodiments.

In one embodiment, the carrier comprises a box body and a bottom support member connected to the box body. The bottom support member is provided with two belt limiting structures, which are respectively located at the two ends of the bottom support member along the longitudinal axis direction, to allow at least a portion of the connecting and fixing apparatus to pass through, in which the buffer structure is provided on a portion of the connecting and fixing apparatus that passes through the belt limiting structures.

The present disclosure provides a connecting and fixing apparatus. The connecting and fixing apparatus is used to secure a carrier to a vehicle seat. The connecting and fixing apparatus has a first connecting end and a second connecting end respectively connected to a first anchoring point and a second anchoring point, at least a portion of the connecting and fixing apparatus is routed from a side of the carrier away from a backrest of the vehicle seat. The connecting and fixing apparatus comprises a first belt connecting assembly and a second belt connecting assembly detachably connected to each other, and the first belt connecting assembly comprises a first belt structure and a second belt structure. The first belt structure and the second belt structure are alternatively used and detachably connected to the second belt connecting assembly. The first belt structure and the second belt structure have different elongations.

In one embodiment, the first connecting end of the connecting and fixing apparatus is connected to a first anchoring point at a top of the vehicle seat or above the vehicle seat. At least a portion of the connecting and fixing apparatus is routed from above the carrier, around the side of the carrier that is away from the backrest of the vehicle seat, and down to the underside of the carrier, so that the second connecting end of the connecting and fixing apparatus is connected to a second anchoring point on the vehicle seat.

In one embodiment, the first belt structure comprises a first belt body as well as a first end and a second end located at two ends of the first belt body. When the first belt structure is connected to the second belt connecting assembly, a first end of the first belt structure forms a first connecting end of the connecting and fixing apparatus, and the second end is detachably connected to the second belt connecting assembly.

The second belt structure comprises a second belt body as well as a first end and a second end located at two ends of the second belt body. When the second belt structure is connected to the second belt connecting assembly, a first end of the second belt structure forms a first connecting end of the connecting and fixing apparatus, and the second end is detachably connected to the second belt connecting assembly.

The second end of the second belt connecting assembly forms the second connecting end.

In one embodiment, the elongation of the first belt structure is greater than the elongation of the second belt structure, when the first anchoring point is close to the carrier, the first belt structure is connected to the second belt connecting assembly; and when the first anchoring point is away from the carrier, the second belt structure is connected to the second belt connecting assembly.

In one embodiment, the elongation of the first belt structure is in a range of 17% to 26%, and the elongation of the second belt structure is in a range of 7% to 16%.

In one embodiment, the elongation of the first belt structure is 21%, and the elongation of the second belt structure is 12%.

In one embodiment, an initial effective length of the first belt structure is greater than an initial effective length of the second belt structure.

In one embodiment, a buffer structure is provided on at least one of the first belt structure, the second belt structure, and the second belt connecting assembly.

In one embodiment, the first belt structure and the second belt structure are Top Tether assemblies, and the second belt connecting assembly is a LATCH assembly.

The present disclosure provides an ISOFIX connecting assembly for securing a box of a carrier to a vehicle seat, in which the ISOFIX connecting assembly comprises an engaging part, a connecting part and a mounting part. The engaging part is connected to an ISOFIX interface provided on the vehicle seat. The mounting part is fixedly connected to the box. The connecting part is fixedly connected to the engaging part and movably connected to the mounting part to drive the engaging part to move relative to the mounting part.

In one embodiment, the connecting part is capable of moving along the mounting part in the longitudinal direction of the box body to adjust a position of the engaging part relative to the box, thereby being suitable for securing the box to different positions of the vehicle seat.

In one embodiment, the connecting part comprises a sliding member and a connecting component. The sliding member is slidably pivoted to the mounting part. The connecting component is connected between the engaging part and the sliding member to drive the engaging part to slide and/or pivot relative to the mounting part.

In one embodiment, the mounting part has a tubular shape, and the sliding member is formed as a circular sleeve that is fitted over the outside of the mounting part.

In one embodiment, the ISOFIX connecting assembly is provided with at least two engaging parts. The connecting component comprises a synchronizing member and a connecting member. The synchronizing member connects the at least two engaging parts together to drive the at least two engaging parts to move synchronously. The connecting member is connected between the synchronizing member and the sliding member.

In one embodiment, the ISOFIX connecting assembly further comprises a locking device. The locking device is provided between the connecting part and the mounting part to lock the connecting part to the mounting part and unlock the connecting part from the mounting part.

In one embodiment, the locking device comprises a locking member and an unlocking operating member. The locking member is capable of cooperating with a locking part provided on the mounting part and has a locked position and an unlocked position. When the locking member is in the locked position, the locking member is engaged with the locking part, and the connecting part is locked relative to the mounting part. When the locking member is in the unlocked position, the locking member is disengaged from the locking part, and the connecting part may be unlocked relative to the mounting part. The unlocking operating member is operated to move the locking member from the locked position to the unlocked position.

In one embodiment, the unlocking operating member is fixedly connected to the locking member and is slidably provided relative to the mounting part to move together with the locking member relative to the mounting part.

In one embodiment, the locking part comprises a first locking part and a second locking part. The first locking part and the second locking part are respectively provided at different positions of the mounting part along a longitudinal direction of the box body, to lock the connecting part relative to the mounting part at different positions.

In one embodiment, the locking device further comprises a resetting member, which provides a force to bias the locking member towards the locked position.

In one embodiment, the ISOFIX connecting assembly is also provided with a limiting member, which is provided at the two ends of the mounting part to limit the connecting part.

In one embodiment, the connecting part is pivotable relative to the mounting part, so that the connecting part and the engaging part are stored in the box, and the locking part further comprises a third locking part located on an opposite side of the first locking part and the second locking part to be engaged with the locking member to lock the connecting part stored.

In one embodiment, the connecting part is pivotable relative to the mounting part, so that the connecting part and the engaging part are stored in the box, and the box is provided with a locking mechanism to lock the connecting part stored in the box.

In one embodiment, the locking mechanism comprises a connecting seat and a locking member, the connecting seat is connected to the box, and the locking member is provided on a side of the connecting seat that is close to the connecting part.

In one embodiment, the locking member is a reverse buckle protruding from the side of the connecting seat, which is capable of being engaged with the connecting part in an interference fit to lock the ISOFIX connecting assembly.

In one embodiment, the locking member is an elastic tab protruding from one side of the connecting seat. When the ISOFIX connecting assembly is stored, at least a portion of the connecting part presses against the elastic tab to be deformed, thereby passing over the elastic tab to be locked between the elastic tab and the box.

In one embodiment, the locking member is an elastic protrusion provided on the box, and the connecting part is correspondingly provided with a groove. The elastic protrusion and the groove are configured to be cooperated with each other to lock the ISOFIX connecting assembly.

The present disclosure further provides a carrier. The carrier comprises a box. The box provides an accommodating space and comprises a box body and a bottom support member. The bottom support member is detachably connected to the box body. The ISOFIX connecting assembly according to any one of the preceding embodiments is provided on the bottom support member.

In one embodiment, the bottom support member is provided with a component storage groove, and the component storage groove provides a storage space for storing the ISOFIX connecting assembly.

In one embodiment, the bottom support member is provided with a locking mechanism. When the ISOFIX connecting assembly is stored in the component storage groove, the locking mechanism locks the connecting part of the ISOFIX connecting assembly to keep the ISOFIX connecting assembly within the component storage groove.

In one embodiment, the locking mechanism is provided at an edge of the component storage groove.

In one embodiment, the carrier further comprises a reinforcing bracket, which is provided at an underside of the bottom support member and comprises a first reinforcing rod and two second reinforcing rods. The first reinforcing rod extends along the longitudinal direction and is connected between the two second reinforcing rods. The mounting part is provided between the two second reinforcing rods and is spaced apart from the first reinforcing rod.

In one embodiment, the two ends of the mounting part are respectively connected to one end of each of the two second reinforcing rods, and the two ends of the first reinforcing rod are respectively connected to the other end or vicinity of each of the two second reinforcing rods.

In one embodiment, the carrier further comprises a fixing belt assembly. The fixing belt assembly is connected to the box to secure the box to the vehicle seat, and comprises a belt body, a first connecting end, and a second connecting end. The belt body is located between the first connecting end and the second connecting end, the first connecting end is connected to the vehicle seat, at least a portion of the belt body is routed to a side of the box away from the backrest of the vehicle seat, and the second connecting end is connected to the bottom support member or the ISOFIX connecting assembly.

In one embodiment, the second connecting end is connected to the mounting part of the ISOFIX connecting assembly.

In one embodiment, the bottom support member is provided with a fixing belt storage groove for storing the fixing belt assembly.

In one embodiment, the bottom support member is provided with a belt fixing structure to connect at least a portion of the fixing belt assembly to the bottom support member, and the belt fixing structure is arranged on a side of the bottom support member away from the backrest of the vehicle seat, and the second connecting end of the fixing belt assembly is connected to the belt fixing structure.

In one embodiment, the belt fixing structure comprises a fixing base and a fixing pin. The fixing base is provided at an edge or vicinity of a side of the bottom support member that is away from the backrest of the vehicle seat. The fixing pin is provided within the fixing base and is spaced apart from the bottom surface of the fixing base, such that the second connecting end of the fixing belt assembly may be wound around the fixing pin.

### BRIEF DESCRIPTION OF THE DRAWINGS

The accompanying drawings, which are incorporated into and constitute a part of this specification, illustrate embodiments consistent with the present disclosure, and serve to explain the principles of the present disclosure together with the description.
FIG. 1 is a perspective view of a carrier secured to a vehicle seat according to a first embodiment of the present disclosure.
FIG. 2 is another perspective view of the carrier shown in FIG. 1 and a fixing belt assembly, with a bottom covering member being removed from the carrier.
FIG. 3 and FIG. 4 are perspective views of the fixing belt assembly and carrier shown in FIG. 2, respectively.
FIG. 5A to FIG. 5C show perspective views of components of the bottom support member.
FIG. 6 is a perspective view of a reinforcing bracket of the carrier according to the first embodiment of the present disclosure.
FIG. 7A is a perspective view of a first limiting structure of the carrier according to the first embodiment of the present disclosure.
FIG. 7B and FIG. 7C are perspective views of a second limiting structure of the carrier according to the first embodiment of the present disclosure.
FIG. 8 is a bottom perspective view of the carrier and the fixing belt assembly in a use state as shown in FIG. 1.
FIG. 9 is a perspective view of the carrier with the fixing belt assembly stored as shown in FIG. 8.
FIG. 10 is a perspective view showing that the carrier according to a second embodiment of the present disclosure is secured to a vehicle seat.
FIG. 11 is a perspective view of the carrier and the fixing belt assembly shown in FIG. 10, viewed from another angle.
FIG. 12A is another perspective view of the carrier and the fixing belt assembly shown in FIG. 11, with a bottom covering member of the carrier removed.
FIG. 12B is a partial sectional view taken along line H-H in FIG. 12A.
FIG. 12C is a partial sectional view taken along line J-J in FIG. 12A.
FIG. 13 is a perspective view of the carrier shown in FIG. 11 in another state, with the fixing belt assembly stored.
FIG. 14 is a perspective view of the carrier shown in FIG. 13, after the bottom covering member has been removed.
FIG. 15A is a perspective view of the carrier and the fixing belt assembly according to the third embodiment of the present disclosure, with the bottom covering member removed.
FIG. 15B is a partial sectional view taken along line K-K in FIG. 15A.
FIG. 15C is a partial sectional view taken along line N-N in FIG. 15A.
FIG. 16 is a perspective view of the carrier shown in FIG. 15A in another state, with the fixing belt assembly stored.
FIG. 17 is a bottom perspective view of the carrier according to a fourth embodiment of the present disclosure.
FIG. 18 is a bottom schematic view of the carrier shown in FIG. 17.
FIG. 19A is a perspective view of a fixing belt limiting structure shown in FIG. 17.
FIG. 19B is a top view of the fixing belt limiting structure shown in FIG. 19A.
FIG. 20 is a perspective view of the carrier shown in FIG. 17 secured to a vehicle seat.
FIG. 21 is a rear view of the carrier according to a fifth embodiment of the present disclosure.
FIG. 22 is a perspective view showing that a carrier according to one embodiment of the present disclosure is secured to a vehicle seat through a connecting and fixing apparatus.
FIG. 23 is a perspective view of the connecting and fixing apparatus according to one embodiment of the present disclosure.
FIG. 24 is a perspective view of a carrier provided with the connecting and fixing apparatus according to one embodiment of the present disclosure, with the bottom covering member of the carrier removed.
FIG. 25 is a schematic perspective view of a bottom support member provided with a connecting and fixing apparatus according to one embodiment of the present disclosure.
FIG. 26A and FIG. 26B are a partial perspective view showing that a second belt connecting assembly of the connecting and fixing apparatus is connected to the bottom support member according to another embodiment of the present disclosure, and a partial structural schematic view of the second belt connecting assembly, respectively.
FIG. 27A to FIG. 27D are partial structural schematic views of the second belt connecting assembly according to the present disclosure.
FIG. 28 shows a perspective view showing that the carrier according to one embodiment of the present disclosure is secured to a vehicle seat.
FIG. 29 and FIG. 30 show bottom perspective views of the carrier according to one embodiment of the present disclosure in different use states.
FIG. 31A shows a bottom view of the carrier shown in FIG. 29.
FIG. 31B shows a partial sectional view of part A shown in FIG. 31A.
FIG. 32A shows a bottom view of the carrier shown in FIG. 30.
FIG. 32B shows a partial sectional view of part B shown in FIG. 32A.
FIG. 33A shows a bottom view of the carrier according to one embodiment of the present disclosure in a storage state.
FIG. 33B shows a partial sectional view of part C shown in FIG. 33A.
FIG. 34 shows another bottom view of the carrier shown in FIG. 33A.
FIG. 35 to FIG. 37 are bottom perspective views of a carrier according to another embodiment of the present disclosure in different use states.
FIG. 38 is a bottom perspective view of the carrier shown in FIG. 37 in a storage state.
FIG. 39A shows a partial enlarged view of part E shown in FIG. 38.
FIG. 39B shows a partial sectional view taken along line F-F in FIG. 39A.
FIG. 40 shows another bottom perspective view of the carrier shown in FIG. 38, with the bottom covering member removed.
FIG. 41A shows yet another bottom perspective view of the carrier according to another embodiment of the present disclosure, with the bottom covering member removed.
FIG. 41B is a partial sectional view taken along line G-G in FIG. 41A.

### Reference numbers are listed as follows:

| | |
|---|---|
| carrier | 2100 |
| body | 2110 |
| window | 2111 |
| bottom support member | 2120 |
| first storage groove | 2121 |
| second storage groove | 2122 |
| supporting foot | 2123 |
| fixing post | 21231 |
| fixing hole | 21232 |
| anti-slip pad | 21233 |
| reinforcing bracket | 2124 |
| first reinforcing rod | 21241 |
| second reinforcing rod | 21242 |
| first section | 21242a |
| second section | 21242b |
| extending section | 21242c |
| bracket storage groove | 2125 |
| first limiting structure | 2126 |
| first limiting rod | 21261 |
| first seat body | 21262 |
| first portion | 21262a |
| second portion | 21262b |
| first mounting hole | 21263 |
| second limiting structure | 2127 |
| second limiting rod | 21271 |
| second seat body | 21272 |
| first portion | 21272a |
| second portion | 21272b |
| second mounting hole | 21273 |
| body covering member | 2130 |
| bottom covering member | 2140 |
| first storage cover | 2141 |
| second storage cover | 2142 |
| anti-collision structure | 2200 |
| fixing belt assembly | 2300 |
| first belt assembly | 2310 |
| first belt | 2311 |
| second belt | 2312 |
| first connecting end | 2313 |
| second connecting end | 2314 |
| length adjuster | 2315 |
| first connecting device | 23131 |
| second belt assembly | 2320 |
| third belt | 2321 |
| third connecting end | 2322 |
| fourth connecting end | 2323 |
| second connecting device | 23231 |
| vehicle seat | 2600 |
| carrier | 3100, 4100, 5100, 6100 |
| box body | 3110 |
| side support | 6111 |
| first window | 6116a, 6116b |
| bottom support member | 3120, 4120, 5120 |
| first storage groove | 3121 |
| second storage groove | 3122 |
| supporting foot | 3123, 4123 |
| reinforcing rod | 3124, 5124 |
| bracket storage groove | 3125 |
| fixing belt limiting structure | 3126, 4126, 5126 |
| first tubular structure | 31261, 41261, 51261 |
| second tubular structure | 31262, 41261, 51262 |
| first end | 51262a |
| second end | 51262b |
| convex rib | 41263 |
| clearance gap | 31264, 41264 |
| fastener | 3128, 4128 |
| body covering member | 3130 |
| bottom covering member | 3140 |
| first storage cover | 3141 |
| second storage cover | 3142 |
| fixing belt assembly | 3300, 4300, 5300 |
| first belt assembly | 3310, 4310 |
| first belt | 3311 |
| second belt | 3312, 5312 |
| first connecting end | 3313 |
| second connecting end | 3314 |
| length adjuster | 3315 |
| first connecting device | 33131 |
| second belt assembly | 3320 |
| third belt | 3321, 4321, 5321 |
| third connecting end | 3322 |
| fourth connecting end | 3323 |
| second connecting device | 33231 |
| vehicle seat | 3600, 5600 |
| carrier | M100 |
| box body | M110 |
| bottom support member | M120 |
| reinforcing rod | M124 |
| belt limiting structure | M126 |
| connecting and fixing apparatus | M300 |
| first belt connecting assembly | M301 |
| first belt structure | M310 |
| first belt body | M311 |
| first end | M312 |
| second end | M313 |
| first length adjuster | M314 |
| second belt structure | M320 |
| second belt body | M321 |
| first end | M322 |
| second end | M323 |
| second length adjuster | M324 |
| second belt connecting assembly | M302 |
| third belt body | M331 |
| first end | M332 |
| second end | M333 |
| buffer belt | M334 |
| first stitching point | MX1 |
| second stitching point | MX2 |
| knot point | MC1, MC2 |
| carrier | N1 |
| box | N100 |
| body covering member | N101 |
| bottom covering member | N102 |
| storage cover | N1021 |
| box body | N110 |
| bottom support member | N120 |
| component storage groove | N121 |
| fixing belt storage groove | N122 |
| ISOFIX connecting assembly | N200 |
| engaging part | N210 |
| connecting part | N220 |
| sliding member | N221 |
| wear-resistant member | N2210 |
| synchronizing member | N222 |
| connecting member | N223 |
| mounting part | N230 |
| first locking part | N231 |
| second locking part | N232 |
| third locking part | N233 |
| locking device | N240 |
| unlocking operation member | N241 |
| locking member | N242 |
| resetting member | N243 |
| mounting seat | N244 |
| upper cover | N2441 |
| lower cover | N2442 |
| reinforcing bracket | N300 |
| first reinforcing rod | N310 |
| second reinforcing rod | N320 |
| extending section | N321 |
| belt fixing structure | N330 |
| fixing base | N331 |
| fixing pin | N332 |
| limiting member | N340 |
| fixing belt assembly | N500 |
| first connecting end | N501 |
| second connecting end | N502 |
| first belt | N510 |
| second belt | N520 |
| length adjuster | N530 |
| vehicle seat | N600 |
| carrier | N1A |
| box | N100A |
| body covering member | N101A |
| bottom covering member | N102A |
| storage cover | N1021A |
| box body | N110A |
| bottom support member | N120A |
| component storage groove | N121A |
| fixing belt storage groove | N122A |
| supporting foot | N123A |
| ISOFIX connecting assembly | N200A |
| engaging part | N210A |
| connecting part | N220A |
| sliding member | N221A |
| synchronizing member | N222A |
| connecting member | N223A |
| mounting part | N230A |
| locking device | N400A |
| connecting seat | N410A |
| upper surface | N411A |
| mounting hole | N412A |
| locking member | N420A |
| fixing belt assembly | N500A |
| first connecting end | N501A |
| second connecting end | N502A |
| first belt | N510A |
| second belt | N520A |
| length adjuster | N530A |

### DETAILED DESCRIPTION

Exemplary embodiments will now be described more fully by reference to the accompanying drawings. However, the exemplary embodiments can be implemented in various forms and should not be understood as being limited to the examples set forth herein. Rather, the embodiments are provided so that this disclosure will be thorough and complete.

Hereinafter, a first group of embodiments for securing a carrier to a vehicle seat will be described.

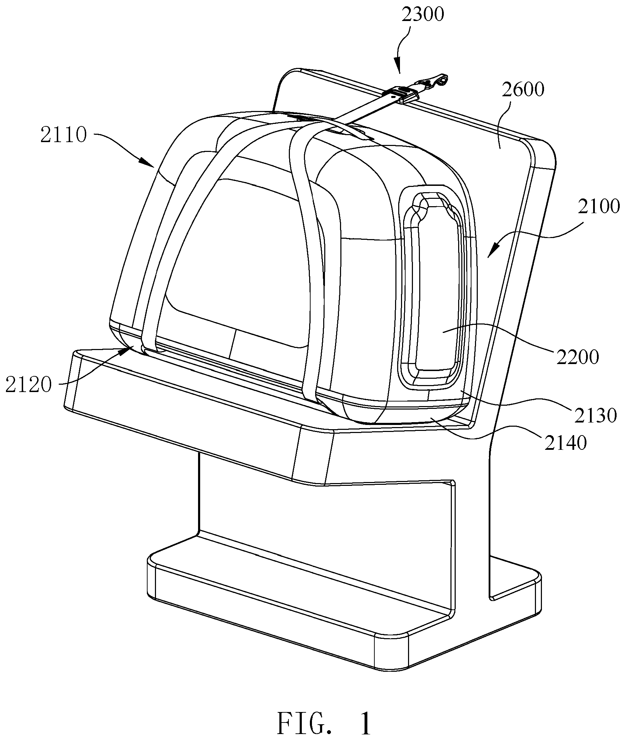

Referring to FIG. 1, the first embodiment of the present disclosure provides a carrier 2100 and a fixing belt assembly 2300 for the carrier 2100. The carrier 2100 may be secured to the vehicle seat 2600 through the fixing belt assembly 2300.

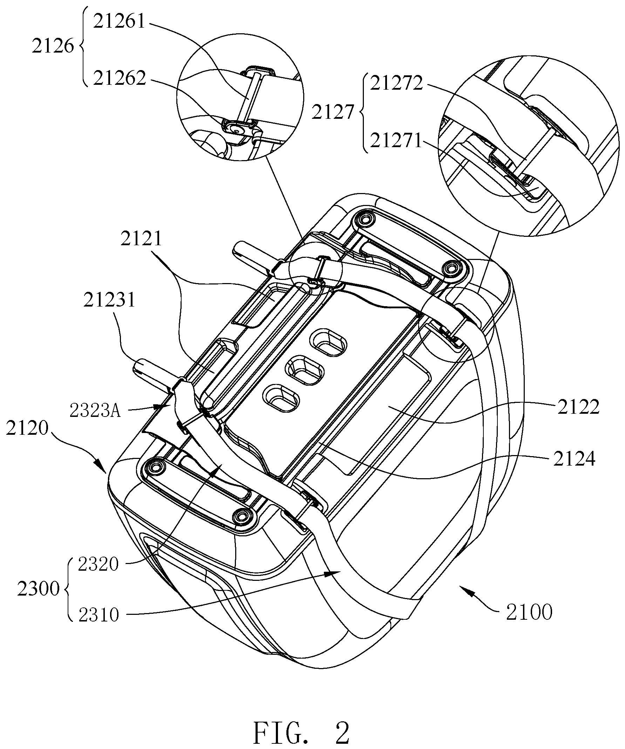

As shown in FIG. 1, the fixing belt assembly 2300 of this embodiment is configured to connect to the carrier 2100. Optionally, the fixing belt assembly 2300 is at least partially fixedly connected to the carrier 2100 (e.g., in a detachable or non-detachable manner). At least a portion of the fixing belt assembly 2300 may be stored in a storage space of the carrier 2100. The location and structure of the storage space will be specifically described below with reference to FIG. 2.

Specifically, the carrier 2100 comprises a box body 2110 and a bottom support member 2120. The bottom support member 2120 is detachably connected to the box body 2110 to form a box that provides a space for storing a pet or a child. The exterior of the box is covered with a covering member, which may comprise at least one of fabric, plastic, or PE; the present disclosure is not limited thereto. Specifically, the covering member may comprise a body covering member 2130 that covers the exterior of the box body 2110 and a bottom covering member 2140 that covers the exterior of the bottom support member 2120. The body covering member 2130 is detachably connected to the bottom covering member 2140, for example, by zipper structures, Velcro, hook-and-ring-shaped fasteners, etc., the present disclosure is not limited thereto.

In addition, as shown in FIG. 1, the carrier 2100 may also be provided with an anti-collision structure 2200 to reduce impact on the carrier 2100. The anti-collision structure 220 may be fixedly provided on the exterior of the body covering member 2130, for example, by sewing, gluing, or other means. Specifically, the anti-collision structure 2200 is at least provided at a side of the carrier 2100 that is close to the vehicle door when the carrier 2100 is placed on the vehicle seat 2600.

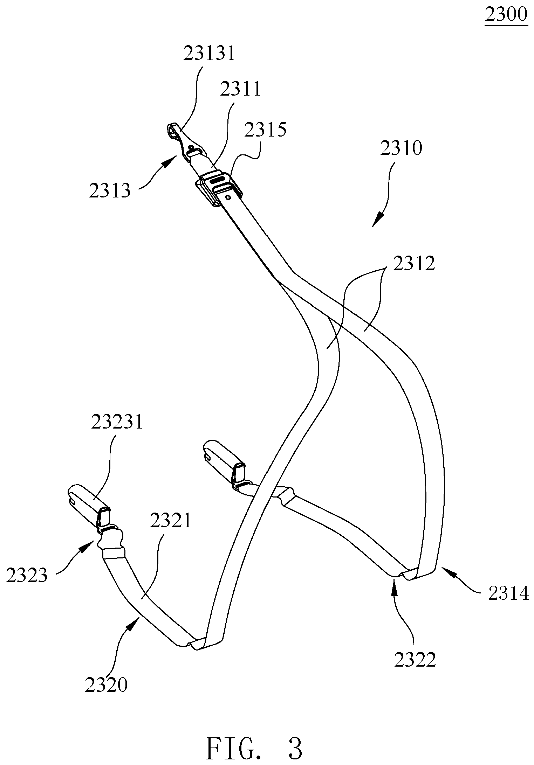

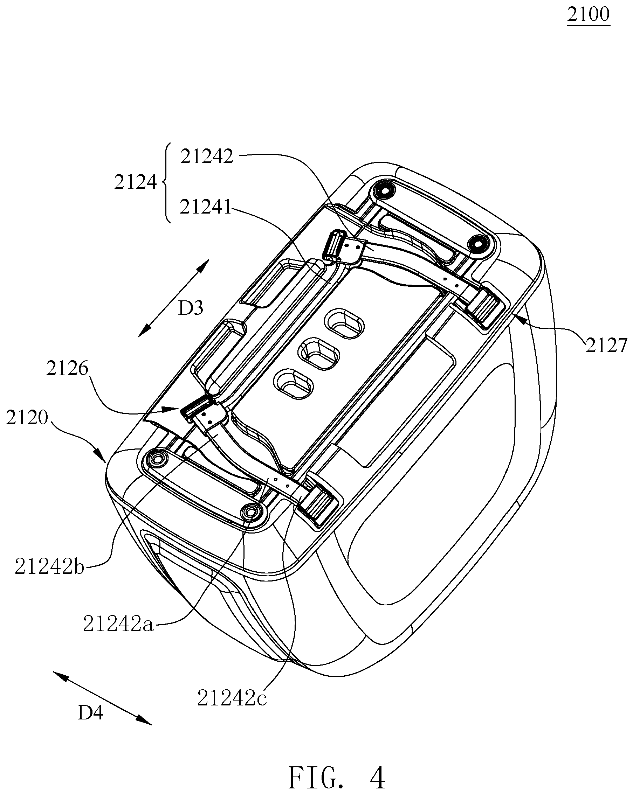

FIG. 2 shows another perspective view of the carrier 2100 and the fixing belt assembly 2300 shown in FIG. 1, with the bottom covering member 2140 of the carrier 2100 removed, to more clearly show the structure of the bottom support member 2120; FIG. 3 and FIG. 4 respectively show perspective views of the fixing belt assembly 2300 and the carrier 2100 shown in FIG. 2.

As shown in FIG. 2, the fixing belt assembly 2300 of this embodiment may be connected to the carrier 2100, for example, by a fixed connection. More specifically, the fixing belt assembly 2300 may be fixed to the carrier 2100 in a detachable or non-detachable manner, such that a part of the fixing belt assembly 2300 is always connected to the carrier 2100, that is, there is no need to repeatedly install or remove the fixing belt assembly 2300. For example, when the carrier 2100 and the fixing belt assembly 2300 are in a use state, the fixing belt assembly 2300 extends from a side of the carrier 2100 that is away from a backrest of the vehicle seat, passes under the bottom support member 2120, and has two ends connected to different positions of the vehicle seat to stably and securely fix the carrier 2100 to the vehicle seat.

As shown in FIG. 3, the fixing belt assembly 2300 may comprise a first belt assembly 2310 and two second belt assemblies 2320. The first belt assembly 2310 comprises a first belt 2311, a second belt 2312, a first connecting end 2313, and a second connecting end 2314. The first belt 2311 and the second belt 2312 may collectively be referred to as a "first belt body". One end of the first belt 2311 forms a first connecting end 2313 of the first belt assembly 2310, and a first connecting device 23131 is provided at the first connecting end 2313. In one example, the first connecting device 23131 may be a Top Tether connector, which is connected to the backrest of the vehicle seat or other relevant connecting points on the vehicle above the vehicle seat. The other end of the first belt 2311 may be connected to one end of the second belt 2312. The other end of the second belt 2312 forms a second connecting end 2314 of the first belt assembly 2310 and is connected to the second belt assembly 2320. In one example, a length adjuster 2315 may be provided between the first belt 2311 and the second belt 2312 to adjust an overall length of the first belt assembly 2310. The length adjuster 2315 may be configured to adjust a length of the first belt 2311, or the length of the second belt 2312, or lengths of both the first belt 2311 and the second belt 2312; the present disclosure is not limited thereto. In one example, the second belt 2312 may be composed of two belt bodies, the respective ends of the two belt bodies are connected to each other and the other ends of the two belt bodies are respectively connected to a second belt assembly 2320. In other examples, the second belt 2312 may be formed by one belt body that passes through the length adjuster 2315, with two ends respectively forming a second connecting end 2314.

Each second belt assembly 2320 comprises a third belt 2321 (also referred to as a "second belt body"), a third connecting end 2322, and a fourth connecting end 2323. The third belt 2321 is located between the third connecting end 2322 and the fourth connecting end 2323. The third connecting end 2322 of the second belt assembly 2320 is connected to the second connecting end 2314 of the first belt assembly 2310. The fourth connecting end 2323 of the second belt assembly 2320 is provided with a second connecting device 23231. In one example, the second connecting device 23231 may be a LATCH connector, which is cooperated with the corresponding connection structure on the vehicle seat to secure the carrier 2100 to the vehicle seat.

Referring to FIGS. 1, 2, and 3 in combination, at least a part of the first belt assembly 2310 (e.g., the second belt 2312) is routed from the side of the carrier 2100 away from the backrest of the vehicle seat 2600 to the bottom of the carrier 2100, and the first connecting device 23131 is connected to the top of the vehicle seat 2600. The second belt assembly 2320 is provided at the bottom of the carrier 2100. One end (i.e., the third connecting end 2322) of the second belt assembly 2320 is connected to one end (i.e., the second connecting end 2314) of the first belt assembly 2310, and the other end of the second belt assembly 2320 is provided with a second connecting device 23231. The second belt assembly 2320 is connected to the vehicle seat 2600 to secure the carrier 2100 to the vehicle seat 2600. Optionally, the first belt assembly 2310 and the second belt assembly 2320 may be fixedly connected to each other, that is, the second belt 2312 is fixedly connected to the third belt 2321. Further, the second belt 2312 of the first belt assembly 2310 and the third belt 2321 of the second belt assembly 2320 may be integrally formed, that is, the third connecting end 2322 and the second connecting end 2314 are the same end point.

As shown in FIG. 2, the storage space for storing the fixing belt assembly 2300 is located on the bottom support member 2120. Specifically, the storage space comprises a first storage groove 2121 and a second storage groove 2122 provided on the bottom support member 2120. The first storage groove 2121 is configured to store the second connecting device 23231 and optionally accommodate at least a part of the second belt assembly 2320. The second storage groove 2122 is configured to store the first connecting device 23131 and optionally accommodate at least a part of the first belt assembly 2310. In one example, the first storage groove 2121 and the second storage groove 2122 are respectively provided on opposite sides of the bottom support member 2120 along a transverse axis direction D4 (i.e., a width direction). For example, the first storage groove 2121 is provided on a side of the second connecting device 23231 (e.g., the LATCH connector) protruding from the carrier 2100, that is, on a side close to the backrest of the vehicle seat in this embodiment, to store the second connecting device 23231 and at least a part of the third belt 2321.

In this embodiment, two first storage grooves 2121 may be provided, each of which is used to store one second connecting device 23231. Optionally, the two first storage grooves 2121 may be symmetrically provided with respect to a center of a side of the bottom support member 2120. Further, the two first storage grooves 2121 may be provided in the middle of that side. In other examples, only one storage groove 2121 may be provided, for example, in the middle of the side of the bottom support member 2120, to store the two second connecting devices 23231.

The second storage groove 2322 may be provided on an opposite side of the first storage groove 2121, that is, on a side away from the backrest of the vehicle seat, to store at least a part of the first belt 2311 and the second belt 2312 of the first belt assembly 2310 and the first connecting device 23131. Optionally, the second storage groove 2122 may be centrally provided on the side of the bottom support member 2120 (i.e., in the middle of that side).

In one example, the first storage groove 2121 and the second storage groove 2122 may be depressed structures and are configured to be provided on the bottom of the bottom support member 2120, specifically at a position close to the edge of the bottom of the bottom support member 2120. As shown in FIG. 2, when at least a part of the second belt assembly 2320 and the first belt assembly 2310 are respectively stored in the first storage groove 2121 and the second storage groove 2122, the fixing belt assembly 2300 does not protrude from the bottom support member 2120 due to the arrangement of such depressed structures, and thus does not interfere with the contact between the bottom of the carrier 2100 and a supporting surface (e.g., the vehicle seat 2600, vehicle floor, or ground, etc.).

Referring to FIGS. 2 and 4, the bottom support member 2120 is also provided with a fixing belt limiting structure to limit the displacement of the fixing belt assembly 2300 (i.e., to position the fixing belt assembly 2300), so that the fixing belt assembly 2300 is at least partially fixedly connected to the carrier 2100 to prevent accidental detachment or scattering in the surrounding area. Moreover, it is also convenient and quick to secure the carrier 2100 when taking out the fixing belt assembly 2300.

As shown in FIG. 4, the fixing belt limiting structure comprises the first limiting structure 2126 and the second limiting structure 2127. The first limiting structure 2126 is configured to limit the second belt assembly 2320 to prevent the second belt assembly 2320 from accidentally disengaging from the bottom support member 2120. Optionally, the first limiting structure 2126 may be positioned close to the fourth connecting end 2323 of the second belt assembly 2320, that is, on the side of the bottom support member 2120 close to the backrest of the vehicle seat, namely on the side close to the second connecting device 23231 and protruding from the carrier 2100. This arrangement avoids the situation where a distance between the limiting structure and the fourth connecting end 2323 of the fixing belt assembly 2300 is relatively large, to cause a large swinging amplitude of the second connecting device 23231. Such a situation is not conducive to store and may cause unnecessary collisions or damage. Optionally, the first limiting structure 2126 may be positioned close to the first storage groove 2121, which facilitates the storage and removal of the second connecting device 23231. And, it is only necessary to store the third belt 2321 close to the second connecting device 23231, which helps to save the storage space and is convenient for operation.

The numbers of the first limiting structure 2126 may be proportional to the numbers of the third belt 2321 (or the fourth connecting end 2323). For example, in this embodiment, two first limiting structures 2126 may be provided, each corresponding to one of the second connecting devices 23231 and the third belt 2321 connected thereto, to limit them respectively. In one example, as shown in FIG. 2, the first limiting structure 2126 may be provided on both sides of the first storage groove 2121, that is, the first storage groove 2121 is positioned between the two first limiting structures 2126, to facilitate the storage of the second connecting device 23231 and prevent interference. However, the present disclosure is not limited thereto. In other embodiments, one first limiting structure 2126 may be provided to limit two third belts 2321 simultaneously, or a plurality of first limiting structures 2126 may be provided to limit one third belt 2321 at multiple points.

In this embodiment, the second limiting structure 2127 is configured to limit the first belt assembly 2310 to prevent the first belt assembly 2310 from swinging relative to the carrier 2100 and slipping off an outer side of the carrier 2100. Optionally, the second limiting structure 2127 may be positioned close to a connection point between the first belt assembly 2310 and the second belt assembly 2320, or close to the second connecting end 2314, that is, on the side of the bottom support member 2120 away from the backrest of the vehicle seat. Since the second connecting end 2314 of the first belt assembly 2310 is fixedly connected to the third connecting end 2322 of the second belt assembly 2320, the second limiting structure 2127 may further limit the first belt assembly 2310 to further ensure the stability and firmness of the fixing belt assembly 2300.

Optionally, as shown in FIG. 2, two second limiting structures 2127 may be provided. The two second limiting structures 2127 may be positioned on both sides of the second storage groove 2122 to facilitate the storage of the first belt assembly 2310 and the first connecting device 23131 and avoid interference and facilitate storage. The numbers of the second limiting structure 2127 may be proportional to the numbers of the third belt 2321 (or the fourth connecting end 2323) and/or the second belt 2312 (or the second connecting end 2314), but the present disclosure is not limited thereto. In other embodiments, one second limiting structure 2127 may be provided to limit both the third belt 2321 and the second belt 2314, or a plurality of second limiting structures 2127 may be provided to limit one third belt 2321 and one second belt 2314 at multiple points.

As can be seen from FIG. 2, when the fixing belt assembly 2300 of the carrier 2100 is in a use state, the two ends of the second belt assembly 2320 are limited and maintained in an unfolded state on the bottom side of the bottom support member 2120 by the first limiting structure 2126 and the second limiting structure 2127, and the two second connecting ends 2314 of the first belt assembly 2310 are limited by the second limiting structure 2127 to prevent the first belt assembly 2310 from shifting or disengaging. When the carrier 2100 is not in use or when it is not necessary to use the fixing belt assembly 2300 to fix the carrier 2100 to the vehicle seat, the second connecting device 23231 may be separated from the vehicle seat and stored in the first storage groove 2121, and the first connecting device 23131 located above may be detached from the vehicle seat or the relevant connection position of the vehicle to be stored together with the first belt 2311 and the second belt 2312 of the first belt assembly 2310 in the second storage cover 2122 to achieve storage.

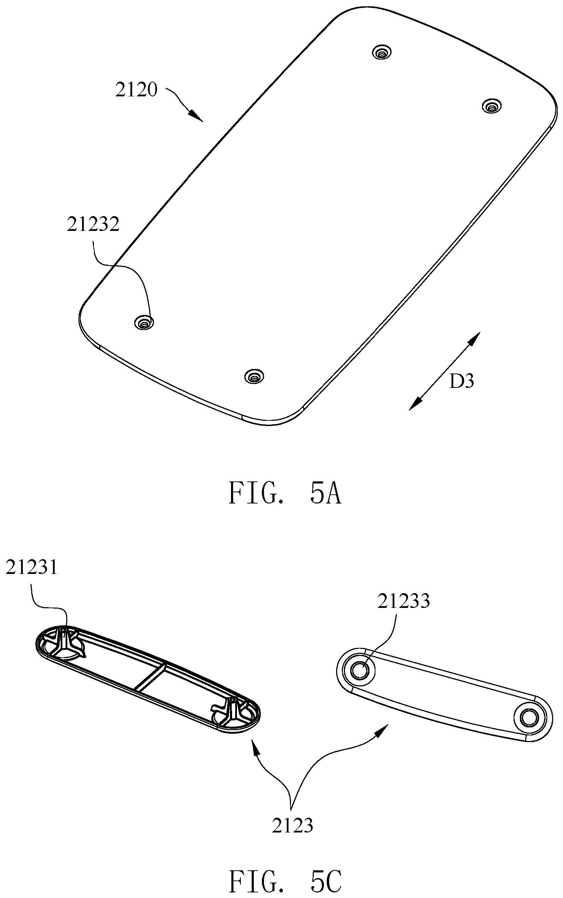

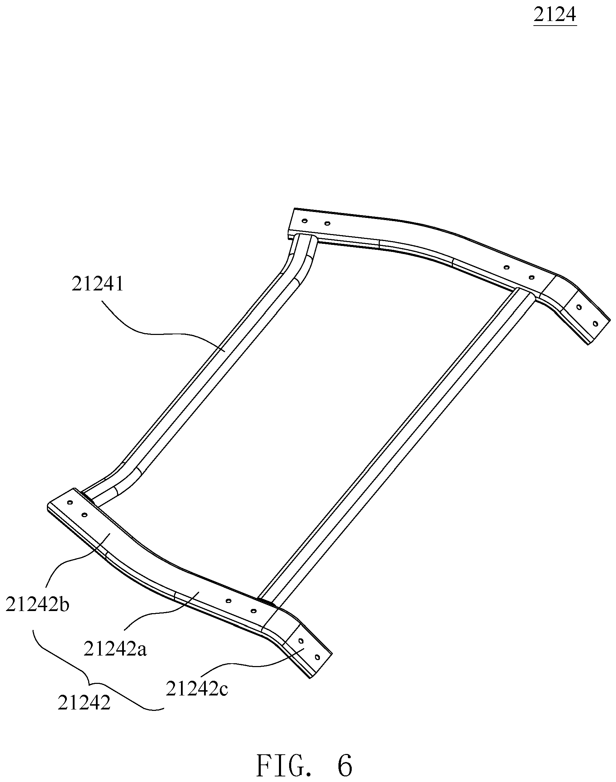

Further referring to FIG. 4 and FIGS. 5A to 5C, the bottom support member 2120 is also provided with a reinforcing bracket 2124 to enhance the structural stability of the bottom support member 2120 and the carrier 2100. The specific structure of the reinforcing bracket 2124 will be described in conjunction with FIG. 6 below. The reinforcing bracket 2124 may be positioned on the bottom side of the bottom support member 2120, for example, in a bracket storage groove 2125 that is depressed from the bottom side of the bottom support member 2120. Optionally, the bracket storage groove 2125 is positioned between the first storage groove 2121 and the second storage groove 2122 and has a shape adapted to the reinforcing bracket 2124 to prevent interference with other components of the carrier 2100 when the reinforcing bracket 2124 is positioned in the bottom support member 2120.

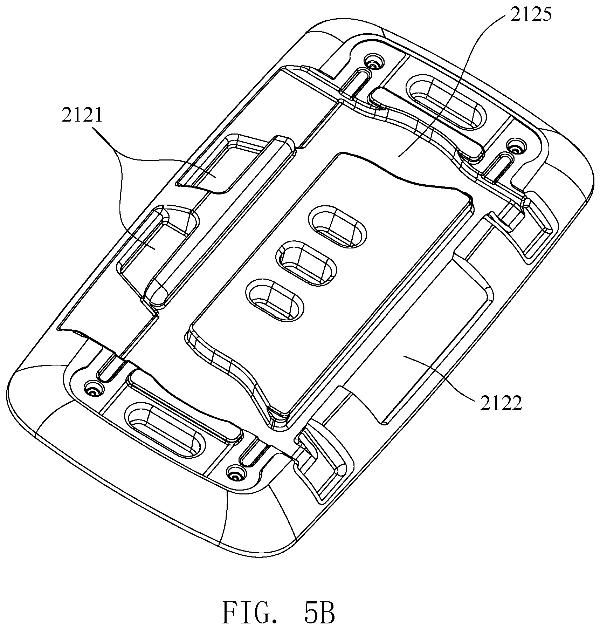

In addition, referring to FIGS. 5A and 5B, FIG. 5A is a top perspective view of the bottom support member 2120, and FIG. 5B is a bottom perspective view of the bottom support member 2120. The bottom side of the bottom support member 2120 may also be provided with two supporting feet 2123, which are positioned on both sides of the bottom support member 2120 along a longitudinal axis direction D3. In one example, each supporting foot 2123 may be in a form of an elongated plate-like member, with fixing posts 21231 at both ends, which are connected to fixing holes 21232 provided at corresponding positions of the bottom support member 2120, for example, by fastening members such as screws passing through the fixing holes 21232 and the fixing posts 21231 to fix them together, but the present disclosure is not limited thereto. The supporting foot 2123 may also be fixedly positioned on the bottom support member 2120 by means of adhesion or the like. In addition, an anti-slip pad 21233 may be provided on the supporting foot 2123 to increase friction force between the carrier 2100 and the vehicle seat. For example, the anti-slip pad 21233 may be positioned at the fastening member for connecting the fixing hole 21232 and the fixing post 21231 to prevent the fastening member from accidentally damaging the vehicle seat.

As shown in FIG. 4 and FIG. 6, the reinforcing bracket 2124 comprises a first reinforcing rod 21241 and a second reinforcing rod 21242. The first reinforcing rod 21241 extends along the longitudinal axis direction D3 of the bottom support member 2120. In one example, two first reinforcing rods 21241 are provided and positioned substantially parallel to each other. The second reinforcing rod 21242 is configured to be positioned at an angle to the first reinforcing rod 21241. In one example, the second reinforcing rod 21242 may be connected between the two first reinforcing rods 21241 and spaced apart therefrom, and positioned at an angle to the two first reinforcing rods 21241. The second reinforcing rod 21242 may extend along the transverse axis direction D4 of the bottom support member 2120.

In another example, two first reinforcing rods 21241 and two second reinforcing rods 21242 are provided. The two first reinforcing rods 21241 are positioned substantially parallel to each other, and the two second reinforcing rods 21242 are positioned between the two first reinforcing rods 21241 to form a ring-like structure with the two first reinforcing rods 21241, thereby increasing structural stability and enhancing overall structural strength. With such a structure, the first reinforcing rod 21241 and the second reinforcing rod 21242 can increase the fixing stability of each other, keeping them (or the entire reinforcing bracket 2124) within the storage space of the bottom support member 2120 and preventing them from sliding due to the sliding of the fixing belt assembly 2300.

In this embodiment, as shown in FIG. 4, one end of each of the two second reinforcing rods 21242 is connected to a respective end of the first reinforcing rods 21241, while the other end of each of the two second reinforcing rods 21242 extends from its connection with the other first reinforcing rod 21241 (i.e., from a position connected to the first reinforcing rod 21241 close to that end), that is to say, the other end of the second reinforcing rod 21242 is not connected to the first reinforcing rod 21241 at its tip, but instead leaves an extending section 21242c at the tip.

In one example, as shown in FIG. 4 and FIG. 6, the second reinforcing rod 21242 may have a non-linear structure, such as an arc-shaped curve, in which the extending section 21242c is curved to match the arc-shaped structure of the side of the bottom support member 2120 (near its edge), so that the second limiting structure 2127 positioned on the extending section 21242c is close to, or even in contact with, the side of the bottom support member 2120, thereby making the overall structure of the bottom support member 2120 and the limitation of the fixing belt assembly more stable.

In addition, the section of the second reinforcing rod 21242 close to the bottom surface of the bottom support member 2120 (such as the first section 21242a and the second section 21242b) has a non-linear structure, for example, as shown in FIG. 4, that is to say, the first section 21242a of the second reinforcing rod 21242 extends substantially linearly along the transverse axis direction D4, while the second section 21242b is slightly inclined relative to the transverse axis direction D4, for example, the second sections 21242b of the two second reinforcing rods 21242 are inclined towards each other. Optionally, at least one of a part of the first section 21242a and the second section 21242b of the second reinforcing rod 21242 may have an arc-shaped structure.

For a carrier with a large volume, as shown in FIG. 2, as a position of an ISOFIX interface is fixed, in order to make the area of the second belt routed around the carrier larger and thus make the carrier more stable, such a non-linear structure may be used to make the spacing between the two second limiting structures 2127 greater than the spacing between the two first limiting structures 2126, so that the carrier is more firmly fixed. At the same time, it may also make the first limiting structure 2126 closer to the ISOFIX interface, thereby distributing the force on the bottom support member 2120 and improving fixing stability. For a carrier with a small volume, the spacing between the two first limiting structures 2162 may also be equal to the spacing between the two second limiting structures 2127, but the present disclosure is not limited thereto.

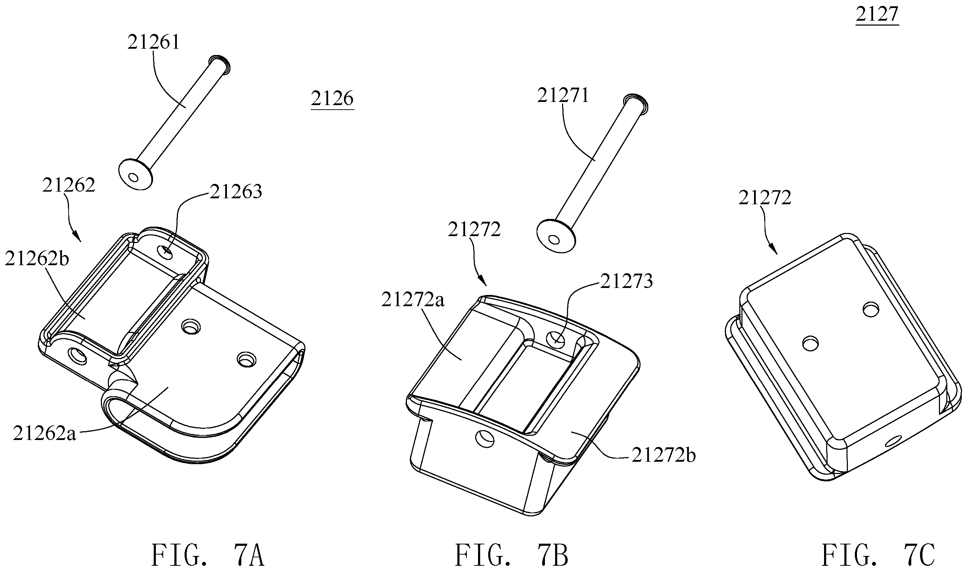

Further referring to FIGS. 2, 4, and 7A to 7C, the first limiting structure 2126 for limiting the first belt assembly 2310 may be positioned at a connection between one end of the second reinforcing rod 21242 and the first reinforcing rod 21241. The second limiting structure 2127 is positioned at a tip of the other end of the second reinforcing rod 21242 (i.e., the extending section 21242c), so as to be close to an edge of the bottom support member 2120, thereby better limiting the fixing belt assembly 2300.

In one example, as shown in FIGS. 2, 4, and 7A, the first limiting structure 2126 may comprise a first limiting rod 21261 and a first seat body 21262. The first seat body 21262 is fixedly positioned on the reinforcing bracket 2124, for example, on the first reinforcing rod 21241 and/or the second reinforcing rod 21242. The first limiting rod 21261 is positioned on the first seat body 21262 through a first fixing hole 21263 provided in the first seat body 21262 and is spaced apart from the bottom surface of the first seat body 21262, so that the fixing belt assembly 2300 (for example, the third belt 2321, see FIG. 2) passes through between the first seat body 21262 and the first limiting rod 21261 to fix the fixing belt assembly 2300 to the bottom of the carrier.

In one example, the first seat body 21262 comprises a first portion 21262a and a second portion 21262b that are connected to each other. The first portion 21262a is connected to the first reinforcing rod 21241 and/or the second reinforcing rod 21242, and optionally sleeved over the first reinforcing rod 21241 and/or the second reinforcing rod 21242. The second portion 21262b has an opening on one side extending away from the first portion 21262a, more specifically, extending towards the ISOFIX interface, so that the third belt may extend out to be connected with the ISOFIX interface. Optionally, the second portion 21262b may have a first groove, the first limiting rod 21261 is positioned in the first groove, and an opening is provided on the side of the first groove close to the ISOFIX interface, but the present disclosure is not limited thereto. The other side of the second portion 21262b is connected to the first portion 21262a. Specifically, the first fixing hole 21263 is provided in the second portion 21262b, for example, in a side wall of the second portion 21262b, so that the first limiting rod 21261 is connected to the second portion 21262b of the first seat body 21262. In other examples, the first portion 21262a and the second portion 21262b may be an integral structure.

In one example, as shown in FIGS. 2, 4, 7B, and 7C, the second seat body 21272 is fixedly positioned on the reinforcing bracket 2124, for example, at the other end of the second reinforcing rod 21242 (i.e., the end not provided with the second seat body 21272), specifically at the tip of that other end, that is, the extending section 21242c. Optionally, the second seat body 21272 is positioned close to a side edge of the bottom support member 2120. The second limiting rod 21271 is positioned on the second seat body 21272 through a second mounting hole 21273 provided in the second seat body 21272 and is spaced apart from the bottom surface of the second seat body 21272, so that the fixing belt assembly 2300 (for example, the third belt 2321 and/or the second belt 2312, see FIG. 2) passes through between the second seat body 21272 and the second limiting rod 21271 to fix the fixing belt assembly 2300 to the bottom of the carrier.

In one example, the second seat body 21272 may have a box-like structure. The second limiting rod 21271 is positioned in the box-like structure (i.e., an accommodating space) of the second seat body 21272, so that the fixing belt assembly (the second belt and/or the third belt) passes through between the second limiting rod 21271 and the inner surface of the second seat body 21272. One side of the upper end of the second seat body 21272 may have a beveled surface 21272a extending outward from the accommodating space of the box-like structure, so that the second belt and/or the third belt may extend out of the accommodating space and be routed around the outside of the carrier. Optionally, the other side of the upper end of the second seat body 21272 is provided with an edge portion 21272b extending outward for a certain distance, so as to be more firmly fixed to the bottom support member 2120. The present disclosure is not limited to the above structure. In other examples, the second seat body 21272 may also be designed as a protrusion structure, etc.

In addition, in other embodiments, the first limiting structure 2126 and the second limiting structure 2127 may also be directly positioned on the bottom support member 2120, that is, the bottom support member 2120 may not be provided with the reinforcing bracket 2124 and the bracket storage groove 2125. In this case, the bottom of the bottom support member 2120 may be provided with a plurality of recesses and ribs, or a honeycomb structure, etc., to increase the strength of the fixing belt limiting structure or the bottom support member 2120, optimize the stress distribution on the bottom of the bottom support member 2120, and also contribute to the lightweight design of the bottom support member 2120, etc.

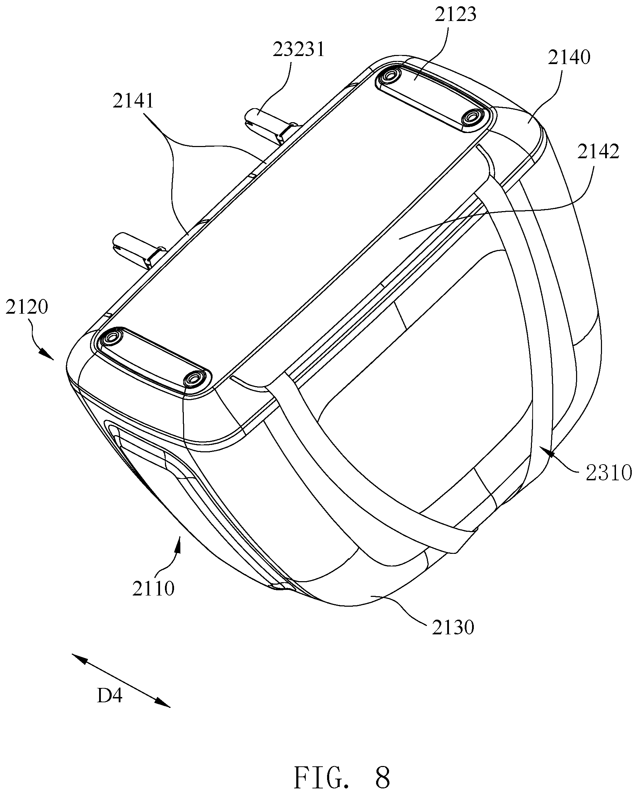

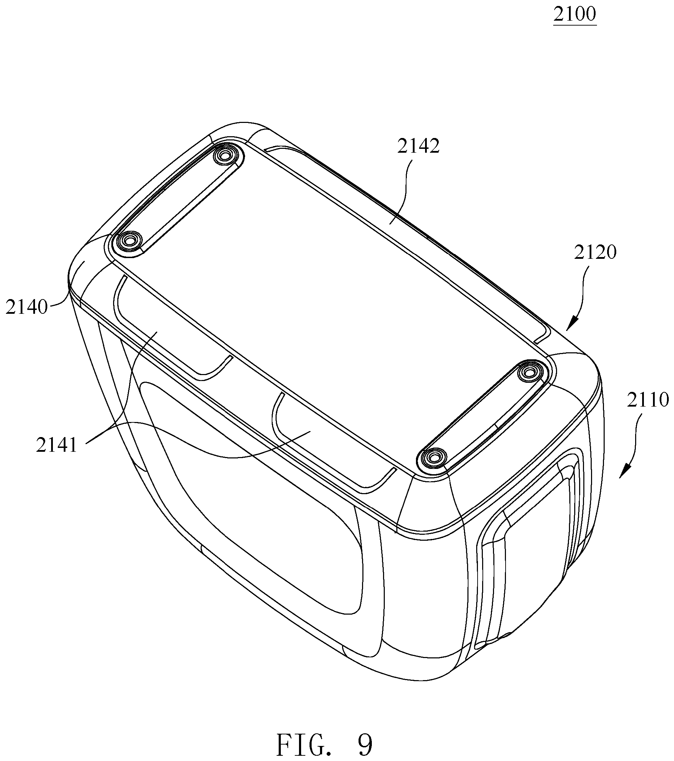

FIG. 8 and FIG. 9 respectively show perspective views of the carrier 2100 shown in FIG. 1 in different states, that is, FIG. 8 shows a perspective view of the fixing belt assembly in a use state, while FIG. 9 shows a perspective view of the fixing belt assembly in a storage state (i.e., being stored).

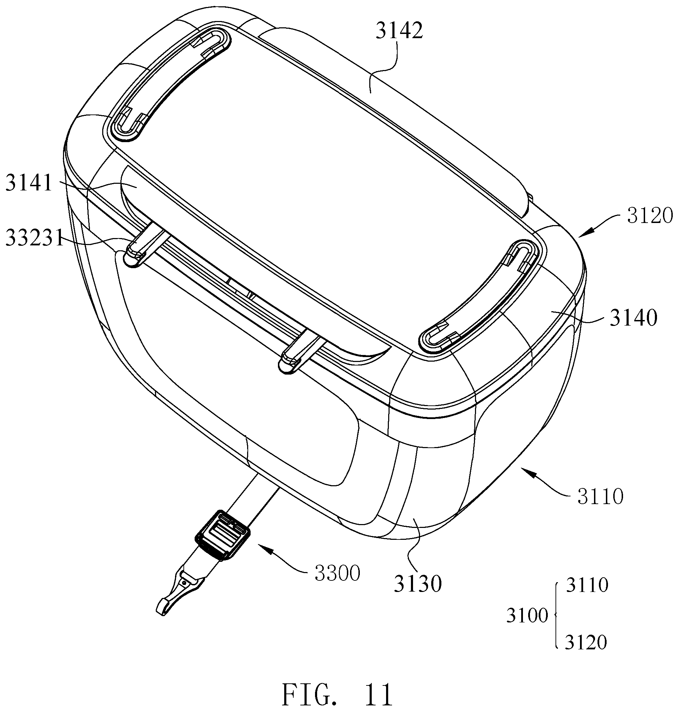

In this embodiment, the bottom covering member 2140 may be provided with a storage cover that may be opened and closed, which is provided corresponding to a storage space for storing the fixing belt assembly (i.e., a first storage groove 2121 and a second storage groove 2122 shown in FIG. 2). Referring to FIGS. 8 and 9, the storage cover may comprise a first storage cover 2141 and a second storage cover 2142. The first storage cover 2141 is configured to shield the storage space for storing, for example, a LATCH assembly (such as the second connecting device 23231 shown in the figure), that is, it is configured to shield the first storage groove 2121. Specifically, the first storage groove 2121 may be correspondingly positioned with the first storage cover 2141 to facilitate the removal or retraction of the second connecting device 23231. Specifically, the second storage groove 2122 may be correspondingly positioned with the second storage cover 2142 to facilitate the removal or retraction of the first belt assembly 2310. In one example, the first storage cover 2141 may be positioned on one side of the carrier 2100 along the transverse axis direction D4, for example, on the side close to the backrest of the vehicle seat 2600. Optionally, as shown in FIG. 9, two first storage covers 2141 may be provided, each corresponding to one first storage groove 2121. Alternatively, one first storage cover may be provided to cover the two first storage grooves 2121 (see the structure shown in FIG. 11). The second storage cover 2142 is configured to shield the storage space for storing, for example, a Top Tether assembly (see FIG. 8, which shows a part of the first belt assembly 2310), that is, it is configured to shield the second storage groove 2122. In one example, the second storage cover 2142 may be positioned on the other side of the carrier 2100 along the transverse axis direction D4, for example, on the side away from the backrest of the vehicle seat 2600. Both the first storage cover 2141 and the second storage cover 2142 may be at least partially detachably or separably connected to the other parts of the bottom covering member 2140, for example, by means of a zipper structure, a hook and ring-shaped fastener, a snap button, a magnetic button, an elastic ring, etc.

In one example, the bottom covering member 2140, the first storage cover 2141, and the second storage cover 2142 may each comprise at least one of fabric, plastic, and PE. For example, the bottom covering member 2140 and the first storage cover 2141 and the second storage cover 2142 provided thereon may be an integral structure, and are generally made of fabric. A PE plate is fixedly positioned (such as sewn) inside the fabric to form a relatively rigid structure in a part thereof, to avoid the fabric being too soft and thus prone to be collapsed. More specifically, the first storage cover 2141 and/or the second storage cover 2142 may be provided with a PE plate to form a cover with a rigid structure, thereby facilitating opening and closing.

Optionally, the first storage cover 2141 and/or the second storage cover 2142 may have an opening that may be opened or closed, through which a part of the first belt assembly and/or the second belt assembly may extend to fix the carrier to the vehicle seat. In one example, the first storage cover 2141 and/or the second storage cover 2142 may be an integral structure with the bottom support member 2140, and the opening may be detachably connected to the bottom covering member 2140 by means of a zipper structure, a hook and ring-shaped fastener, a snap button, a magnetic button, and an elastic ring, etc., to store the fixing belt assembly 2300 within the first storage groove and/or the second storage groove, and when the opening is closed, it can achieve an aesthetic appearance.

The storing method of the fixing belt assembly 2300 will be described below in conjunction with the aforementioned FIG. 2 and FIGS. 8 and 9. Referring to FIGS. 2 and 8, when it is necessary to connect the carrier to the vehicle seat, the second belt assembly 2320 of the fixing belt assembly 2300 is taken out of the first storage groove 2121, and the first belt assembly 2310 is taken out of the second storage groove 2122. At this time, the second connecting device 23231 extends from the first storage groove 2121 to be connected with, for example, the ISOFIX interface on the vehicle seat, while the first belt assembly 2310 is routed from the outside of the carrier to the top of the carrier, and the first connecting device is connected to the top of the vehicle seat.

When the carrier 2100 is not in use or it is not necessary to fix the carrier 2100 to the vehicle seat with the fixing belt assembly 2300, the second connecting device 23231 (see FIG. 2) may be separated from the vehicle seat and stored in the first storage groove 2121. The first connecting device 23131 located above may be removed from the vehicle seat or the relevant connection position of the vehicle, and stored together with the first belt 2311 and the second belt 2312 of the first belt assembly 2310 in the second storage cover 2122, and then the first storage cover 2141 and the second storage cover 2142 are closed respectively. A state after storage is shown in FIG. 9.

It should be noted that in this embodiment, the fixing belt assembly may be fixed to the bottom support member 2120 by the fixing belt limiting structure, but the present disclosure is not limited thereto. In other embodiments, the fixing belt assembly may also be detachably connected to the fixing belt limiting structure or other limiting structures provided on the bottom support member 2120.

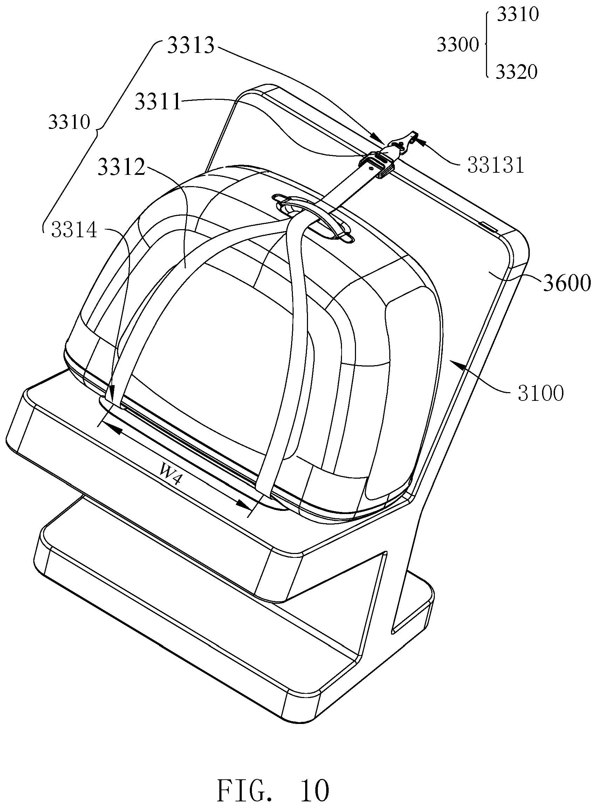

Referring to FIGS. 10 and 11, a second embodiment of the present disclosure provides a carrier 3100 and a fixing belt assembly 3300 for fixing the carrier 3100 to the vehicle seat 3600. Specifically, FIG. 10 shows a perspective view of the carrier 3100 fixed to the vehicle seat 3600 (i.e., the carrier 3100 and the fixing belt assembly 3300 are in the use state), and FIG. 11 shows the carrier 3100 and the fixing belt assembly 3300 in the use state as viewed from the bottom of the carrier 3100.

As shown in FIGS. 10 and 11, similar to the aforementioned first embodiment, the fixing belt assembly of this embodiment is configured to be at least partially connected to the carrier 3100. The carrier 3100 may comprise a box body 3110 and a bottom support member 3120. The bottom support member 3120 is detachably connected to the box 3110 to form a box with the box body 3110, providing a space for accommodating pets or children. An exterior of the box body 3110 may be covered with a body covering member 3130, and an exterior of the bottom support member 3120 may be covered with a bottom covering member 3140. The body covering member 3130 and the bottom covering member 3140 may each comprise at least one of fabric, plastic, and PE, but the present disclosure is not limited thereto. In addition, the body covering member 3130 and the bottom covering member 3140 may use the same material or material combination, or may use different materials or material combinations. In one example, the body covering member 3130 and the bottom covering member 3140 are detachably connected to each other, for example, by means of a zipper structure, a hook and ring-shaped fastener, and a snap fastener, etc., but the present disclosure is not limited thereto.

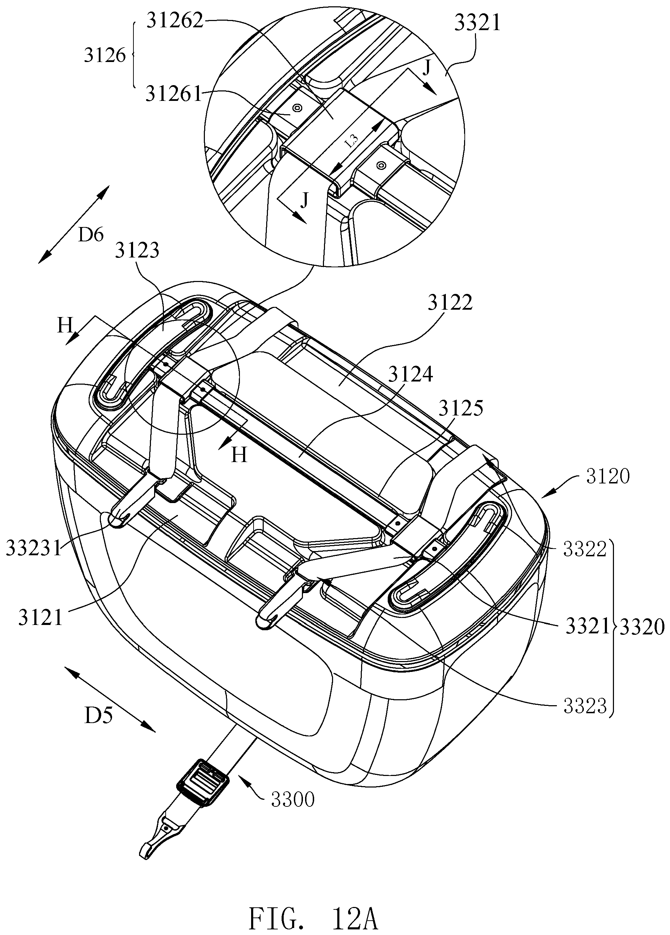

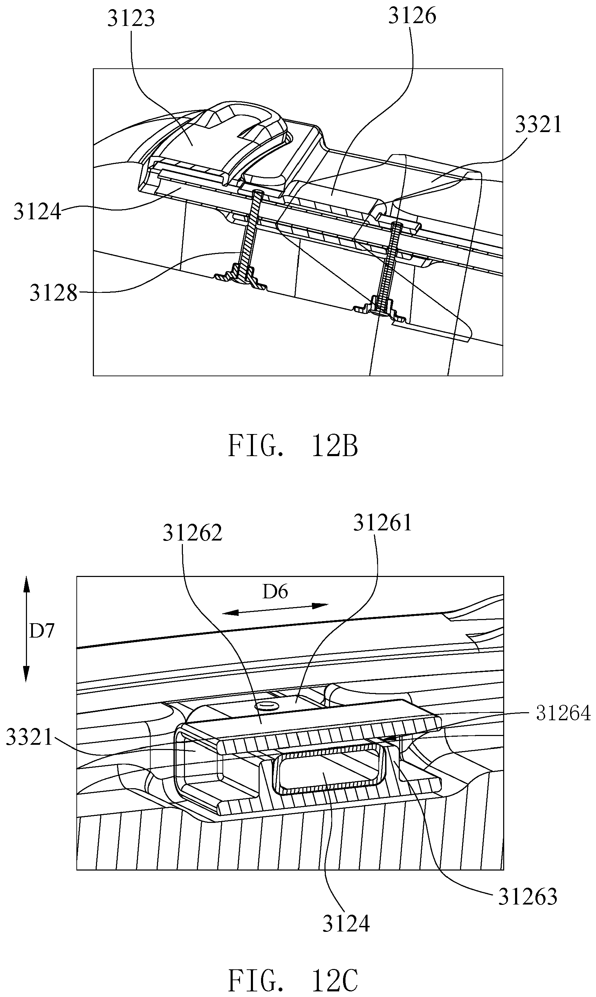

Further, FIG. 12A shows another perspective view of the carrier 3100 and the fixing belt assembly 3300 connected to the carrier 3100 shown in FIG. 11, in which the bottom covering member 3140 covering the carrier 3100 is removed. FIG. 12B shows a partial sectional view taken along line H-H in FIG. 12A, and FIG. 12C shows a partial sectional view taken along line J-J in FIG. 12A to show a structure and a connection mode of the fixing belt limiting structure 3126, which will be described later.

Similar to the aforementioned first embodiment, the fixing belt assembly 3300 of the second embodiment of this aspect may be connected to the carrier 3100, and optionally, a part of the fixing belt assembly 3300 may be fixedly connected to the carrier 3100 in a detachable or non-detachable manner, such that a part of the fixing belt assembly 3300 is always kept in connection with the carrier 3100 regardless of whether the fixing belt assembly 3300 is in use. Thus, it is not necessary to repeatedly install or detach the fixing belt assembly 3300, and it is also convenient to deploy the fixing belt assembly 3300 to quickly secure the carrier 3100.

Specifically, as shown in FIGS. 10 and 12A, the fixing belt assembly 3300 of this embodiment has a structure similar to that of the fixing belt assembly 2300 in the aforementioned first embodiment, that is, the fixing belt assembly 3300 may comprise a first belt assembly 3310 and a second belt assembly 3320. The first belt assembly 3310 comprises a belt body composed of a first belt 3311 and a second belt 3312, as well as a first connecting end 3313 and a second connecting end 3314. One end of the first belt 3311 forms a first connecting end 3313 of the first belt assembly 3310 and is provided with a first connecting device 33131, such as a Top Tether connection member, for connecting to a top anchoring point on the vehicle seat or a corresponding anchoring point above the vehicle seat. The other end of the first belt 3311 may be connected to one end of the second belt 3312, and the other end of the second belt 3312 forms a second connecting end 3314 of the first belt assembly 3310 and is connected to the second belt assembly 3320 at the second connecting end 3314.

Furthermore, the fixing belt assembly 3300 of this embodiment may comprise two second belt assemblies 3320. Each second belt assembly 3320 may comprise a third connecting end 3322, a fourth connecting end 3323, and a third belt 3321 (i.e., the second belt body) between the third connecting end 3322 and the fourth connecting end 3323. The third connecting end 3322 of the second belt assembly 3320 is connected to the second connecting end 3314 of the first belt assembly 3310, and the fourth connecting end 3323 is provided with a second connecting device 33231, such as a LATCH connection member, for engaging with a corresponding connection structure provided on the vehicle seat 3600. Optionally, the first belt assembly 3310 and the second belt assembly 3320 are fixedly connected to each other, that is, the third connecting end 3322 is fixedly connected to the second connecting end 3314. Alternatively, the second belt 3312 of the first belt assembly 3310 and the third belt 3321 of the second belt assembly 3320 are an integral structure, that is, the third connecting end 3322 and the second connecting end 3314 are the same end point.

In addition, a specific structure and components of the first belt assembly 3310 in this embodiment may be similar to those of the first belt assembly 2310 in the aforementioned first embodiment, for example, having a length adjuster and a specific structure similar to that of the second belt 2312, etc. For specific details, reference may be made to FIG. 3 and its related content, which will not be repeated here. Similarly, the second belt assembly 3320 in this embodiment may also have a structure similar to that of the second belt assembly 2320 in the aforementioned first embodiment. For specific details, reference may be made to FIG. 3 and its related content, which will not be repeated here.

Referring to FIGS. 10 to 12A, when the carrier 3100 and the fixing belt assembly 3300 are in the use state, the fixing belt assembly 3300 extends from the side of the carrier 3100 away from the backrest of the vehicle seat 3600, through the bottom side of the bottom support member 3120, and the two ends of the fixing belt assembly 3300 are connected to different positions on the vehicle seat 3600, so as to fix the carrier 3100 to the vehicle seat 3600 stably and firmly.

More specifically, as shown in FIG. 10, the first connecting end 3313 of the first belt assembly 3310 may be connected to a top of the vehicle seat 3600 or a corresponding anchoring point above the vehicle seat 3600 via the first connecting device 33131, and at least a part of the first belt assembly 3310 (for example, the second belt 3312 and optionally a part of the first belt 3311) is routed to or close to the bottom of the carrier 3100 from the side away from the backrest of the vehicle seat 3600. Further referring to FIGS. 10 and 12A, the second connecting end 3314 of the first belt assembly 3310 is connected to the third connecting end 3322 of the second belt assembly 3320 at this point or is formed integrally with the third connecting end 3322 (i.e., the same end point), and the fourth connecting end 3323 of the second belt assembly 3320 is connected to the vehicle seat 3600 from the bottom side of the bottom support member 3120 via the second connecting device 33231.

In addition, the bottom support member 3120 may be provided with a storage space for storing the fixing belt assembly 3300. As shown in FIG. 12A, the storage space comprises a first storage groove 3121 and a second storage groove 3122. The first storage groove 3121 is configured to store the second connecting device 33231 and optionally at least a part of the second belt assembly 3320. The second storage groove 3122 is configured to store the first connecting device 33131 and optionally at least a part of the first belt assembly 3310. In one example, two first storage grooves 3121 may be provided, each for storing a second connecting device 33231. In another example, only one storage groove may be provided to store the two second connecting devices 33231.

It should be noted that specific structures and positions of the first storage groove 3121 and the second storage groove 3122 may be similar to those of the aforementioned first embodiment, for example, having a depressed structure and being positioned on opposite sides of the bottom support member 3120, etc. For specific details, reference may be made to the first storage groove 2121 and the second storage groove 2122 shown in FIG. 2 and their related descriptions, which will not be repeated here.

Furthermore, as shown in FIGS. 11 and 12A, the carrier 3100 may also be provided with a storage cover (a first storage cover 3141 and/or a second storage cover 3142) that is capable of being opened and closed to shield and enclose the storage space. The storage cover may be provided corresponding to the storage space (a first storage groove 3121 and a second storage groove 3122). In one example, the storage cover may comprise a first storage cover 3141 for shielding the first storage groove 3121 and a second storage cover 3142 for shielding the second storage groove 3122. Specifically, the first storage cover 3141 may be provided corresponding to the first storage groove 3121 to avoid interference with the first storage cover 3141 when the second connecting device 33231 is taken out of or is put back into the first storage groove 3121. Similarly, the second storage cover 3142 may be provided corresponding to the second storage groove 3122 to avoid interference with the second storage cover 3142 when the first belt assembly 3310 is taken out of or put back into the second storage groove 3122. In this embodiment, one first storage cover 3141 may be provided to cover the two first storage grooves 3121, but the present disclosure is not limited thereto. Two first storage covers may also be provided, each corresponding to one of the first storage grooves 3121. Optionally, the first storage cover 3141 and/or the second storage cover 3142 may have an opening that is capable of being opened or closed. The opening may be opened towards the outside of the box 3100, so that when it is opened, a part of the first belt assembly 3310 and/or the second belt assembly 3320 (for example, the second connecting device 33231 at the fourth connecting end 3323) may protrude to fix the carrier to the vehicle seat. In one example, the opening may be detachably connected to the storage cover and/or the bottom covering member 3140 by means of a zipper structure, a hook and ring-shaped fastener, a snap button, a magnetic button, and an elastic ring, etc., to store the fixing belt assembly 3300 in the first storage groove and/or the second storage groove, and when the opening is closed, it can achieve an aesthetic appearance.

In one example, at least a part of the first storage cover 3141 and/or the second storage cover 3142 may be detachably or separably connected to the bottom covering member 3140, or may be a part of the bottom covering member 3140 and separably connected to the other parts of the bottom covering member 3140. The above detachable or separable connection may be achieved by means of a zipper structure, a hook and ring-shaped fastener, a snap button, a magnetic button, and an elastic ring, etc., but the present disclosure is not limited thereto. Certainly, it can be understood that the first storage cover 3141 and/or the second storage cover 3142 may have a structure, materials, and positioning similar to those in the aforementioned first embodiment, which will not be repeated here.

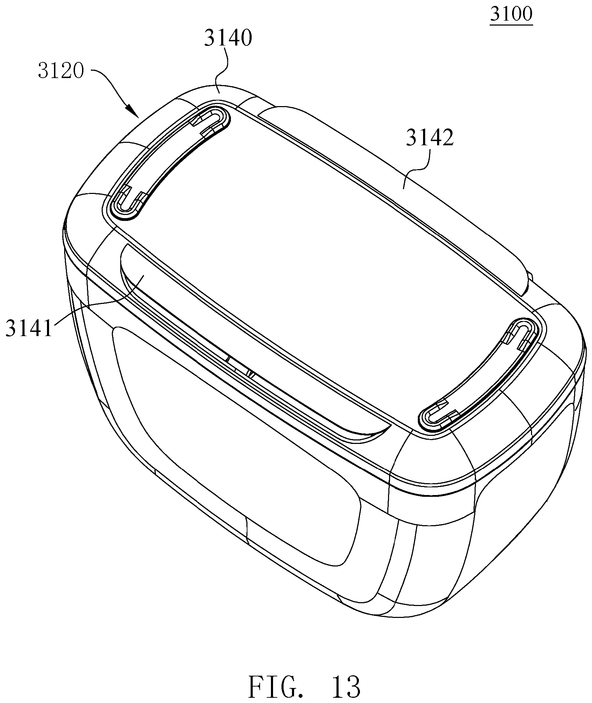

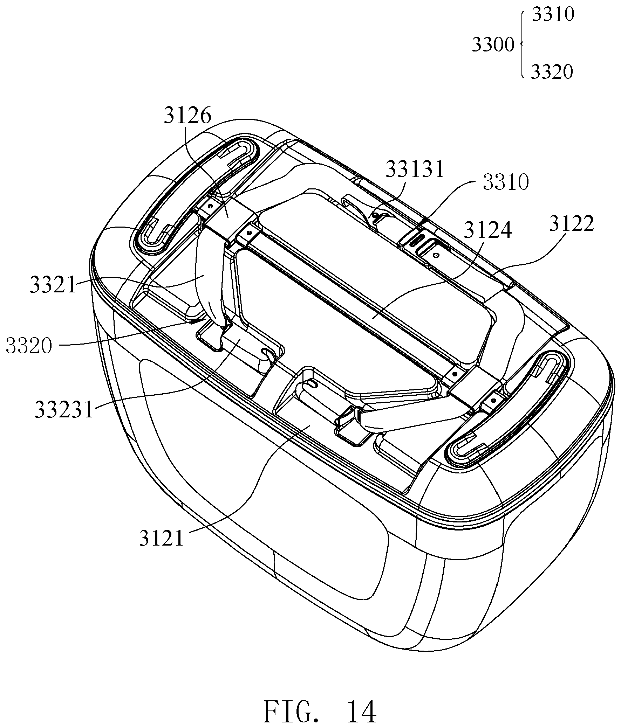

Referring to FIGS. 13 and 14, FIG. 13 shows a perspective view of the carrier 3100 in a storage state, that is, the fixing belt assembly 3300 is stored; and FIG. 14 is a perspective view of the carrier 3100 in FIG. 13 after the bottom covering member 3140 is removed to show the fixing belt assembly 3300 stored in the bottom support member 3120. The storage method of the fixing belt assembly 3300 of this embodiment will be described below in conjunction with FIGS. 11, 12A, 13, and 14.

Specifically, FIGS. 11 and 12A show the fixing belt assembly 3300 in the use state. When it is necessary to fix the carrier 3100 to the vehicle seat by means of the fixing belt assembly 3300, the first storage cover 3141 may be opened and the second connecting device 33231 may be taken out of the first storage groove 3121 to extend at least partially out of the box 3100. For example, the second connecting device 33231 may be positioned substantially perpendicular to the edge of the bottom support member 3120 close to the vehicle seat and extend beyond that edge of the bottom support member 3120 (i.e., protrude outward from that edge) to connect with, for example, the ISOFIX interface on the vehicle seat. In addition, the second storage cover 3142 may be opened and the first belt assembly 3310 may be taken out of the second storage groove 3122, so that the first belt assembly 3310 can be routed from the outside of the carrier (for example, the box body 3110) away from the backrest of the vehicle seat to the top of the carrier and connected to the top of the vehicle seat or a corresponding anchoring point above the vehicle seat via the first connecting device 33131 at the first connecting end 3313.

Referring to FIGS. 13 and 14, the carrier 3100 and the fixing belt assembly 3300 in a storage state are shown. When the carrier 3100 is not in use or it is not necessary to fix the carrier 3100 to the vehicle seat with the fixing belt assembly 3300, the second connecting device 33231 may be detached from the vehicle seat and stored in the first storage groove 3121, and the first connecting device 33131 located above may be detached from the vehicle seat or the relevant connection position of the vehicle, and stored together with the first belt assembly 3310 in the second storage groove 3122. Then, the first storage cover 3141 and the second storage cover 3142 are closed respectively to store the fixing belt assembly 3300. A state of the carrier 3100 after being stored is shown in FIG. 13.

In addition, as shown in FIG. 12A, a reinforcing bracket is also provided on the bottom support member 3120 to enhance the structural stability of the bottom support member 3120 and the carrier 3100. The reinforcing bracket is provided on the bottom side of the bottom support member 3120, for example, in the bracket storage groove 3125 that is depressed from the bottom side of the bottom support member 3120. Optionally, the bracket storage groove 3125 is provided between the first storage groove 3121 and the second storage groove 3122.

The difference from the first embodiment mentioned above is in that, as shown in FIG. 12A, the reinforcing bracket in this embodiment may be one reinforcing rod 3124, provided in the middle of the bottom support member 3120 along a transverse axis direction D6. Specifically, the reinforcing rod 3124 is fixedly provided in the middle of the bottom side of the bottom support member 3120 along the transverse axis direction D6 (i.e., substantially at a centerline of the bottom support member 3120 along the transverse axis direction D6) and extends along a longitudinal axis direction D5. However, the position of the reinforcing rod 3124 in this embodiment is not limited to the above. For example, it may also be provided at a location deviating from the centerline of the bottom support member 3120 along the transverse axis direction D6 by a certain distance without interfering with the first storage groove 3121 and the second storage groove 3122.

The reinforcing rod 3124 is provided in the middle of the bottom support member 3120, such that the structure of the bottom support member 3120 may be further simplified, the structural stability can be enhanced, and the weight can be reduced.

In one example, two supporting feet 3123 may be provided on the bottom support member 3120, at the two ends of the bottom support member 3120 along the longitudinal axis direction D5, for example, close to the edges of the bottom support member 3120. Optionally, the two supporting feet 3123 are symmetrically provided with respect to the centerline of the bottom support member 3120 along the longitudinal axis direction D5. Each supporting foot 3123 may be an elongated plate-like member, fixedly connected to the bottom support member 3120 by means of fasteners or adhesion, and extends substantially along the transverse axis direction D6 of the bottom support member 3120. Optionally, the supporting foot 3123 may have a curvature to match the shape of the edge of the bottom support member 3120.

In this example, the two ends of the reinforcing rod 3124 may extend to the two supporting feet 3123, for example, inserted under the supporting feet 3123, so that the two ends are respectively confined between each supporting foot 3123 and the bottom support member 3120, thereby limiting the reinforcing rod 3124.

Referring to FIGS. 12A to 12C, in this embodiment, a fixing belt limiting structure 3126 may also be provided on the bottom support member 3120 to limit the fixing belt assembly 3300. Thus, when the carrier 3100 is fixed by using the fixing belt assembly 3300, the fixing belt limiting structure 3126 may confine the fixing belt assembly 3300 within a certain range to prevent it from slipping off the side of the box of the carrier 3100. At the same time, when the fixing belt assembly 3300 is not in use, the fixing belt limiting structure 3126 may limit at least a part of the fixing belt assembly 3300 to the carrier 3100 (i.e., remain connection with the carrier 3100), so that it will not be scattered around the box and is convenient for taking out and quickly fixing the carrier 3100.

In one example, two fixing belt limiting structures 3126 are provided on the reinforcing rod 3124 to limit one of the third belts 3321 of the fixing belt assembly 3300 respectively. Specifically, the two fixing belt limiting structures 3126 may be fixedly provided at the two ends of the reinforcing rod 3124 or close to the two ends of the reinforcing rod 3124. For example, the fixing belt limiting structure 3126 may be provided close to the supporting foot 3123 and on the inner side of the supporting foot 3123. It should be noted that the term "inner side" here refers to a direction from the edge of the bottom support member 3120 towards a center thereof.

As shown in FIG. 12B, the fixing belt limiting structure 3126 may be fixed to the bottom support member 3120 by means of a fastener 3128. Specifically, in this embodiment, the fastener 3128 may pass through the bottom support member 3120, the reinforcing rod 3124, and the fixing belt limiting structure 3126 in sequence, to fix the reinforcing rod 3124 and the fixing belt limiting structure 3126 to the bottom support member 3120 simultaneously.

Referring to FIGS. 12A to 12C, a clearance gap 31264 is provided between the fixing belt limiting structure 3126 and the reinforcing rod 3126, through which the fixing belt assembly (for example, the third belt 3321) may pass.

In one example, the fixing belt limiting structure 3126 may have a first tubular structure 31261, which is sleeved and fixed on the reinforcing rod 3124, that is to say, the reinforcing rod 3124 is confined between the two side walls of the first tubular structure 31261. For example, the two ends of the first tubular structure 31261 may be connected to the reinforcing rod 3124 by means of the fastener 3128 and fixed to the bottom support member 3120 together. Specifically, the first tubular structure 31261 may be provided along the longitudinal axis direction D5. In this example, a slit extending through the side wall along the transverse axis direction D6 is provided on the side wall of the first tubular structure 31261, and the slits on the two side walls of the first tubular structure 31261 are interconnected to form a clearance gap 31264, through which the third belt 3321 of the fixing belt assembly may pass. The slit may be provided close to an upper wall of the first tubular structure 31261 so that the third belt 3321 passes through the slit on one side wall of the first tubular structure 31261, extends between the inner surface of the upper wall of the first tubular structure 31261 and the outer surface of the upper side of the reinforcing rod 3124, and then exits the clearance gap 31264 through the slit on the other side wall of the first tubular structure 31261. Thus, the fixing belt assembly is limited in the longitudinal axis direction D5 to prevent the accidental disengagement of the fixing strap assembly. It should be understood that the above-mentioned "upper wall" and "side wall" are a part of a peripheral wall of the first tubular structure 31261, that is to say, the peripheral wall of the first tubular structure 31261 comprises the upper wall, two side walls, and the lower wall.

Optionally, the fixing belt limiting structure 3126 may also have a second tubular structure 31262, which intersects with the first tubular structure 31261. For example, the second tubular structure 31262 may be provided along the transverse axis direction D6 (optionally substantially perpendicular to the first tubular structure 31261), and the first tubular structure 31261 and the second tubular structure 31262 are communicated with each other at least through the clearance gap 31264 to better limit the fixing belt assembly. Specifically, a length L3 of the second tubular structure 31262 in the transverse axis direction D6 (i.e., a length of the second tubular structure 31262) is greater than a width of the first tubular structure 31261. Specifically, the third belt 3321 may extend within the second tubular structure 31262 (for example, extend through the entire second tubular structure 31262) and pass through the clearance gap 31264 to increase the length of the third belt 3321 in the fixing belt limiting structure 3126, thereby increasing the limiting effect on the fixing belt assembly in the transverse axis direction D6. In this example, the second tubular structure 31262 is configured to intersect with the reinforcing rod 3124, and the clearance gap 31264 is formed between the second tubular structure 31262 and the reinforcing rod 3124, for example, between an inner surface of the upper wall of the second tubular structure 31262 and an outer surface of the upper side of the reinforcing rod 3124, but the present disclosure is not limited thereto. Optionally, the first tubular structure 31261 and the second tubular structure 31262 may be separate components assembled with each other. Optionally or alternatively, the first tubular structure 31261 and the second tubular structure 31262 may be integrally formed, in which case the slit forming the clearance gap 31264 is located on the side wall of the first tubular structure 31261 within the second tubular structure 31262. For example, the slit extends along a length direction of the side wall of the first tubular structure 31261 within the second tubular structure 31262, that is to say, the side wall of the first tubular structure 31261 within the second tubular structure 31262 forms a convex rib (for example, "31263" shown in FIG. 12C). In other words, the clearance gap 31264 (formed by the slit) is located between the first tubular structure 31261 and the second tubular structure 31262, that is, between the side wall (i.e., convex rib 31263) of the first tubular structure 31261 within the second tubular structure 31262 and the inner surface of the upper wall of the second tubular structure 31262. Optionally, a center line of the first tubular structure 31261 in a vertical direction and a center line of the second tubular structure 31262 in a vertical direction are at substantially the same horizontal height to minimize the overall height or thickness of the fixing belt limiting structure 3126, so as to avoid shaking of the carrier 3100 when placed on the vehicle seat due to the unevenness of the bottom of the bottom support member 3120.

Certainly, it can be understood that in other examples, only the second tubular structure 31262, through which the fixing belt assembly (for example, the third belt 3321) extends may be provided, and the second tubular structure 31262 may be fixed to the bottom support member 3120 by means of fasteners or adhesion. In this example, at least one convex rib 31263 extending along the longitudinal axis direction D5 may be provided in the second tubular structure 31262, and the at least one convex rib 31263 may protrude inwardly (i.e., extend along the vertical direction D7) from the upper wall and/or lower wall of the second tubular structure 31262 to form a slit, that is to say, a clearance gap 31264, through which the third belt 3321 may pass. Optionally, at least one convex rib 31263 may protrude from the lower wall towards the upper wall of the second tubular structure 31262. The reinforcing rod 3124 passes through the second tubular structure 31262 (i.e., through its two side walls), and the clearance gap 31264 is formed between the inner surface of the upper wall of the second tubular structure 31262 and the outer surface of the upper side of the reinforcing rod 3124.

In various examples, the reinforcing rod 3124 is provided between the two side walls of the first tubular structure 31261 and/or between the convex ribs 31263.

In one example, the fixing belt limiting structure 3126 may be made of plastic, resin, metal, etc., but the present disclosure is not limited thereto. In addition, the first tubular structure 31261 and the second tubular structure 31262 of the fixing belt limiting structure 3126 may be two separate structures fixedly connected to each other, or may be an integrally formed integral structure.

Optionally, as shown in FIGS. 12A and 14, a further fixing belt limiting structure may be provided on the bottom support member 3120 of this embodiment, for example, provided close to the first storage groove 3121 to limit the fourth connecting end 3323 of the second belt assembly 3320, thereby further limiting the fixing belt assembly, especially preventing the second connecting device 33231 from swinging randomly. The further fixing belt limiting structure may have a structure like the first limiting structure 2126 in the first embodiment, but may also have other structures, and the present disclosure is not limited thereto. Optionally or alternatively, the bottom covering member is connected to the bottom support member 3120 close to the first storage groove 3121 and/or the second storage groove 3122, for example, by means of an adhesive structure, a snap fastener structure, etc., and optionally, a slit through which the third belt 3321 passes is also provided at the connection structure to further limit the fixing belt assembly.

In addition, a depression, through which the fixing belt assembly extends may also be provided on the bottom support member 3120 to further prevent the left and right sliding movement of the fixing belt assembly and further reduce the overall weight of the bottom support member 3120.

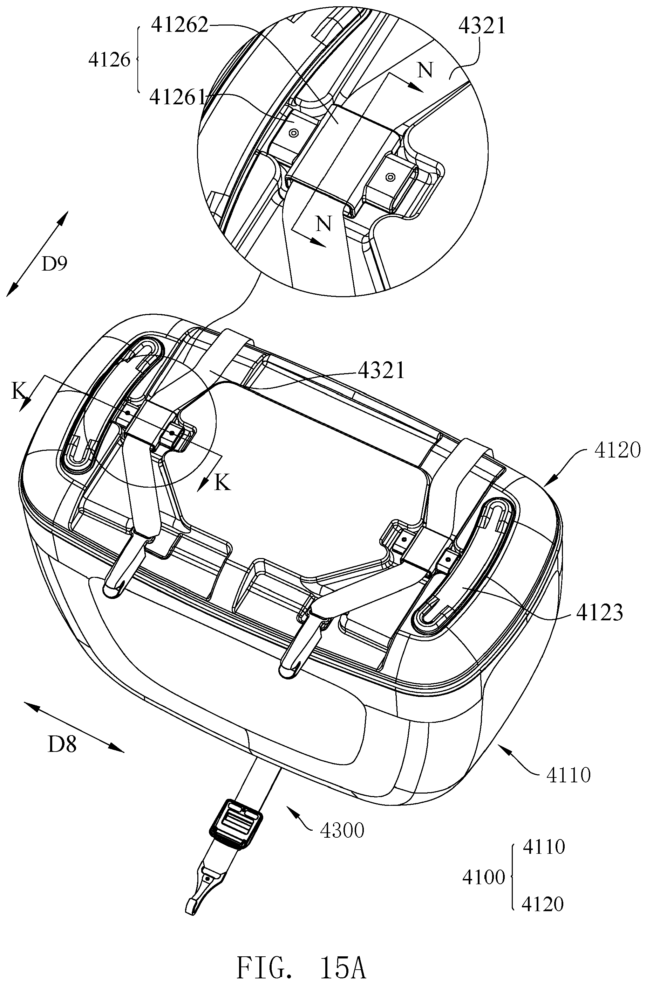

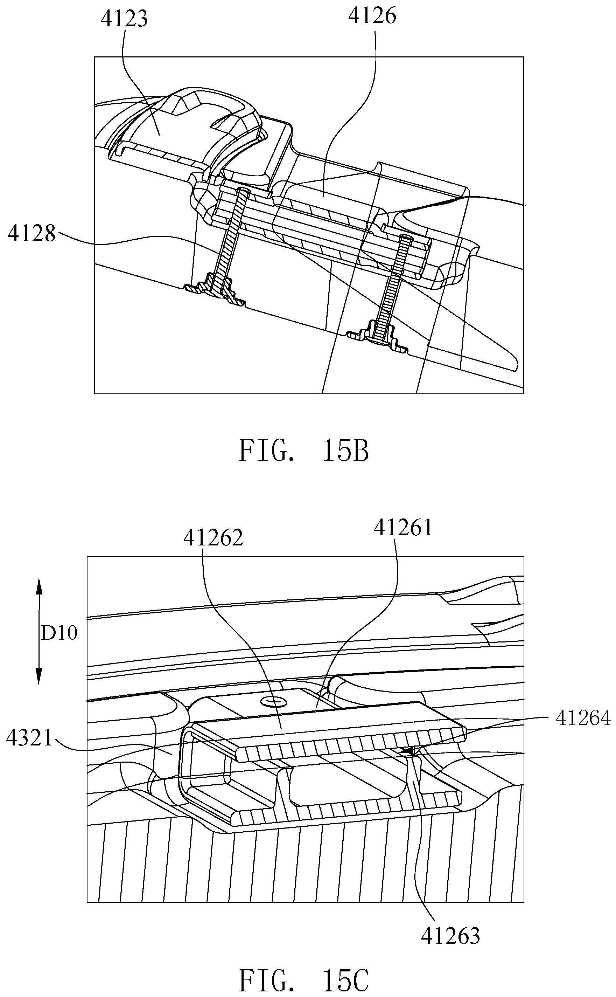

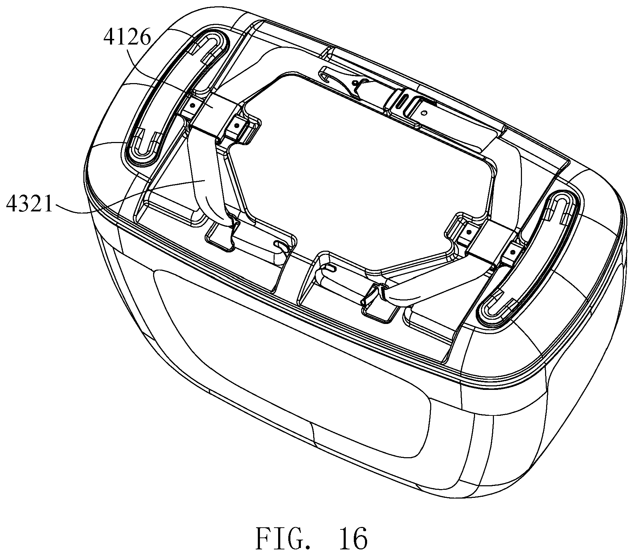

FIG. 15A shows a perspective view of the carrier 4100 and the fixing belt assembly 4300 according to the third embodiment of the present disclosure, in which the bottom covering member is removed to show a specific structure of the bottom support member 4120 and a specific connection mode with the fixing belt assembly 4300. FIG. 15B shows a partial sectional view taken along line K-K in FIG. 15A, and FIG. 15C shows a partial sectional view taken along line N-N in FIG. 15A. In addition, FIG. 15A shows the carrier 4100 and the fixing belt assembly 4300 in an use state, and FIG. 16 shows the carrier 4100 and the fixing belt assembly 4300 in a storage state.

As shown in FIG. 15A, the carrier 4100 and the fixing belt assembly 4300 in the third embodiment of the present disclosure have a structure similar to that of the second embodiment, the difference is in that no reinforcing bracket is provided in this embodiment, that is to say, no reinforcing rod 3124 as shown in FIG. 12A is provided.

Specifically, the bottom support member 4120 of this embodiment may also be provided with a fixing belt limiting structure 4126 for limiting the fixing belt assembly 4300. In one example, two fixing belt limiting structures 4126 may be provided, at or near the two ends of the bottom support member 4120 along a longitudinal axis direction D8. For example, two supporting feet 4123 are positioned on the bottom side of the bottom support member 4120 and symmetrically positioned at the two ends of the bottom support feet 4120 along the longitudinal axis direction D8, for example, close to the edges thereof. The two fixing belt limiting structures 4126 may be respectively provided at one of the supporting feet 4123, specifically on an inner side of the supporting foot 4123 to avoid interference between the supporting foot 4123 and the fixing belt assembly 4300. Optionally, the two fixing belt limiting structures 4126 are symmetrically provided with respect to the centerline of the bottom support member 4120 along the longitudinal axis direction D8, that is to say, provided on a line (a virtual line, not shown) extending along the longitudinal axis direction D8. In this embodiment, the two fixing belt limiting structures 4126 are provided at a centerline of the bottom support member 4120 along a transverse axis direction D9, but the present disclosure is not limited thereto and may also be provided to offset from the centerline. In another embodiment, only one fixing belt limiting structure 4126 may be provided and extend along the longitudinal axis direction D8 of the bottom support member 4120 to limit the two third belts 4321 simultaneously, but the present disclosure is not limited thereto.

Referring to FIGS. 15A to 15C, similar to the second embodiment mentioned above, the fixing belt limiting structure 4126 of this embodiment may have a first tubular structure 41261 and/or a second tubular structure 41262.

In one example, the fixing belt limiting structure 4126 may only have the first tubular structure 41261 with a length extending along the longitudinal axis direction D8. The fixing belt limiting structure 4126 may be fixedly provided on the bottom support member 4120, for example, the two ends of the first tubular structure 41261 along the length are respectively connected to the bottom support member 4120 by means of a fastener 4128. In this example, the first tubular structure 41261 has a slit that extends through the side wall along the transverse axis direction D9. The slits on the two side walls of the first tubular structure 41261 are interconnected to form a clearance gap 41264, through which the third belt 4321 of the fixing belt assembly may pass, thereby confining a part of the third belt 4321 within the clearance gap 41264 of the fixing belt limiting structure 4126 to prevent the accidental disengagement of the fixing belt assembly. Optionally, the slit may be provided close to the upper wall of the first tubular structure 41261.

In another example, the fixing belt limiting structure 4126 may only have the second tubular structure 41262 with a length extending along the transverse axis direction D9. The third belt 4321 of the fixing belt assembly 4300 may pass through the second tubular structure 41262 to limit the movement in the longitudinal axis direction D8. The second tubular structure 41262 may be fixedly connected to the bottom support member 4120 by means of fasteners or adhesion. Optionally, at least one convex rib 41263 extending along the longitudinal axis direction D8 may be provided in the second tubular structure 41262, and the at least one convex rib 41263 may protrude inwardly (i.e., extend along a vertical direction D10) from the upper wall and/or lower wall of the second tubular structure 41262 to form a slit (i.e., the clearance gap 41264), thereby further limiting the movement of the third belt 4321 in the vertical direction D10 to make it more stable. In a specific example, at least one convex rib 41263 may be a plurality of convex ribs 41263, and the plurality of convex ribs 41263 protrude downward from the upper wall of the second tubular structure 41262 or upward from the lower wall of the second tubular structure 41262. In another specific example, at least one convex rib 41263 may be alternately provided on the upper wall and lower wall of the second tubular structure 41262 and protrude downward and upward respectively. However, the present disclosure is not limited thereto, and the ribs may also be arranged in other ways.

In yet another example, the fixing belt limiting structure 4126 may have both the first tubular structure 41261 and the second tubular structure 41262, which are intersected with each other. The first tubular structure 41261 and the second tubular structure 41262 may respectively have the structures mentioned in the above examples, which will not be repeated here. The slit of the first tubular structure 41261 is communicated or coincided with the slit (or the clearance gap) of the second tubular structure 41262 to form the clearance gap 41264. In one example, the first tubular structure 41261 and the second tubular structure 41262 may be separate structures that are sleeved and interconnected with each other, but the present disclosure is not limited thereto. In another example, the first tubular structure 41261 and the second tubular structure 41262 may be an integrally formed integral structure. It should be noted that the side wall of the first tubular structure 41261 with the slit may also serve as the convex rib 41263 in the second tubular structure 41262.

In addition, the first tubular structure 41261 and/or the second tubular structure 41262 may be made of plastic, resin, metal, etc., but the present disclosure is not limited thereto.

Furthermore, the fixing belt limiting structure 4126 in this embodiment may also be fixed by means of the supporting feet 4123 at the two ends of the bottom support member 4120, or fasteners may pass through the supporting feet 4123 and the fixing belt limiting structure 4126 respectively to fix them to the bottom support member 4120, but the present disclosure is not limited to the above ways.

By means of such arrangement in this embodiment, that is to say, the fixing belt limiting structure is directly provided on the bottom support member 4120 without providing the reinforcing bracket, such as a reinforcing rod, such that the structure of the bottom support member 4120 can be further simplified, and its weight can be further reduced, and the carrier 4100 can be stably fixed to the vehicle seat.

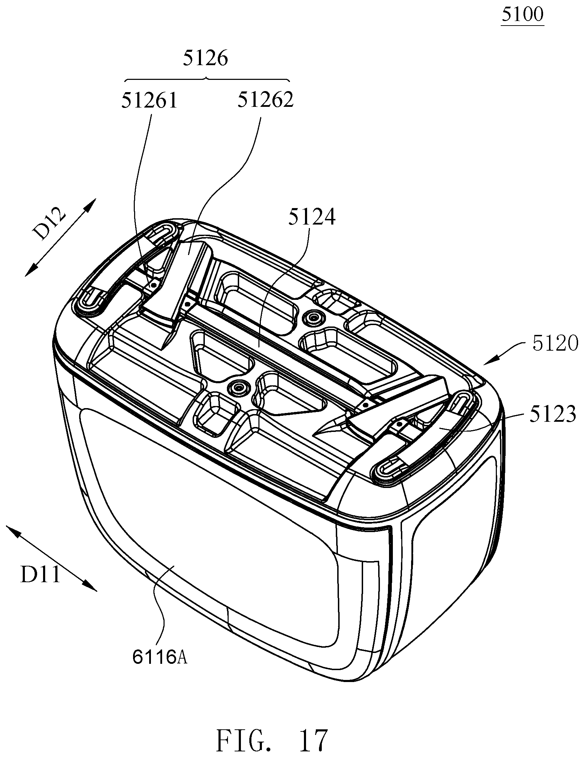

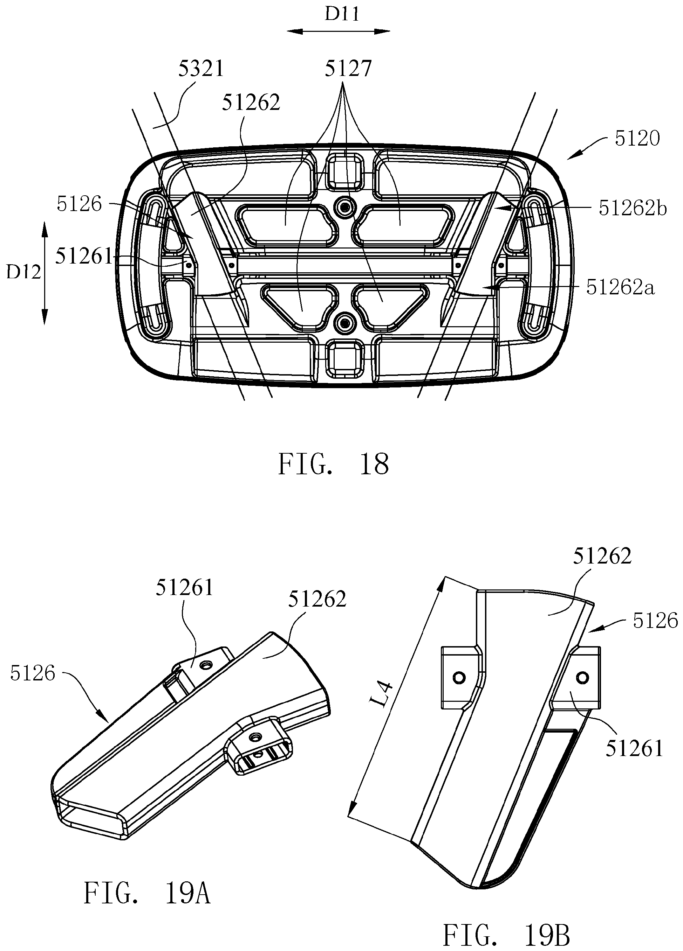

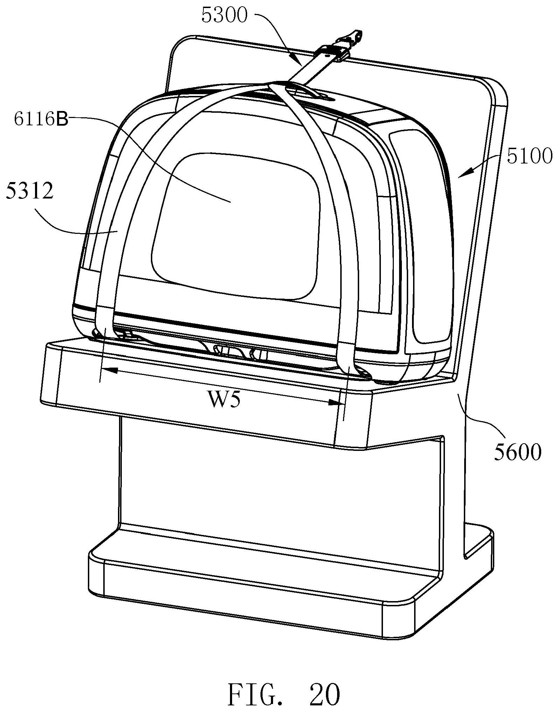

FIG. 17 shows a bottom perspective view of the carrier 5100 according to a fourth embodiment of the present disclosure, in which a bottom covering member is removed to show a bottom support member 5120 of the carrier 5100. FIG. 18 shows a bottom schematic view of the carrier 5100 shown in FIG. 17, specifically showing a structure of the bottom support member 5120. FIGS. 19A and 19B show a perspective view and a top view of the fixing belt limiting structure 5126, respectively. FIG. 20 shows a perspective view of the carrier 5100 shown in FIG. 17 being fixed to the vehicle seat 5600.

As shown in FIGS. 17, 18, and 20, the bottom support member 5120 of the carrier 5100 in this embodiment may be provided with a fixing belt limiting structure 5126 and/or a reinforcing rod 5124. The reinforcing rod 5124 may have a structure and arrangement similar to that of the second embodiment mentioned above, which will not be repeated here. The following description will mainly focus on the differences between this embodiment and the previous embodiments.

In this embodiment, the fixing belt limiting structure 5126 is configured to limit the fixing belt assembly 5300 (see FIG. 20) so that the fixing belt assembly 5300 may not slip off the box of the carrier 5100 when in use, and the fixing belt assembly 5300 is at least partially limited to the carrier 5100 when not in use, thereby preventing it from being scattered around the carrier 5100 and facilitating quick taking out and fixing the fixing belt assembly.

In one example, two fixing belt limiting structures 5126 may be provided on the bottom support member 5120, each limiting one of the third belts 5321 of the fixing belt assembly 5300. Specifically, the two fixing belt limiting structures 5126 may be provided on the reinforcing rod 5124, for example, fixedly provided at or near the two ends of the reinforcing rod 5124. Optionally, the fixing belt limiting structure 5126 may be provided close to the supporting foot 5123 and on the inner side of the supporting foot 5123. In another example, the carrier 5100 may not be provided with a reinforcing rod 5124, and the two fixing belt limiting structures 5126 may be provided at or near the two ends of the bottom support member 5120 along a longitudinal axis direction D11.

Optionally, the fixing belt limiting structure 5126 may have a first tubular structure 51261 and/or a second tubular structure 51262. In this embodiment, as shown in FIGS. 18 to 19B, the fixing belt limiting structure 5126 may have a first tubular structure 51261 and a second tubular structure 51262 that are intersected with each other. The first tubular structure 51261 may be positioned along the longitudinal axis direction D11. Specifically, the first tubular structure 51261 may extend along the longitudinal axis direction D11 to be sleeved and fixed at or near the two ends of the reinforcing rod 5124. The second tubular structure 51262 may be provided at an angle to the first tubular structure 51261, that is to say, the second tubular structure 51262 is also provided at an angle to the reinforcing rod 5124.

For example, as shown in FIG. 18, at least a part of the second tubular structure 51262 is inclined relative to both the longitudinal axis direction D11 and the transverse axis direction D12 of the carrier 5100 (i.e., at an angle), so that a distance between the first ends 51262a of the two second tubular structures 51262 at the two ends of the bottom support member 5120 is less than a distance between the second ends 51262b of the two second tubular structures 51262. It should be noted that when the carrier 5100 is placed on the vehicle seat, the first end 51262a of the second tubular structure 51262 is an end close to the backrest of the vehicle seat, and the second end 51262b is an end away from the backrest of the vehicle seat.

Further referring to FIGS. 18 and 20, by providing such a fixing belt limiting structure 5126, when the carrier 5100 is fixed to the vehicle seat 5600 by means of the fixing belt assembly 5300, a spacing between the two belt bodies, which are resting against the front side of the carrier 5100 (for example, the second belt body 5312 being connected to or integrally formed with the third belt body 5321) is increased. The increased spacing is shown in the figure with the reference mark "W5", that is to say, the spacing W5 shown in FIG. 20 is greater than the spacing W4 shown in FIG. 10. Therefore, when the vehicle suddenly stops due to a collision or other emergency, the pet can be prevented from being collided with the belt body which is hard due to tension, thereby enhancing the safety of the pet in the carrier 5100.

In one example, the first tubular structure 51261 and the second tubular structure 51262 may be communicated through at least one clearance gap (not shown, similar to the "31264" in the previous embodiments, which will not be repeated here), so that the fixing belt assembly (for example, the third belt 5321) may extend within the second tubular structure 51262 and pass through the clearance gap between the first tubular structure 51261 and the second tubular structure 51262. Optionally, the first tubular structure 51261 and the second tubular structure 51262 may be integrally formed, in which case the clearance gap is located on the side wall of the first tubular structure 51261 within the second tubular structure 51262. Alternatively, the first tubular structure 51261 and the second tubular structure 51262 may be separate components assembled with each other.

In another example, the first tubular structure 51261 and the second tubular structure 51262 are not communicated. For example, the first tubular structure 51261 is configured to be fixed to the bottom support member 5120 by means of fasteners and sleeved on the reinforcing rod 5124 to fix the reinforcing rod 5124 and the fixing belt limiting structure 5126 to the bottom support member 5120. The second tubular structure 51262 is configured to guide and limit the fixing belt assembly. The first tubular structure 51261 and the second tubular structure 51262 may be stacked on each other.

In other examples, the fixing belt limiting structure 5126 may only comprise the second tubular structure 51262, which is fixedly connected to the bottom support member 5120 to guide and limit the fixing belt assembly.

Optionally, compared to the second tubular structure 31262 in the previous embodiment (see FIG. 12A), as shown in FIGS. 18 and 19B, the second tubular structure 51262 in this embodiment has a longer length L4, that is, L4 > L3, further increasing the length of the third belt 5321 extending within the fixing belt limiting structure 5126, thereby further increasing the limiting effect on the fixing belt assembly.

In addition, as shown in FIG. 18, one or more material-reduction grooves 5127 may be provided on the bottom support member 5120 of this embodiment, and their positions are arranged to avoid other structures on the bottom support member 5120, which is beneficial for the molding of the bottom support member 5120 and can reduce the weight of the bottom support member 5120 and the carrier 5100.

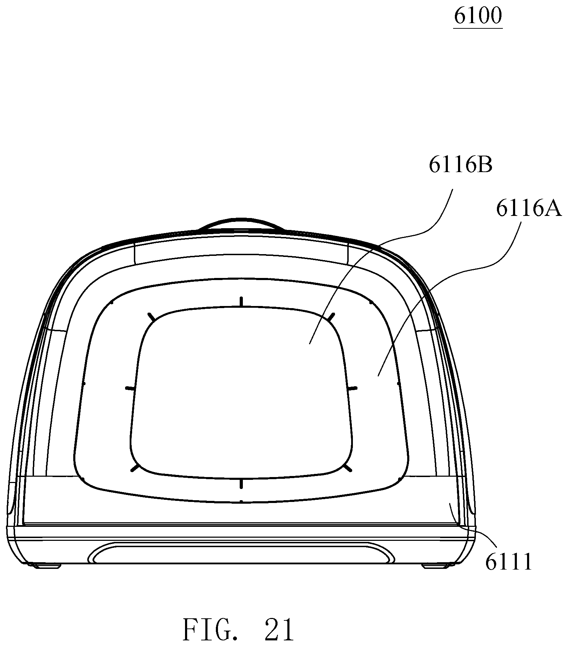

FIG. 21 shows a rear view of the carrier 6100 according to the fifth embodiment of the present disclosure, that is, a view observed from the side of the carrier 6100 close to the backrest of the vehicle seat. The difference between the carrier 6100 of this embodiment and the aforementioned embodiments lies in that a size of a first window 6116A on a rear side (i.e., a side support 6111 close to or in contact with a backrest of the vehicle seat when the carrier 6100 is placed on the vehicle seat) may be larger than a size of a first window 6116B on a front side (i.e., the side support 6111 away from the backrest of the vehicle seat). When the carrier 6100 is placed in the vehicle, at least a part of the rear side or the entire rear side may be in contact with the backrest of the vehicle seat. By increasing the size of the first window 6116A on the rear side, that is, making it larger than the size of the first window 6116B on the side away from the backrest of the vehicle seat, a ventilation area is increased, thereby enhancing breathability of the rear side of the carrier 6100. In addition, the first window 6116A and/or the first window 6116B may generally have a rectangular shape, but the present disclosure is not limited thereto, they may also have shapes such as circular, oval, trapezoidal, etc.

Next, a second group of embodiments for fixing the carrier to the vehicle seat will be described. It should be understood that some components or structures in each group of embodiments may also be applied to other groups of embodiments. For the brief sake, the description of the same components or structures in the following embodiments as those in the aforementioned embodiments will be partially omitted.

An increasing number of caregivers are using carriers (such as carry cots) that may accommodate children or pets to ensure their safety in a moving vehicle. In order to more stably secure the box body to the vehicle seat, some existing carriers combine a Top Tether assembly and a LATCH assembly for fixation. Different types of vehicles may have different anchoring points. For example, the common Tether anchoring point (i.e., the anchoring point on the vehicle for connecting the end of the Top Tether assembly) may be located at a top of a trunk close to the backrest of the vehicle seat (hereinafter referred to as an "anchoring point G1"), or at a farther diagonal position from the carrier on the top of the trunk, or below the backrest of the vehicle seat (hereinafter referred to as an "anchoring point G2"). The anchoring point G1 is closer to the carrier, whereas the anchoring point G2 is farther from the carrier.

Generally, in order to connect to anchoring point G1 or G2, the Tether belt of the existing Top Tether assembly is adjustable in length. However, since an elongation of the Tether belt remains unchanged, when different anchoring points are connected for crash testing, there may be significant differences in the test results at each anchoring point. Moreover, some test data fail to meet the safety requirements of the carrier, that is, the existing Tether assembly provides inadequate protection for children or pets when connected to certain anchoring points, thereby affecting safety.

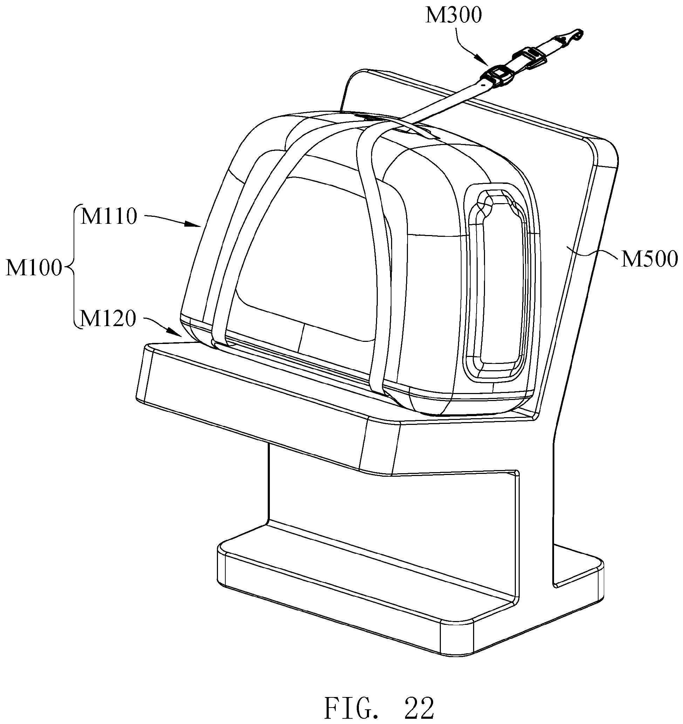

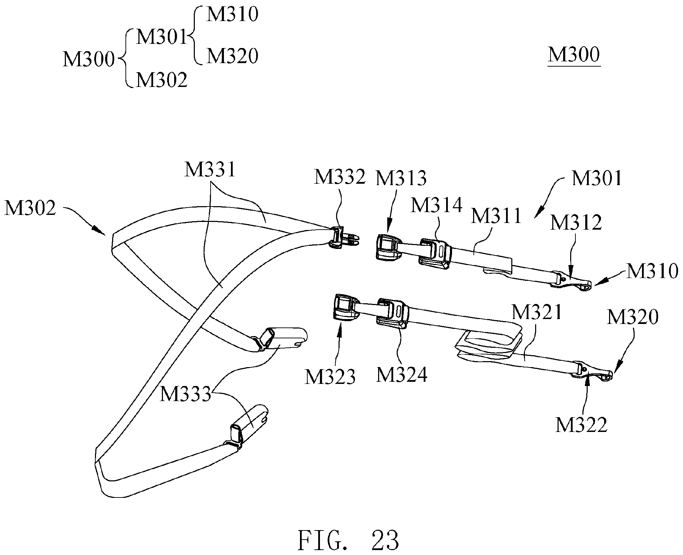

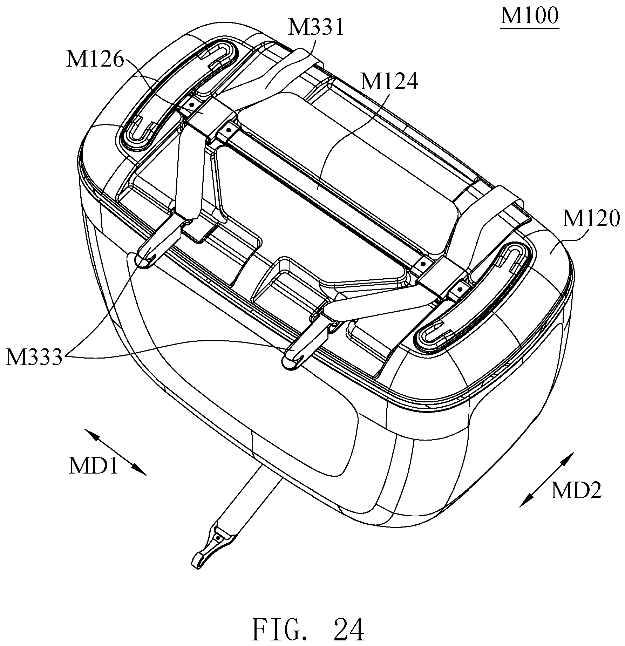

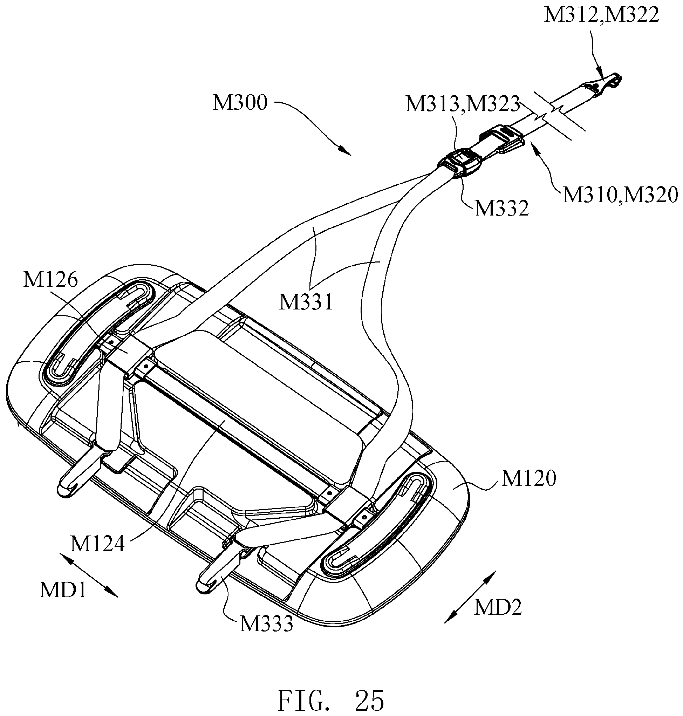

An embodiment of the present disclosure provides a connecting and fixing apparatus (also referred to as a "fixing belt assembly") M300. Referring to FIGS. 22 to 25, FIG. 22 is a perspective view of the carrier M100 fixed to the vehicle seat M500 via the connecting and fixing apparatus M300; FIG. 23 is a perspective view of the connecting and fixing apparatus M300; FIG. 24 is a perspective view of the carrier M100 provided with the connecting and fixing apparatus M300, in which the bottom covering member covering an outside of a bottom support member M120 is removed to show connection between the connecting and fixing apparatus M300 and the bottom support member M120; and FIG. 25 is a perspective view of the bottom support member M120 provided with the connecting and fixing apparatus M300.

As shown in FIG. 22, the carrier M100 comprises a box body M110 and a bottom support member M120. The bottom support member M120 is detachably connected to the box body M110 and forms a box together with the box body M110 to provide a space for accommodating pets or children therein. The connecting and fixing apparatus M300 may be configured to fix the carrier M100 to the vehicle seat M500. In one example, at least a part of the connecting and fixing apparatus M300 may be routed around a side of the carrier M100 away from the backrest of the vehicle seat M500, so that the carrier M100 may abut against the backrest of the vehicle seat M500 and be bound to the vehicle seat M500. Specifically, a first connecting end of the connecting and fixing apparatus M300 may be connected to a top of the vehicle seat or a corresponding anchoring point above it (hereinafter referred to as the "first anchoring point"). At least a part of the connecting and fixing apparatus M300 (for example, the belt) extends from above the carrier M100, winds around a side of the carrier M100 away from the backrest of the vehicle seat M500, and extends to the bottom of the carrier M100, so that a second connecting end of the connecting and fixing apparatus M300 is connected to another anchoring point on the vehicle seat (hereinafter referred to as the "second anchoring point"), such as a vehicle seat belt interface or an ISOFIX interface. However, the present disclosure is not limited to the above connection positions and winding methods.

Referring to FIGS. 22 and 23 in combination, the connecting and fixing apparatus M300 of this embodiment may be a fixing belt assembly, which comprises a first belt connecting assembly (also referred to as the first belt assembly) M301 and a second belt connecting assembly (also referred to as the first belt assembly) M302. The first belt connecting assembly M301 and the second belt connecting assembly M302 may be detachably connected to each other for easy replacement, substitution, or maintenance. Specifically, one end of the first belt connecting assembly M301 (also referred to as a "first end") forms the first connecting end of the connecting and fixing apparatus M300, and the other end of the first belt connecting assembly M301 (also referred to as a "second end") is detachably connected to the first end M332 of the second belt connecting assembly M302, and the second end M333 of the second belt connecting assembly M302 forms the second connecting end of the connecting and fixing apparatus M300.

In this embodiment, the first belt connecting assembly M301 may comprise a first belt structure M310 and a second belt structure M320. The first belt structure M310 and the second belt structure M320 are used alternately and are detachably connected to the second belt connecting assembly M302, respectively. That is to say, the first belt structure M310 and the second belt structure M320 are not used simultaneously. Depending on different anchoring points or anchoring methods in the vehicle, the first belt structure M310 or the second belt structure M320 may be alternately used to connect with the second belt connecting assembly M302. For example, when the carrier M100 is placed in a vehicle by using the anchoring point G1 as the first anchoring point, the carrier M100 may be fixed by the first belt structure M310; and when the carrier M100 is placed in a vehicle by using the anchoring point G2 as the first anchoring point, the first belt structure M310 may be replaced with the second belt structure M320, so as to fix the carrier M100 to the vehicle seat M500 by the second belt structure M320.

Specifically, as shown in FIG. 23, the first belt structure M310 may comprise a first belt body M311, and a first end M312 and a second end M313 located at the two ends of the first belt body M311. When the first belt structure M310 is used to connect with the second belt connecting assembly M302, the first end M312 of the first belt structure M310 forms the first connecting end of the connecting and fixing apparatus M300, and the second end M313 is detachably connected to the second belt connecting assembly M302. For example, the first belt structure M310 may be a Top Tether assembly, and the second belt connecting assembly M302 may be a LATCH assembly.

In one example, the first end M312 may be provided with a hook-like member (e.g., a Tether pull hook) to connect with the first anchoring point on the vehicle. Optionally or additionally, the second end M313 may be provided with a buckle to detachably cooperate with a plug buckle provided at the first end M332 of the second belt connecting assembly M302, but the present disclosure is not limited thereto. In other examples, the detachable connection structure provided at the second end M313 of the first belt structure M310 and the first end M332 of the second belt connecting assembly M302 may also be a hook-and-ring-shaped structure, a snap fastener structure, etc., and their structures may be interchangeable.

Similarly, the second belt structure M320 may also comprise a second belt body M321, and a first end M322 and a second end M323 located at the two ends of the second belt body M321. When the second belt structure M320 is used to connect with the second belt connecting assembly M302, the first end M322 of the second belt structure M320 forms the first connecting end of the connecting and fixing apparatus M300, and the second end M323 is detachably connected to the second belt connecting assembly M302. In one example, the second belt structure M320 may also be the Top Tether assembly, and the first end M322 and the second end M323 of the second belt structure M320 may be provided with structures similar to those of the first belt structure M310, such as pulling hooks and buckles, respectively, which are detachably connectable to each other, and will not be described in detail again. By providing such detachable connections, it is convenient to replace the use of the first belt structure M310 and the second belt structure M320, while ensuring that the connection between the first belt structure M310 or the second belt structure M320 and the second belt connecting assembly M302 is reliable and stable, thereby being applicable to different types of vehicles using different first anchoring points.

Furthermore, the first belt structure M310 may be provided with a first length adjuster M314 for adjusting an initial effective length of the first belt structure M310. Additionally or alternatively, the second belt structure M320 may be provided with a second length adjuster M324 for adjusting an initial effective length of the second belt structure M320. It should be noted that, although the drawings show that both the first belt structure M310 and the second belt structure M320 are provided with length adjusters, the present disclosure is not limited thereto, that is, both of them may not be provided with length adjusters, or only one of them may be provided with a length adjuster.

Optionally, the initial effective length of the first belt body M311 of the first belt structure M310 may be less than the initial effective length of the second belt body M321 of the second belt structure M320 to adapt to the different distances between the carrier M100 and the corresponding anchoring points on the vehicle. It should be noted that the "initial effective length" (also referred to as the "use length") mentioned herein refers to a length of the belt used to fix the carrier M100 when the carrier M100 is fixed to the vehicle seat and has not been subjected to an impact. That is to say, in this embodiment, a total length of the first belt body M311 (i.e., the length of the belt body itself) may be less than a total length of the second belt body M321; or, the first belt body M311 and the second belt body M321 may also have the same total length, and then the length adjuster is used to adjust them to different initial effective lengths to match the first anchoring points of different types of vehicles.

In this embodiment, the first belt structure M310 and the second belt structure M320 may each have a certain degree of elongation. In one example, the first belt structure M310 (e.g., the first belt body M311) and the second belt structure M320 (e.g., the second belt body M321) have different elongations. Specifically, the elongation of the first belt body M311 of the first belt structure M310 may be greater than the elongation of the second belt body M321 of the second belt structure M320.

For example, the elongation of the belt body may be tested in the following manner: taking a piece of belt body with a length of L1, applying a force to it slowly by a certain amount of force, such as 5560N (1250 lbf), and measuring the length of the belt body after it has been stretched, that is, L2, and calculating a percentage of the belt body elongation through a formula (L2-L1)/L1*100%, but the present disclosure is not limited to the above testing method.

Based on the above test, it can be understood that under the same test (loading) conditions, since the first belt body M311 is relatively shorter and is provided to have a greater elongation, that is, the belt body is softer (with a larger deformation), it can obtain a larger buffer effect through a larger deformation after being subjected to an impact force; while the second belt body M321 is longer and is provided to have a less elongation, that is, the belt body is harder (with a smaller deformation), it can also obtain the same buffer effect through the longer belt body combined with a smaller deformation after being subjected to the same impact force, thereby making the carrier M100 fixed on the vehicle seat more stable.

Through the above testing method, the elongation of the first belt body M311 may be 17% to 26%, and the elongation of the second belt body M321 may be 7% to 16%. Specifically, the elongation of the first belt body M311 is 21%, and the elongation of the second belt body M321 is 12%. Certainly, the present disclosure is not limited to the above values.

By providing the first belt structure M310 and the second belt structure M320 with different elongations in the connecting and fixing apparatus M300, the connecting and fixing apparatus M300 can better adapt to fixing the carrier M100 to different types of vehicles (i.e., using different anchoring points). For example, when the carrier M100 is fixed to the vehicle using the anchoring point G1, which is close to the carrier M100 (i.e., at the top of the trunk close to the backrest of the vehicle seat M500, not shown), the connecting and fixing apparatus M300 may use the first belt structure M310 with a larger elongation; and when the carrier M100 is fixed to the vehicle using the anchoring point G2, which is away from the carrier M100 (i.e., at a farther diagonal position from the carrier M100 at the top of the trunk, or below the backrest of the vehicle seat M500), the second belt structure M320 with a smaller elongation may be used. Thus, an instantaneous force on the first belt body M311 and the second belt body M321 when the carrier M100 is subjected to an impact can be reduced, that is, the instantaneous force on the belt body can be cushioned through slow deformation, so that it may not be broken instantly due to the short belt body (such as the first belt body M311), or may not be deformed too much due to the long belt body (such as the second belt body M321), thereby weakening the binding force on the carrier. More specifically, when the carrier M100 is fixed through the anchoring point G1, the effective connection distance between the first belt structure M310 and the anchoring point G1 is short, that is, the initial effective length of the first belt body M311 is short. By increasing its elongation, the overall deformation can be increased to slowly deform and reduce the instantaneous force on the belt body, avoiding its breakage and ensuring the binding force on the carrier; when the carrier M100 is fixed through the anchoring point G2, the effective connection distance between the second belt structure M320 and the anchoring point G2 is long, that is, the initial effective length of the second belt body M321 is long. By reducing its elongation, the overall deformation can be reduced to ensure the binding force on the carrier, thereby more firmly and stably fixing the carrier M100 to the vehicle seat.

In addition, as shown in FIG. 23, the second belt connecting assembly M302 comprises a third belt body M331, and a first end M332 and a second end M333 at both ends of the third belt body M331, respectively. Specifically, the first end M332 of the second belt connecting assembly M302 is detachably connected to the second end M313 of the first belt structure M310 or the second end M323 of the second belt structure M320. The second belt connecting assembly M302 may comprise at least one second end M333, and the first end M332 may be connected to each second end M333 through a corresponding third belt body M331. For example, in this embodiment, the second belt connecting assembly M302 may be provided with two second ends M332, and the first end M332 may be connected to each second end M332 through a third belt body M331, that is, the second belt connecting assembly M302 comprises two third belt bodies M331 corresponding to the two second ends M332, respectively. Alternatively, the two second ends M332 may be connected through a third belt body M331, and the third belt body M331 may be slidably connected to a connecting member (such as a plug buckle, ring, etc.) at the first end M332, so that the position of the first end M332 on the third belt body M331 is adjustable, thereby better adapting to an outer contour of the carrier M100 fixed on the vehicle seat to more stably bind the carrier M100 to the vehicle seat.

In one example, the first belt body M311, the second belt body M321, and/or the third belt body M331 may be an elastic webbing, but the present disclosure is not limited thereto. Additionally, although not shown in the drawings, it can be understood that the second belt connecting assembly M302 may also comprise a length adjuster to adjust the initial effective length of the third belt body M331.

Referring to FIGS. 24 and 25 in combination, at least a part of the connecting and fixing apparatus M300 (for example, the belt body) may be connected to the carrier M100, so that when the carrier M100 is fixed to the vehicle seat via the connecting and fixing apparatus M300 (see FIG. 22), the connecting and fixing apparatus M300 is not easily disengaged from the carrier M100. Specifically, in this embodiment, a belt limiting structure M126, which has the same structure and function as the belt limiting structure described in the previous embodiments, may be provided on the bottom support member M120 (for example, on the bottom) to limit at least a part of the belt body of the connecting and fixing apparatus M300 (for example, the third belt body M331 of the second belt connecting assembly M302). Thus, when the carrier M100 is fixed using the connecting and fixing apparatus M300, the belt limiting structure M126 may confine the connecting and fixing apparatus M300 within a certain range to prevent it from separating from the carrier M100. As shown in FIG. 24, the third belt body M331 may extend through the belt limiting structure M126 in the transverse direction MD2, thereby restricting the movement of the third belt body M331 in a longitudinal direction MD1 to prevent the connecting and fixing apparatus M300 from slipping off the side of the box of the carrier M100.

In one example, two belt limiting structures M126 may be provided, and the two belt limiting structures M126 may be located at or near the ends of the bottom support member M120 in the longitudinal direction MD1. Optionally, the two belt limiting structures M126 may be symmetrically arranged about the centerline of the bottom support member M120 in the longitudinal direction MD1. In another example, only one belt limiting structure M126 may be provided, which may extend in the longitudinal direction MD1 of the bottom support member M120 and simultaneously limit the third belt body M331 connected to the two ends of the bottom support member M120 in the longitudinal direction MD1, but the present disclosure is not limited thereto.

In one example, as shown in FIGS. 24 and 25, a reinforcing bracket may also be provided on the bottom support member M120 to enhance the structural stability of the bottom support member M120 and the carrier M100. The reinforcing bracket in this embodiment may be a reinforcing rod M124, which is located at the middle position of the bottom support member M120 in a transverse direction MD2. The belt limiting structure M126 may be provided on the reinforcing rod M124. For example, the two belt limiting structures M126 may be respectively fixed at or near the ends of the reinforcing rod M124 to limit the third belt body M331 passing through the belt limiting structure M126.

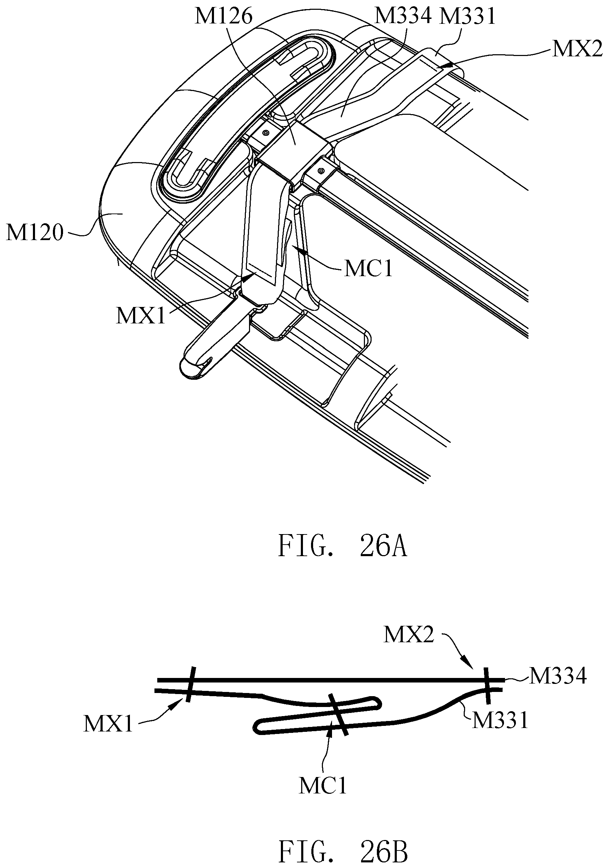

Referring to FIGS. 26A and 26B, FIG. 26A shows a partial perspective view of the second belt connecting assembly M302 of the connecting and fixing apparatus M300 according to another embodiment of the present disclosure connected to the bottom support member M120, and FIG. 26B shows a structural schematic view of the second belt connecting assembly M302 at a position connected to the bottom support member M120.

In another embodiment, the connecting and fixing apparatus M300 may have a structure similar to that described in the previous embodiments, and thus will not be described in detail again. The difference in this embodiment is that the connecting and fixing apparatus M300 may be provided with a buffer structure to further enhance the buffer effect on the carrier M100.

In this embodiment, the buffer structure may be provided between the first connecting end (also referred to as the "first connecting device") and the second connecting end (also referred to as the "second connecting device") of the connecting and fixing apparatus M300, for example, on the first belt body M311 and/or the second belt body M321 of the first belt connecting assembly M301 and/or the third belt body M331 of the second belt connecting assembly M302. In one example, the buffer structure may be provided at the part of the connecting and fixing apparatus M300 that surrounds the carrier M100 (whether in contact or not). Optionally, the buffer structure may be provided at the position where the connecting and fixing apparatus M300 is connected to (or in contact with) the carrier M100. As shown in FIG. 26A, the buffer structure may be provided at a position where the second belt connecting assembly M302 of the connecting and fixing apparatus M300 is connected to the bottom support member M120, for example, at the part of the third belt body M331 of the second belt connecting assembly M302 that passes through the belt limiting structure M126.

Specifically, the buffer structure may comprise a buffer belt M334, which is sewn onto the third belt body M331 of the second belt connecting assembly M302. For example, referring to a first stitching line MX1 (also referred to as a first fixing member) and a second stitching line MX2 (also referred to as a second fixing member) shown in FIGS. 26A and 26B. The initial effective length of the buffer belt M334 is defined between the first stitching line MX1 and the second stitching line MX2, but the buffer structure of the present disclosure is not limited to the above structure. In this embodiment, by providing such a buffer belt M334, better buffer can be provided for the carrier M100 when it is subjected to an impact. In one example, the buffer structure M334 may be provided at the bottom of the bottom support member M120 and shielded by the bottom covering member that is provided outside the bottom support member M100. Therefore, it can be well hidden at the bottom of the carrier M100, thereby enhancing the overall appearance of the carrier M100. In other embodiments, the buffer structure of the present disclosure may have other structures, and the present disclosure is not limited thereto.

The buffer structure may also comprise a knot point provided on the connecting and fixing apparatus and/or the buffer belt M334.

In one example, referring to FIGS. 26A and 26B in combination, the knot point MC1 may be provided at a part of the third belt body M331 corresponding to the buffer belt M334. As shown in FIG. 26B, the knot point MC1 of the third belt body M331 may be located between the first stitching point MX1 and the second stitching point MX2 of the third belt body M331. Optionally, a plurality of knot points MC1 may be provided on the third belt body M331. When the carrier is subjected to an impact and the third belt body M331 is pulled, the effective length of the third belt body M331 may be further increased (i.e., from the initial effective length to the buffering effective length) by releasing (for example, pulling) the knot point MC1, thereby providing more and further buffering for the carrier.

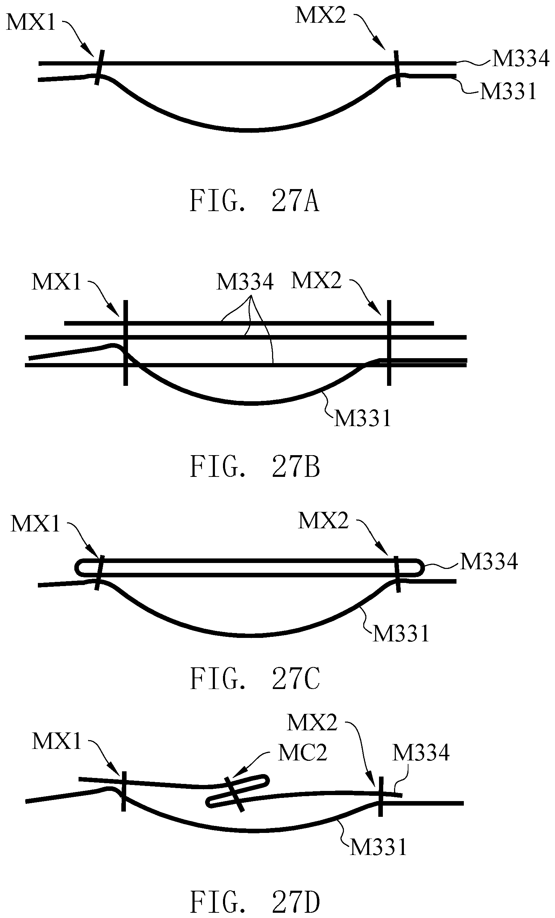

Optionally or additionally, the knot point as the buffer structure may also be provided at other positions. For example, the embodiments shown in FIGS. 27A to 27D each illustrate a specific buffer structure. However, it should be understood that these embodiments are merely exemplary and not restrictive.

It should be noted that, in the context of the present disclosure, the "initial effective length" of the buffer belt M334 and the "initial effective length" of the third belt body M331 may be considered as the length between the first stitching point MX1 and the second stitching point MX2 (i.e., between the two fixing members) when they are not subjected to tensile force, that is, not stretched, or when the knot point or other buffer structure provided thereon has not been released or implemented. The "buffering effective length" of the buffer belt M334 and the third belt body M331 may be considered as a length when the buffer structure is in effect (i.e., when the buffer belt M334 is stretched under force, or when the knot point on the buffer belt M334 and/or the third belt body M331 is opened).

As shown in FIG. 27A, the buffer structure may comprise a buffer belt M334, the ends of which are sewn (i.e., the first stitching point MX1 and the second stitching point MX2) to the third belt body M331. Specifically, the buffer belt may be provided above the third belt body M331. Optionally, an initial effective length of the buffer belt M334 between the first stitching point MX1 and the second stitching point MX2 is less than an initial effective length of the third belt body M331 between the two stitching points MX1, MX2. Alternatively or additionally, the elongation of the buffer belt M334 is greater than the elongation of the third belt body M331.

As shown in FIG. 27B, the buffer structure may comprise a plurality of buffer belts M334, each of which has ends sewn to the third belt body M331. Optionally, the initial effective length of each of the plurality of buffer belts M334 between the two stitching points MX1, MX2 is less than the initial effective length of the third belt body M331 between the stitching points MX1, MX2. Alternatively or additionally, the elongation of each of the plurality of buffer belts M334 is greater than the elongation of the third belt body M331. In this embodiment, the plurality of buffer belts M334 of the buffer structure may have the same elongation or different elongations. In one example, all of the plurality of buffer belts are arranged above the third belt body M331, or alternatively, at least one of the plurality of buffer belts is arranged below the third belt body M331.

As shown in FIG. 27C, the buffer structure may comprise a buffer belt M334 in a form of a ring-shaped structure or a folded buffer belt, and the ends of the ring-shaped or folded buffer belt M334 in a length direction of the third belt body M331 are sewn to the third belt body M331, for example, above the third belt body M331. Optionally, the initial effective length of the buffer belt M334 between the first stitching point MX1 and the second stitching point MX2 (i.e., either of the two sections of the ring-shaped or folded buffer belt M334 between the two stitching points MX1, MX2) is less than the initial effective length of the third belt body M331 between the two stitching points MX1, MX2. Alternatively or additionally, the elongation of the buffer belt M334 is greater than the elongation of the third belt body M331.

As shown in FIG. 27D, the buffer structure may comprise a buffer belt M334 and at least one knot point MC2 provided on the buffer belt M334, and the two ends of the buffer belt M334 are sewn to the third belt body M331. Optionally, the initial effective length of the buffer belt M334 between the first stitching point MX1 and the second stitching point MX2 (i.e., the effective length between the two stitching points when the knot point MC2 on the buffer belt M334 has not been released) is less than the initial effective length of the third belt body M331 between the two stitching points MX1, MX2. In addition, in this embodiment, the elongation of the buffer belt M334 is less than the elongation of the third belt body M331, so that when the carrier is subjected to an impact and the buffer belt M334 and the third belt body M331 are pulled, the knot point MC2 on the buffer belt M334 may first provide buffering, that is, the knot point MC2 may be released to unfold the buffer belt M334, that is, the buffering effective length between the two stitching points MX1, MX2 is greater than the effective length of the third belt body M331 between the two stitching points (i.e., the length of the third belt body M331 without a knot point, or the length of the third belt body M331 when the knot point is released), thereby providing buffering for the carrier.

In another embodiment, at least one knot point MC2 may be provided on the buffer belt M334, and the buffering effective length of the buffer belt M334 between the first stitching point MX1 and the second stitching point MX2 (i.e., the length after the knot point MC2 is released) may still be less than the effective length of the third belt body M331 between the two stitching points (comprising the initial effective length, and the length when the knot point MC1 is released if provided). In this case, the elongation of the buffer belt M334 may be greater than the elongation of the third belt body M331, thereby providing better buffering effect when the carrier is subjected to an impact, and reducing the instantaneous force on the buffer belt M334 to avoid its breakage, thereby ensuring the binding force on the carrier.

Although not shown in the drawings, it should be understood that, in the embodiments shown in FIGS. 27A to 27D above, at least one knot point (for example, the knot point MC1 shown in FIG. 26B) may also be provided on the third belt body M331, but the present disclosure is not limited thereto. In addition, the present disclosure is not limited to the above embodiments, and the buffer structures (comprising the buffer belt M334, the first knot point MC1 and/or the second knot point MC2) and/or the specific structure of the third belt body M331 in each of the above embodiments may be used in combination or alternative manner without structural conflict.

Furthermore, it should be noted that, although only the third belt body M331 is shown to be provided with the buffer structure in the drawings, it should be understood that the other belt bodies of the connecting and fixing apparatus M300 (for example, the first belt body M311 and/or the second belt body M321 at the position surrounding the carrier M100 or in contact with or connected to the carrier M100) may also be provided with the buffer structure, and the present disclosure is not limited thereto. In other words, in the present disclosure, the buffer structure may be provided on at least one of the first belt body M311, the second belt body M321, and the third belt body M331. Moreover, the buffer structure provided on the first belt body M311 and/or the second belt body M321 may also have the structure described in any of the above embodiments, and will not be described in detail again here.

By providing the buffer structure on at least one of the belt bodies (collectively referred to as "belt body") of the first belt body M311, the second belt body M321, and the third belt body M331 of the connecting and fixing apparatus M300, the belt body of the connecting and fixing apparatus M300 may provide good buffering effect on the carrier when it is subjected to an impact, thereby enhancing the anti-collision performance and usage safety of the carrier.

Hereinafter, a third group of embodiments for fixing the carrier to the vehicle seat will be described. It should be understood that some components or structures in each group of embodiments may also be applied to other groups of embodiments. For the brief sake, the description of the same components or structures in the following embodiments as those in the aforementioned embodiments will be partially omitted.

When the travel distance is long and it is necessary to transport in combination with a vehicle, some carriers are fixed to the vehicle seat through the LATCH assembly and/or the Top Tether assembly. However, they need to be used in combination each time, the user needs to first connect these assemblies to the carrier before use, resulting in the usage steps cumbersome and inconvenient.

In particular, when the soft LATCH assembly is snapped to the anchoring point on the vehicle seat, since it is impossible to snap the two LATCH connecting devices in place, the user needs to first engage the two LATCH connecting devices to the corresponding positions on the carrier respectively, and then tighten the connecting webbing of the LATCH assembly in order to fix the carrier to the vehicle seat, resulting in cumbersome operation. Moreover, such components are prone to becoming disordered and difficult to be stored, or require extra space for storage, which may lead to the loss of related parts and reduce the user experience of the product.

The embodiments of the present disclosure will be described below with reference to the relevant drawings. It should be noted that when a component is considered to be "connected to" another component, it may be directly connected to the other component and integrated into one, or there may be an intermediate component at the same time. The terms "mounted", "one end", "the other end" and similar expressions used herein are for illustrative purposes only.

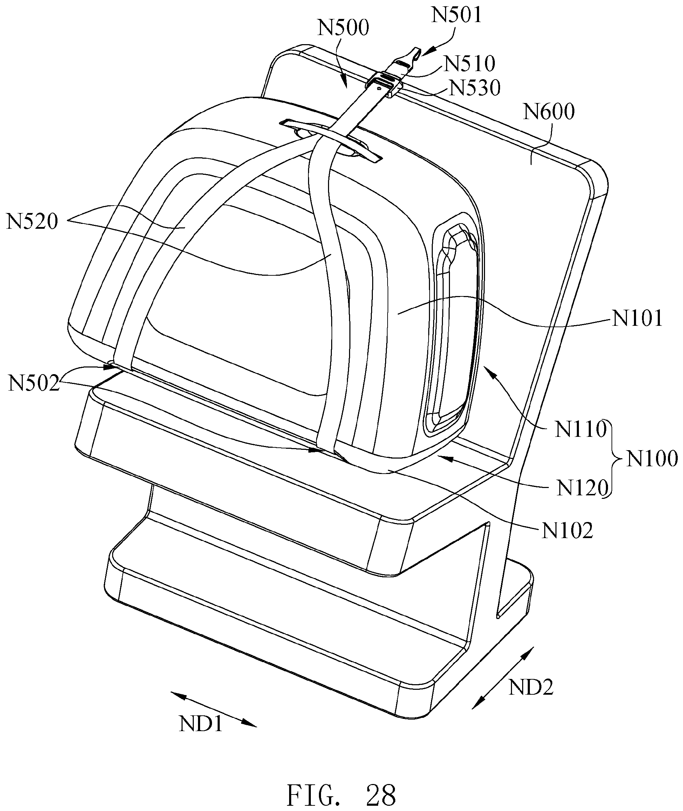

Referring to FIG. 28, an embodiment of the present disclosure provides a carrier N1, which may be fixed to a vehicle seat N600. Specifically, FIG. 28 is a perspective view of the carrier N1 fixed to the vehicle seat N600.

The carrier N1 of the present disclosure may comprise a box N100, for providing an accommodation space for children or pets to be seated. The box N100 comprises a box body N110 and a bottom support member N120 that is detachably connected to the box body N110. An exterior of the box N100 is provided with a covering, which may comprise at least one of fabric, plastic, and PE, but the present disclosure is not limited thereto. Specifically, the covering may comprise a body covering N101 that covers the exterior of the box body N110 and a bottom covering N102 that covers the exterior of the bottom support member N120. The body covering N101 and the bottom covering N102 may be made of the same material or material combination, or they may use different materials or material combinations. The body covering N101 is detachably connected to the bottom covering N102, for example, by a zipper structure, Velcro, hook-and-loop fasteners, etc., but the present disclosure is not limited thereto.

In one embodiment, as shown in FIG. 28, the carrier N1 may comprise a fixing belt assembly N500. The fixing belt assembly N500 may be connected to the box N100, for example, in a detachable or non-detachable manner, to fix the box N100 to the vehicle seat N600. Optionally, when the carrier N1 of the present disclosure is not in use, at least a part of the fixing belt assembly N500 may be kept in connection with the box N100. The fixing belt assembly N500 may comprise a first belt N510, a second belt N520, a first connecting end N501, and a second connecting end N502. The first belt N510 and the second belt N520 may form a belt body of the fixing belt assembly N500, between the first connecting end N501 and the second connecting end N502. One end of the first belt N510 forms the first connecting end N501 of the fixing belt assembly N500, and a first connecting device, such as a hook or other component, is provided at the first connecting end N501. In a specific example, the first connecting device may be a Top Tether connecting device for connection to the top anchoring point on the vehicle seat or the corresponding anchoring point above the vehicle seat. The other end of the first belt N510 is connected to one end of the second belt N520. The other end of the second belt N520 forms the second connecting end N502 of the fixing belt assembly N500 and is connected to the box N100 in a detachable or non-detachable manner. For example, the second connecting end N502 may be connected to the bottom support member N120, specifically on a side of the bottom support member N120 away from the backrest of the vehicle seat, more specifically at an edge of the side of the bottom support member N120. However, the present disclosure is not limited thereto, and a connection position of the second connecting end N502 of the fixing belt assembly N500 may be determined according to the specific structure and strength requirements of the box N100. In other examples, the second connecting end N502 may also be connected to the box body N110.

In one example, the fixing belt assembly N500 may have two second connecting ends N502. For example, the second belt N520 may be formed of two belt-like members, and one end of one belt-like member is connected to one end of the other belt-like member and the respective other ends of the two belt-like members each form a second connecting end N502. In another example, the second belt N520 may be formed of one belt-like member that passes through the connection part between the first belt N510 and the second belt N520, and the two ends thereof respectively forming one second connecting end N502.

In addition, as shown in FIG. 28, a length adjuster N530 may be provided between the first belt N510 and the second belt N520 to adjust an overall length of the fixing belt assembly N500. The length adjuster N530 may be configured to adjust a length of the first belt N510, or a length of the second belt N520, or the lengths of both the first belt N510 and the second belt N520, but the present disclosure is not limited thereto.

When the carrier N1 is fixed to the vehicle seat N600, the first connecting end N501 of the fixing belt assembly N500 is connected to a top anchoring point on the vehicle seat or a corresponding anchoring point above the vehicle seat. At least a part of the belt body (for example, the second belt N520) is routed to a side of the box N100 away from the backrest of the vehicle seat, and the second connecting end N502 is connected to the bottom support member N120 of the box N100 in order to fix the box N100 to the vehicle seat N600.

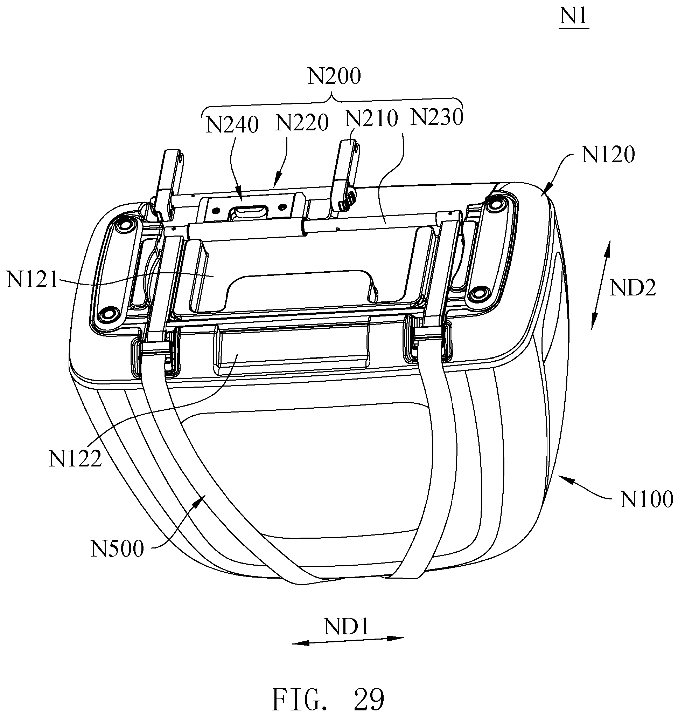

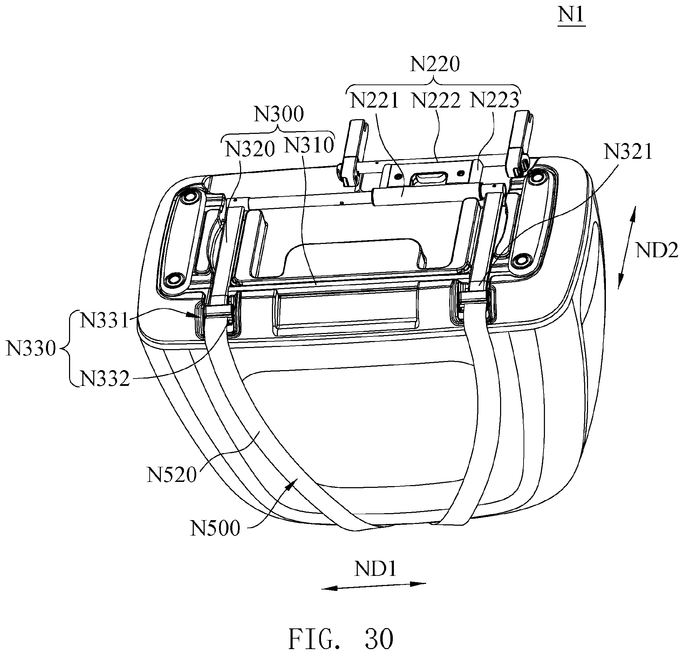

FIGS. 29 and 30 respectively show perspective views of the carrier N1 shown in FIG. 28 in different use states, where FIG. 29 shows the carrier N1 in a left-side use state, and FIG. 30 shows the carrier N1 in a right-side use state. To facilitate illustration and show the specific structure of the bottom support member N120, the bottom covering N102 covering the exterior of the box body bottom support member N120 is removed from the carrier N1 shown in FIGS. 29 and 30.

Referring to FIGS. 28 to 30 in combination, in order to more stably fix the carrier N1 to the vehicle seat, the carrier of the present disclosure may also comprise an ISOFIX connecting assembly N200 for connecting to the ISOFIX interface on the vehicle seat N600 to fix the box N100 to the vehicle seat N600. In one example, the ISOFIX connecting assembly N200 may be provided on the bottom support member N120 of the box N100 (shielded in FIG. 28, referring to FIG. 29), specifically on a side of the bottom support member N120 close to the backrest of the vehicle seat N600.

As shown in FIG. 29, the ISOFIX connecting assembly N200 comprises an engaging part N210, a connecting part N220, and a mounting part N230. The engaging part N210 is configured to be engaged with a corresponding mating structure on the vehicle seat N600 to achieve fixation of the carrier N1 relative to the vehicle seat. For example, the engaging part N210 of this embodiment may be engaged with the ISOFIX interface on the vehicle seat N600. The engaging part N210 may be provided on a side of the bottom support member N120 close to a backrest of the vehicle seat N600 and extend outward from the side of the bottom support member N120 to facilitate the installation of the box N100 and connection with the vehicle seat N600. As shown in FIGS. 29 and 30, the engaging part N210 may move to different positions relative to the box N100 to be correspondingly engaged with different positions on the vehicle seat. This will be specifically described below in conjunction with the connecting part N220 and the mounting part N230.

The mounting part N230 is connected to the box N100, for example, fixedly connected (comprising detachable or non-detachable connection methods) to the bottom support member N120 of the box N100. In one example, the mounting part N230 is configured as a rod or a tubular member extending in a longitudinal direction ND1 (i.e., the length direction) of the box N100, such as a metal tube. Optionally, the mounting part N230 is provided at a position biased towards the side close to the vehicle seat backrest from a centerline of the bottom support member N120 in a transverse direction ND2. For example, the two ends of the mounting part N230 may be fixed to the bottom side of the bottom support member N120 by fasteners.

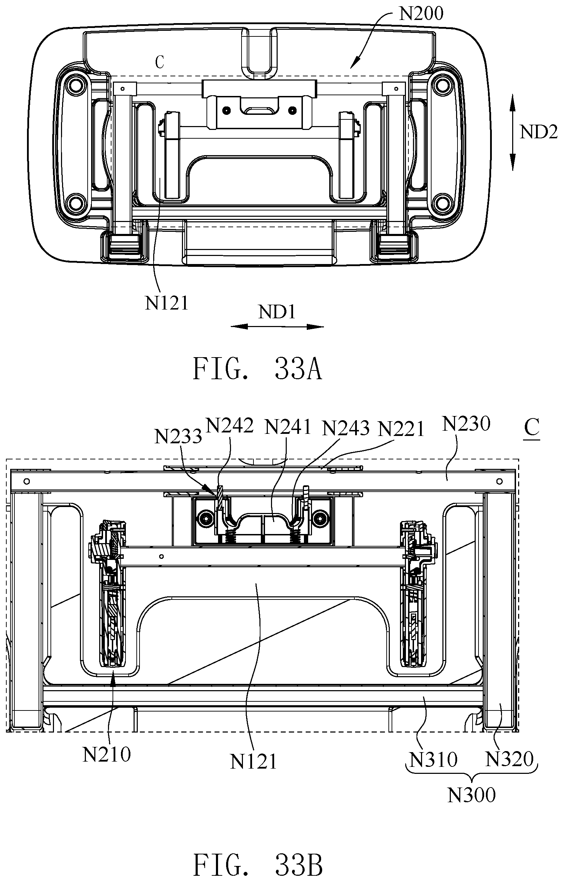

Referring to FIGS. 29 and 30, the connecting part N220 is connected between the engaging part N210 and the mounting part N230, such that the engaging part N210 may move relative to the mounting part N230. Specifically, one end of the connecting part N220 is fixedly (i.e., non-relatively movable) connected to the engaging part N210, and the other end of the connecting part N220 is movably connected to the mounting part N230, thereby driving the engaging part N210 to move relative to the mounting part N230. In this embodiment, the connecting part N220 may move relative to the mounting part N230 along the longitudinal direction ND1 of the box N100 to adjust the position of the engaging part N210 relative to the box N100, thereby being suitable for fixing the box N100 to different positions on the vehicle seat N600. In addition, the connecting part N220 may also be pivoted relative to the mounting part N230, for example, pivoted around the mounting part N230, to stow the engaging part N210. The specific storing method will be described below in conjunction with FIGS. 33A to 34. In one specific example, the mounting part N230 is a round rod or a tube, and at least a part of the connecting part N220 is sleeved over the mounting part N230.

As can be seen from FIGS. 28 to 30, when the carrier N1 is fixed to the vehicle seat N600 on either side, the connecting part N220 and its connected engaging part N210 may be located at a position on the bottom support member N120 biased towards the other side of the vehicle seat. That is to say, as shown in FIG. 29, when the carrier N1 is fixed to the vehicle seat N600 on the left side, that is, in the left-side use state, the connecting part N220 and the engaging part N210 may move along the longitudinal direction ND1 of the box N100 to the right-side engaging position; while as shown in FIG. 30, when the carrier N1 is fixed to the vehicle seat N600 on the right side, that is, in the right-side use state, the connecting part N220 and the engaging part N210 may move along the longitudinal direction ND1 of the box N100 to the left-side engaging position. It should be noted that the "left" and "right" mentioned above refer to directions observed from the front side of the carrier N1 (i.e., the side away from the backrest of the vehicle seat) when the carrier N1 is fixed to the vehicle seat N600. However, FIGS. 29 and 30 show a bottom-up view of the carrier N1. Therefore, the "right-side engaging position" mentioned above is shown on the left side in FIG. 29, and the "left-side engaging position" is shown on the right side in FIG. 30.

Specifically, as shown in FIG. 30, the connecting part N220 comprises a sliding member N221 and a connecting component. The sliding member N221 is slidably connected to the mounting part N230, and optionally, the sliding member N221 may be pivoted relative to the mounting part N230, for example, it may be pivotally connected to the mounting part N230. In one specific example, the mounting part N230 may be in the form of a round tube, and the sliding member N221 may be formed as a circular sleeve. The sliding member N221 may be formed as a circular sleeve sleeved over the exterior of the mounting part N230, such that the sliding member N221 is capable of sliding and pivoting relative to the mounting part N230.

The connecting component is connected between the engaging part N210 and the sliding member N221, for example, by a fixed connection method, to drive the engaging part N210 to slide and/or pivot relative to the mounting part N230. In one example, the connecting component comprises a synchronizing member N222 and a connecting member N223. The synchronizing member N222 connects at least two engaging parts N210 together to enable synchronous movement of the at least two engaging parts N210. In this embodiment, two engaging parts N210 may be provided, and the synchronizing member N222 may be a rod member extending in the longitudinal direction ND1, connected between the two engaging parts N210, so that the lengths of the two engaging parts N210 extending from the bottom support member N120 are consistent, and they can move synchronously and/or pivot synchronously relative to the mounting part N230 (i.e., relative to the bottom support member N120). As shown in FIG. 30, the connecting member N223 is connected between the synchronizing member N222 and the sliding member N221. In one specific example, the connecting member N223 may be a rod member, two ends of which are respectively connected to the synchronizing member N222 and the sliding member N221.

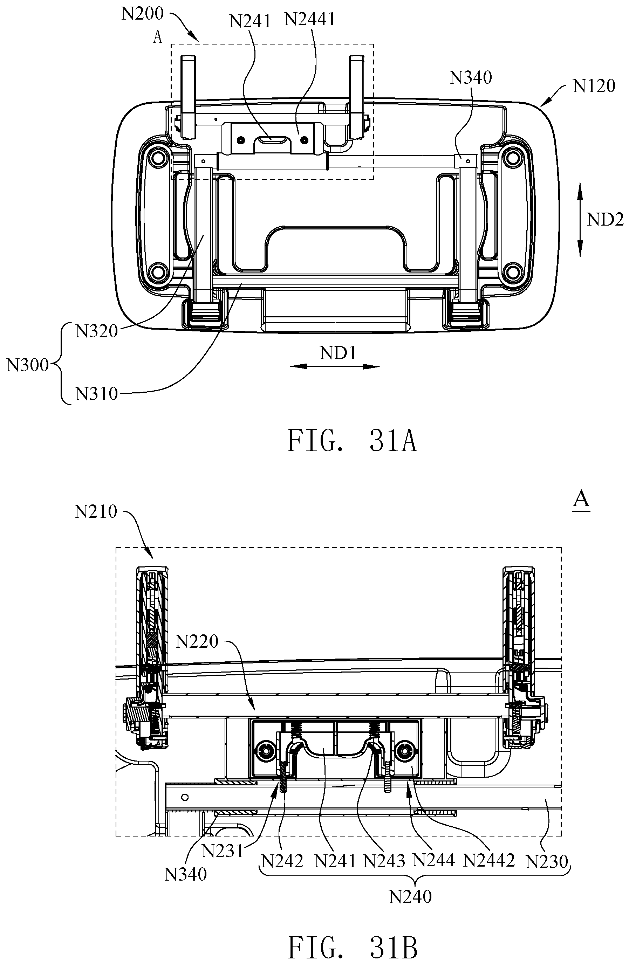

As shown in FIG. 29, the ISOFIX connecting assembly of this embodiment may also comprise a locking device N240 to lock and unlock the connecting part N220. The specific structure and working principle of the locking device N240 will be described below in conjunction with FIGS. 31A to 32B.

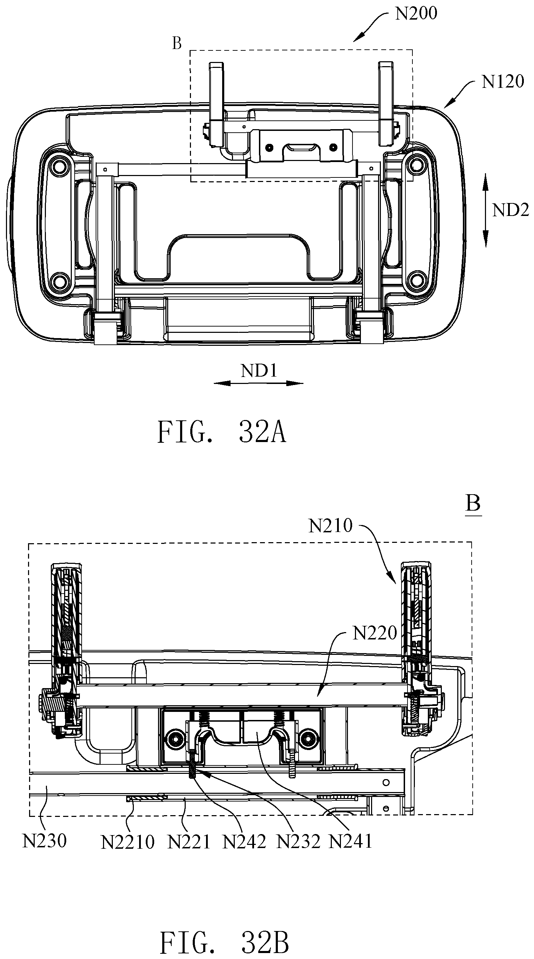

FIG. 31A shows a bottom view of the carrier shown in FIG. 29. FIG. 31B shows a partial sectional view of part A shown in FIG. 31A. FIG. 32A shows a bottom view of the carrier shown in FIG. 30. And FIG. 32B shows a partial sectional view of part B shown in FIG. 32A.

As shown in FIGS. 31A and 31B, the locking device N240 is provided between the connecting part N220 and the mounting part N230 to lock the connecting part N220 to the mounting part N230 and to unlock the connecting part N220 from the mounting part N230. In one example, a part of the locking device N240 may be fixedly provided on the connecting part N220 to move relative to the mounting part N230 together with the connecting part N220 and the engaging part N210 and to lock them to different engaging positions. However, the present disclosure is not limited thereto. Alternatively, a part of the locking device N240 may be fixedly provided on the mounting part N230.

In a specific example, the locking device N240 may comprise a mounting seat N244. The mounting seat N244 has an upper cover N2441 and a lower cover N2442, which are joined together to form an accommodation space for accommodating other components of the locking device N240 (for example, the unlocking operation member N241, at least a part of the locking member N242, and the resetting member N242 described below). The upper cover N2441 and the lower cover N2442 are respectively fixedly connected to the connecting part N220, for example, the connecting component, more specifically to the connecting member N223, or the synchronizing member N222, or both the synchronizing member N222 and the connecting member N223, but the present disclosure is not limited thereto. Optionally, or additionally, the synchronizing member N222 may be spaced apart from the sliding member N221, for example, they are provided substantially parallel and spaced apart, and two connecting members N223 are respectively connected between them and spaced apart from each other. The accommodation space formed by the locking device N240 is located in the space among the sliding member N221, the synchronizing member N222, and the connecting member N223.

In this embodiment, the locking device N240 has a locked state and an unlocked state. When the locking device N240 is in the locked state, the ISOFIX connecting assembly is locked, that is, the connecting part N220 and the engaging part N210 connected thereto are locked relative to (fixed to the box N100) the mounting part N230, that is, they are not movable or rotatable. When the locking device N240 is in the unlocked state, the ISOFIX connecting assembly is unlocked, that is, the connecting part N220 and the engaging part N210 connected thereto are movable and/or pivotable relative to the mounting part N230.

Referring to FIGS. 31A to 32B in combination, the locking device N240 comprises an unlocking operation member N241 and a locking member N242. The locking member N242 may be cooperated with the corresponding locking part on the mounting part N230 to lock and unlock the connecting part N220, that is, it has a locked position and an unlocked position. When the locking member N242 is in the locked position, the locking member N242 is engaged with the corresponding locking part, and the connecting part N220 is locked relative to the mounting part N230. When the locking member N242 is in the unlocked position, the locking member N242 is disengaged from the corresponding locking part, and the connecting part N220 may be unlocked relative to the mounting part N230, that is, it is slidable and/or rotatable. The unlocking operation member N241 is operated to move the locking member N242 from the locked position to the unlocked position. The unlocking operation member N241 is fixedly connected to the locking member N242 and is slidably provided relative to the mounting part N230 to move relative to the mounting part N230 together with the locking member N242. Specifically, the unlocking operation member N241 is slidably provided in the mounting seat N244, that is, it is provided in the accommodation space formed by the upper cover N2441 and the lower cover N2442, and at least a part of it is exposed outside the mounting seat N244 for the user's operation. As shown in FIG. 31B, the mounting seat N244 has an overall substantially U-shaped structure, that is, a gap is provided at an upper end of the U-shaped structure to expose at least a part of the unlocking operation member N241. In a specific example, the unlocking operation member N241 may be a button, but the present disclosure is not limited thereto, and may also be constructed as a pulling ring, a pulling rod, etc.

Furthermore, as shown in FIGS. 31B and 32B, the locking device N240 also comprises a resetting member N243. The resetting member N243 provides a force to bias the locking member N242 towards the locked position. Specifically, the resetting member N243 may be an elastic member, such as a spring. One end of the resetting member N243 is provided on the connecting part N220 (for example, the synchronizing member N222) or the mounting seat N244, and the other end abuts against the unlocking operation member N241 and/or the locking member N242 to provide a force to bias the locking member N242 towards the locked position.

For example, the locking member N242 may be a locking pin, and the corresponding locking part provided on the mounting part N230 is a locking hole, but the present disclosure is not limited thereto. When the unlocking operation member N241 is in the initial position, the locking member N242 is in the locked position, that is, the locking pin (i.e., the locking member N242) is engaged with the corresponding locking hole, thereby locking the position of the connecting part N220 and the engaging member N210 relative to the mounting part N230, that is, preventing them from moving or rotating. When it is necessary to move the ISOFIX connecting assembly (i.e., to slide the connecting part N220), the user can operate the unlocking operation member N241. The locking member N242 moves to the unlocked position with the movement of the unlocking operation member N241, that is, the locking pin is disengaged from the corresponding locking hole, thereby achieving unlocking. At this time, the engaging part N210 and the connecting part N220 may be movable. After the connecting part N220 is moved to the desired position, the unlocking operation member N241 may be released and restored to its initial position under the action of the resetting member N243. The locking pin is engaged with the corresponding locking hole at the desired position, thereby locking the connecting part N220 again.

As shown in FIGS. 31B and 32B, the locking part may comprise a plurality of sets of locking parts. For example, in this embodiment, the locking part comprises a first locking part N231 and a second locking part N232. The first locking part N231 and the second locking part N232 may be respectively provided at different positions along the longitudinal direction ND1 of the mounting part N230, for example, close to the ends of the mounting part N230, to lock the connecting part N220 relative to the mounting part N230 at different positions. As shown in FIG. 31B, when the carrier N1 is in the left-side use state, the locking member N242 may be cooperated with the first locking part N231; while as shown in FIG. 32B, when the carrier N1 is in the right-side use state, the locking member N242 may be cooperated with the second locking part N232.

Furthermore, as shown in FIGS. 30 and 31A, the carrier N1 also comprises a reinforcing bracket N300 to strengthen the overall structure of the bottom support member N120. The reinforcing bracket N300 is provided on the bottom side of the bottom support member N120 and comprises a first reinforcing rod N310 and a second reinforcing rod N320. Specifically, two second reinforcing rods N320 may be provided. The first reinforcing rod N310 extends along the longitudinal direction ND1 of the box N100 and is connected between the two second reinforcing rods N320. Optionally, the two second reinforcing rods N320 are respectively provided to extend along the transverse direction ND2 of the box N100.

In one example, the mounting part N230 of the ISOFIX connecting assembly N200 may be provided between the two second reinforcing rods N320 and located at one end of the second reinforcing rod N320. The mounting part N230 is spaced apart from the first reinforcing rod N320 along the transverse direction ND2, for example, close to the two sides of the bottom support member N120 in the transverse direction ND2. Specifically, the two ends of the mounting part N230 are respectively connected to one end of each of the two second reinforcing rods N320, and the two ends of the first reinforcing rod N310 are respectively connected to the other end of each of the two second reinforcing rods N320 or close to the other end. In one example, the other end of each second reinforcing rod N320 extends from its connection point with the first reinforcing rod N310 (i.e., continues to extend), that is, the other end of the second reinforcing rod N320 is not connected to the first reinforcing rod N310 at its tip, but leaves an extending section N321 at the tip. Optionally, the second reinforcing rod N320 may have a non-linear structure at its extending section N321, for example, an arc-shaped curve. Specifically, the extending section N321 may be curved to match the arc-shaped structure at the side edge of the bottom support member N120.

In one example, as shown in FIGS. 31A and 31B, a limiting member N340 is also provided on the ISOFIX connecting assembly N200. The limiting member N340 is provided at the two ends of the mounting part N230 to limit the connecting part N220 to prevent it from being disengaged from the mounting part N230. For example, the limiting member N340 may be provided at the connection points of the two second reinforcing rods N320 with the mounting part N230. In this example, the limiting member N340 may be a limiting sleeve sleeved over the exterior of the two ends of the mounting part N230 (for example, a tubular member). Additionally, as shown in FIG. 32B, a wear-resistant structure N2210 may be provided between the sliding member N221 and the mounting part N230, for example, a wear-resistant sleeve sleeved inside the two ends of the sliding member N221, to enhance the wear resistance and service life of the structure, while increasing the connection tightening force to make the sliding connection between them more stable.

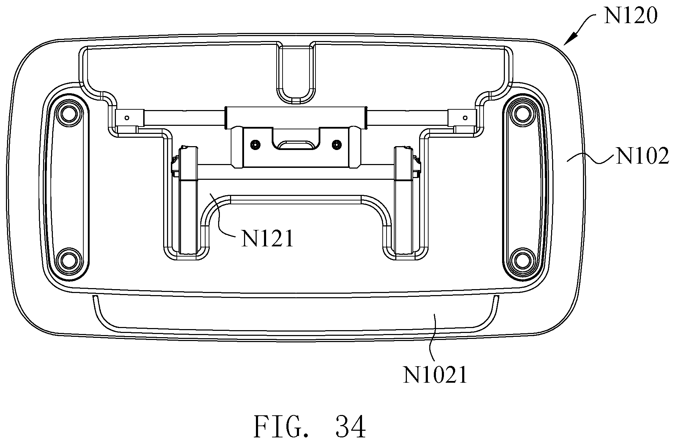

Referring to FIGS. 33A to 34, FIG. 33A shows a bottom view of the carrier in a storage state according to an embodiment of the present disclosure, FIG. 33B shows a partial sectional view of part C shown in FIG. 33A, and FIG. 34 shows another bottom view of the carrier shown in FIG. 33A.

Referring to FIGS. 32A to 33B in combination, the connecting part N220 of this embodiment is capable of being pivoted relative to the mounting part N230 to store the ISOFIX connecting assembly N200.

Specifically, as shown in FIG. 32A, when the ISOFIX connecting assembly N200 is in the use state (i.e., an unfolded state), the engaging part N210 and the connecting part N220 are located on an outer side of the mounting part N230 and extend from one side of the bottom support member N120. The "inner side" refers to a direction from the mounting part N230 towards a centerline of the bottom support member N120, and the "outer side" refers to a direction from the mounting part N230 towards an edge of the bottom support member N120, that is, an opposite direction to the "inner side".

As shown in FIG. 33A, when the ISOFIX connecting assembly is not in use, the connecting part N220 may be pivoted relative to the mounting part N230, for example, pivoted by N180 degrees, to locate the connecting part N220 and the engaging part N210 on the inner side of the mounting part N230, that is, rotate the connecting part N220 in the opposite direction to that in the use state. At this time, the ISOFIX connecting assembly N200 is in the storage state.

In one example, a third locking part N233 is also provided on the mounting part N230 to be engaged with the locking member N242 to lock the connecting part N220 of the ISOFIX connecting assembly N200 in the storage state. The third locking part N233 is provided on a side opposite to the first locking part N231 and the second locking part N232. For example, in this embodiment, the first locking part N231 and the second locking part N232 are provided on a side of the mounting part N230 close to the backrest of the vehicle seat N600 (i.e., the side where the engaging part N210 extends outward from the box N100), and the third locking part N233 is provided on the opposite side, that is, the side away from the backrest of the vehicle seat N600.

In addition, as shown in FIGS. 33A and 33B, a component storage groove N121 is also provided on the box N100 to provide a storage space for storing the ISOFIX connecting assembly N200. In one example, the component storage groove N121 may be provided on the bottom support member N120. Specifically, the component storage groove N121 may be provided in the middle of the bottom support member N120, for example, located between the reinforcing bracket N300 and the mounting part N230, and the third locking part N233 may be correspondingly provided with the component storage groove N121, for example, provided in the middle of the side of the mounting part N230 away from the backrest of the vehicle seat. Optionally, the component storage groove N121 may be centrally provided on the bottom side of the bottom support member N120 in the longitudinal direction ND1. The component storage groove N121 may have a shape that matches the ISOFIX connecting assembly.

When the ISOFIX connecting assembly is not in use, the connecting part N220 and the engaging part N210 connected thereto may be pivoted relative to the mounting part N230 and simultaneously move along the mounting part N230 to the position of the third locking part N233, so that the locking member N242 is engaged with the third locking part N233 to lock the connecting part N220. At this time, the ISOFIX connecting assembly may be accommodated in the component storage groove N121 to achieve storage. The storage state of the ISOFIX connecting assembly is shown in FIG. 34.

In addition to the above storage structure of the ISOFIX connecting assembly, the box N100 of the present disclosure may also be provided with a storage and fixation structure for the fixing belt assembly N500.

For example, as shown in FIG. 29, a fixing belt storage groove N122 may be provided on the bottom support member N120 to provide a space for storing the fixing belt assembly N500, so that the fixing belt assembly N500 may be stored while remaining connected to the box N100, and to prevent the fixing belt assembly N500 from being scattered around the box N100. In one example, the fixing belt storage groove N122 is located on the side of the bottom support member N120 away from the backrest of the vehicle seat N600. Referring to FIG. 34, the carrier N1 may also be provided with a storage cover N1021 for closing the fixing belt storage groove N122. Specifically, the storage cover N1021 is detachably connected to the bottom covering N102 that covers the exterior of the bottom support member N120, for example, by a zipper structure, Velcro, hook-and-loop fasteners, etc. Optionally, the storage cover N1021 may be a part of the bottom covering N102, and at least partially detachably connected to the other part of the bottom covering N102, but the present disclosure is not limited thereto.

Furthermore, as shown in FIG. 30, a belt fixing structure N330 may also be provided on the bottom support member N120 to connect at least a part of the fixing belt assembly N500 to the bottom support member N120. The belt fixing structure N330 is provided on the side of the bottom support member N120 away from the backrest of the vehicle seat, specifically at an edge of the side, or at the extending section N321 of the second reinforcing rod N320. The second connecting end N502 of the fixing belt assembly N500 may be connected to the belt fixing structure N330 to prevent the fixing belt assembly N500 (for example, the second belt N520) from inadvertently detaching from the box N100, and further increases the stability and firmness of the carrier N1 fixed to the vehicle seat. Optionally, the extending section N321 matches the structure at the edge of the bottom support member N120, so that the belt fixing structure N330 provided at the extending section N321 is closer to, or even in contact with, the side of the bottom support member N120, thereby making the overall structure of the bottom support member N120 and the limitation of the fixing belt assembly more stable.

In one example, the belt fixing structure N330 may comprise a fixing base N331 and a fixing pin N332. The fixing base N331 is provided at the edge of or near the side of the bottom support member N120 away from the backrest of the vehicle seat, or at the extending section N321 of the second reinforcing rod N320. The fixing pin N332 is provided inside the fixing base N331 and is spaced apart from the bottom surface of the fixing base N331 to allow the second connecting end N502 of the fixing belt assembly N500 to be wound around the fixing pin N332. In other examples, a corresponding connection structure may also be provided at the second connecting end N502 to be connected with the belt fixing structure N330, but the present disclosure is not limited thereto.

By providing the ISOFIX connecting assembly of the embodiments of the present disclosure, a plurality of engaging parts may be synchronously engaged when the box body of the carrier is connected and fixed to the vehicle seat, that is, it is not necessary to separately operate the plurality of engaging parts to engage them one by one, and no adjustment may be made after the engagement. Therefore, it is not only convenient for the connection and fixation of the carrier, but also the engagement is firm and not easy to loosen. Furthermore, the ISOFIX connecting assembly of the present disclosure may be adapted to multiple positions of the vehicle seat through a movable (i.e., slidable) connection, enhancing the convenience of use and user experience, and may be stored by pivoting on the bottom side of the bottom support member, to make the operation convenient, save the storage space, and avoid the engaging part of the ISOFIX connecting assembly from knocking the user or other structures of the vehicle when the box body is lifted alone, thereby improving the safety of use. In addition, the box body is fixed to the vehicle seat by the cooperation of the ISOFIX connecting assembly and the fixing belt assembly of the present disclosure, further ensuring the reliability and stability of the fixation, thereby better ensuring the safety of the user or pet inside the box and avoiding injury when the box body is impacted.

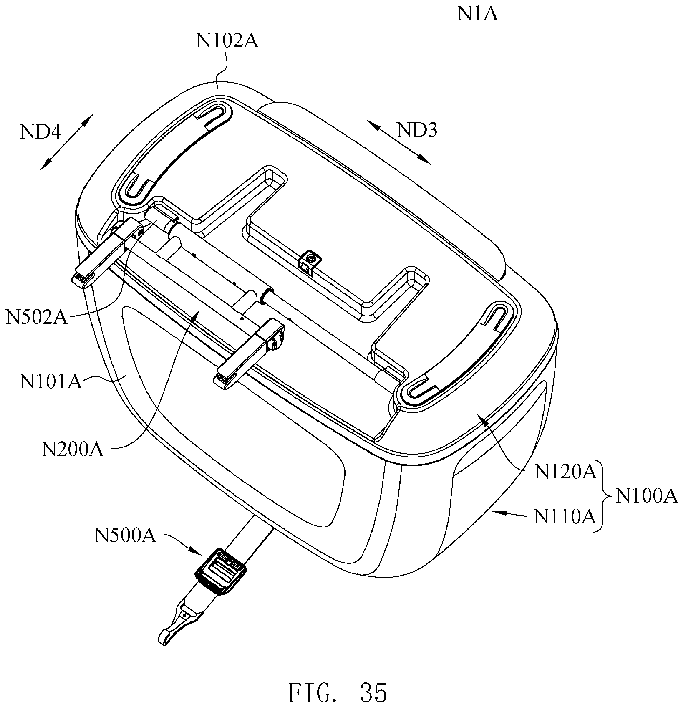

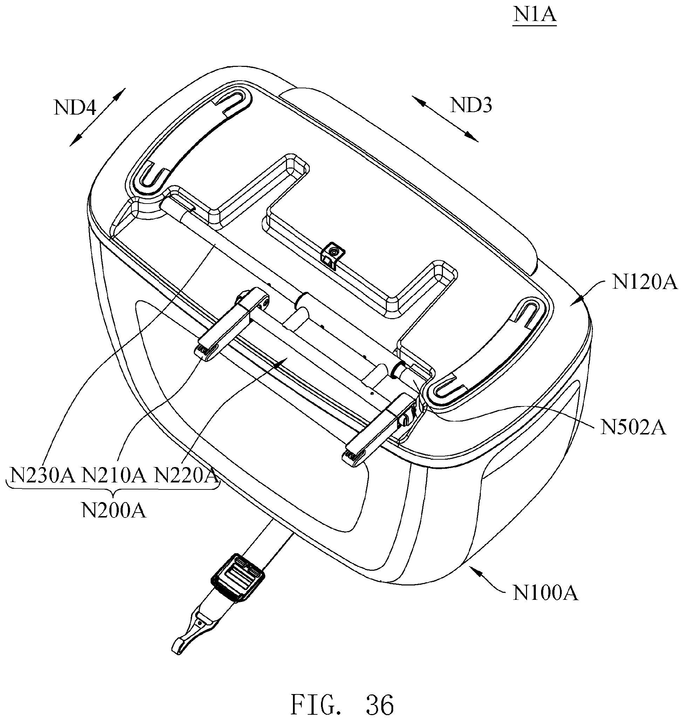

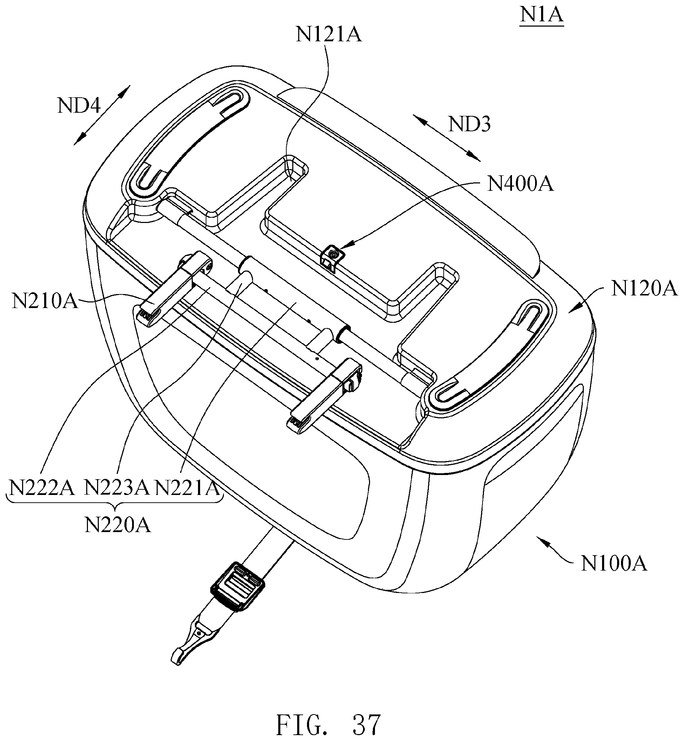

Referring to FIGS. 35 to 37, another embodiment of the present disclosure provides a carrier N1A. Specifically, FIGS. 35 to 37 respectively show perspective views of the carrier N1A in different use states. FIG. 35 shows the ISOFIX connecting assembly N200A in a right-side use state, FIG. 36 shows the ISOFIX connecting assembly N200A in a left-side use state, and FIG. 37 shows the ISOFIX connecting assembly N200A in a middle position. Similar to the aforementioned embodiment, the carrier N1A may also be fixed to a vehicle seat, for example, in a manner similar to the carrier N1 shown in FIG. 28 being fixed to the vehicle seat N600.

As shown in FIG. 35, the carrier N1A may comprise a box N100A, which provides an accommodation space for children or pets to be seated. The box N100A comprises a box body N110A and a bottom support member N120A that is detachably connected to the box body N110A. In one example, the bottom support member N120A may be made of materials such as EPP, EPS, EPO, or a plastic board, but the present disclosure is not limited thereto.

The exterior of the box body N110A may be covered with a body covering N101A, and the exterior of the bottom support member N120A may be covered with a bottom covering N102A. The body covering N101A and the bottom covering N102A may each comprise at least one of fabric, plastic, and PE, but the present disclosure is not limited thereto. The body covering N101A and the bottom covering N102A may be made of the same material or material combination, or they may use different materials or material combinations. The body covering N101A and the bottom covering N102A are detachably connected to each other, for example, by a zipper structure, Velcro, hook-and-loop fasteners, etc. In one example, the body covering N101A may be partially detachably connected to the bottom covering N102A, that is, a part of the body covering N101A is detachably connected to the bottom covering N102A. In another example, the body covering N101A may be completely detachably connected to the bottom covering N102A, that is, the body covering N101A may be completely removed from the bottom covering N102A.

In this embodiment, the carrier N1A may comprise an ISOFIX connecting assembly N200A, which is connected with the ISOFIX interface on the vehicle seat, thereby more stably and firmly fixing the box N100A to the vehicle seat. Specifically, the ISOFIX connecting assembly N200A may be provided on the bottom support member N120A of the box N100A, for example, on the side of the bottom support member N120A close to the backrest of the vehicle seat. More specifically, the ISOFIX connecting assembly N200A may be provided on the bottom side of the bottom support member N120A and has at least a part exposed to facilitate user operation.

Referring to FIGS. 35 and 36, similar to the aforementioned embodiment, the ISOFIX connecting assembly N200A in this embodiment may comprise an engaging part N210A, a connecting part N220A, and a mounting part N230A. The mounting part N230A may be connected to the bottom support member N120A of the box N100A, for example, fixedly provided on the bottom side of the bottom support member N120A in a detachable or non-detachable manner. In one example, two ends of the mounting part N230A may be respectively fixed to the bottom side of the bottom support member N120A by fasteners. Optionally, the mounting part N230A may be configured as a rod or a tubular member extending in a longitudinal direction ND3 of the box N100A, such as a metal tube.

The engaging part N210A may be configured to be provided on the side of the bottom support member N120A close to the backrest of the vehicle seat and extend outward from the side (for example, from the bottom side) to be engaged with the ISOFIX interface of the vehicle seat. In one example, at least two engaging parts N210A may be provided. For example, in this embodiment, two engaging parts N210A may be provided.

The connecting part N220A is connected between the engaging part N210A and the mounting part N230A and is capable of moving the engaging part N210A relative to the mounting part N230A. Specifically, one end of the connecting part N220A is fixedly (i.e., non-relatively movable) connected to the engaging part N210A, while the other end is movably connected to the mounting part N230A to enable the engaging part N210A to move relative to the mounting part N230A, such as sliding or rotating.

For example, as shown in FIGS. 35 to 37, the connecting part N220A may be movable relative to the mounting part N230A along the longitudinal direction ND3 of the box N100A to move the engaging part N210A to different positions on the box N100A. In one example, the mounting part N230A is offset from a centerline of the bottom support member N120A in a transverse direction ND4 towards the side close to the backrest of the vehicle seat, thereby reducing the distance between the mounting part N230A and the engaging part N210A, reducing the size of the connecting part N220A in the transverse direction ND4, and thus improving the stability and operability of the connecting part N220A while reducing material costs.

Unlike the aforementioned embodiments, in this embodiment, no locking device is provided to lock the engaging part N210A in different use positions relative to the box N100A (for example, the first locking part N231 and the second locking part N232 and their corresponding cooperating structures in the locking device N240 of the aforementioned embodiment), so that when the carrier N1A is fixed using the ISOFIX connecting assembly N200A, the connecting part N220A and the mounting part N230A are kept in a movable connection.

Therefore, due to the movable connection between the connecting part N220A and the mounting part N230A, when the carrier N1A is fixed to the vehicle seat, for example, when the engaging part N210A of the ISOFIX connecting assembly N200A is connected to the corresponding interface on the vehicle seat, the engaging part N210A and the connecting part N220A are fixed relative to the vehicle seat. At this time, the user may adaptively adjust the position of the box N100A relative to the vehicle seat. For example, the user may push the box N100A to move the box N100A and the mounting part N230A fixedly provided thereon along the longitudinal direction ND3 relative to the connecting part N220A, thereby adaptively moving it to the desired position. In this way, the carrier N1A can not only be fixed to different positions on the vehicle seat, but also its specific position can be adaptively adjusted after being fixed.

Specifically, FIGS. 35 to 37 respectively illustrate different use positions of the ISOFIX connecting assembly N200A relative to the box N100A, for example, FIG. 35 shows the leftmost position of the ISOFIX connecting assembly N200A (especially its connecting part N220A and engaging part N210A), FIG. 36 shows the rightmost position of the ISOFIX connecting assembly N200A, and FIG. 37 shows the middle position of the ISOFIX connecting assembly N200A between the leftmost and rightmost positions. Certainly, those skilled in the art should understand that, in addition to the centered position shown in FIG. 37, the ISOFIX connecting assembly N200A, specifically its connecting part N220A and engaging part N210A, may also be in other intermediate positions between the leftmost and rightmost positions, but the present disclosure is not limited thereto.

It should be noted that the "left" and "right" mentioned above refer to the directions shown in FIGS. 35 to 37. Specifically, the position of the ISOFIX connecting assembly N200A shown in FIG. 35 is similar to the position of the ISOFIX connecting assembly N200 in the "right-side use state" of the carrier N1 shown in FIG. 30 in the aforementioned embodiment, that is, it is applicable when the carrier N1A is fixed to the vehicle seat on the right side, such that the carrier N1A may slide to the left for position adjustment, but not slide to its right side and cause a collision with the right door during traveling. The position shown in FIG. 36 is similar to the position in the "left-side use state" of the carrier N1 shown in FIG. 29 in the aforementioned embodiment, that is, it is applicable when the carrier N1A is fixed to the vehicle seat on the left side, such that the carrier N1A may slide to the right for position adjustment, but not slide to its left side and cause a collision with the left door during traveling.

Further referring to FIG. 37, similar to the aforementioned embodiment, the connecting part N220A in this embodiment may comprise a sliding member N221A and a connecting component. The sliding member N221A is slidably connected to the mounting part N230A, for example, specifically as a sleeve (or a tubular structure) sleeved over the mounting part N230A to be able to slide relative to the mounting part N230A. The connecting component is connected between the engaging part N210A and the sliding member N221A to move the engaging part N210A relative to the mounting part N230A along with the movement of the sliding member N221A.

In one example, the connecting component may comprise a synchronizing member N222A and a connecting member N223A. The synchronizing member N222A is connected between at least two engaging parts N210A to enable synchronous movement of the at least two engaging parts N210A. For example, in this embodiment, two engaging parts N210A may be provided, and the two ends of the synchronizing member N222A may be respectively connected to one end of each engaging part N210A, and the other end of each engaging part N210A opposite to that end is respectively connected to the corresponding interface of the vehicle seat. The connecting member N223A may be provided between the synchronizing member N222A and the sliding member N221A, for example, two ends of the connecting member N223A are respectively fixedly connected to the synchronizing member N222A and the sliding member N221A. In one example, the connecting member N223A may be configured as two or more rods that are substantially parallel provided between the synchronizing member N222A and the sliding member N221A, and each rod has two ends respectively connected to the synchronizing member N222A and the sliding member N221A. Optionally, the connecting component (i.e., the synchronizing member N222A and the connecting member N223A) may be an integrally formed structure. Optionally or alternatively, two or all of the sliding member N221A, the synchronizing member N222A, and the connecting member N223A may be integrally formed, or may be separate structures fixedly connected to each other.

In addition, the sliding member N221A may also be pivotable relative to the mounting part N230A.

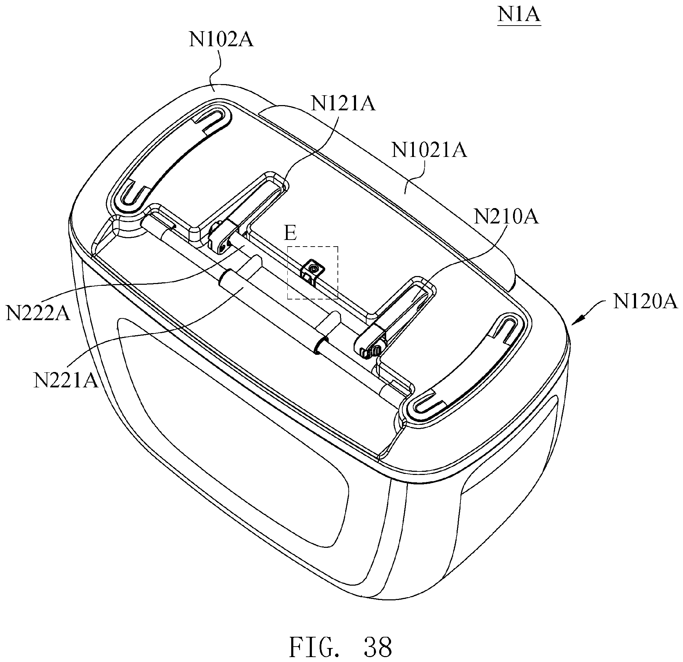

Specifically, FIG. 38 shows a perspective bottom view of the carrier N1A in a storage state. Referring to FIGS. 37 and 38 in combination, the connecting part N220A of this embodiment may be pivoted relative to the mounting part N230A to store the ISOFIX connecting assembly N200A. Correspondingly, a component storage groove N121A is provided on the box N100A to provide a storage space for storing the ISOFIX connecting assembly N200A.

As shown in FIGS. 35 to 37, when the ISOFIX connecting assembly N200A is in the use state, one end of the engaging part N210A (i.e., the "other end" mentioned above) that is cooperated with the corresponding interface of the vehicle seat extends from one side of the bottom support member N120A, and the engaging part N210A and the connecting part N220A are located on the outer side of the mounting part N230A. Further referring to FIGS. 37 and 38, when the carrier N1A is not in use, the connecting part N220A may slide along the mounting part N230A, thereby moving the engaging part N210A to a position corresponding to the component storage groove N121A. Then, the connecting part N220A (and the engaging part N210A) may be pivoted relative to the mounting part N230A, for example, pivoted by N180 degrees, such that the engaging part N210A and the connecting part N220A are located on the inner side of the mounting part N230A, and then the ISOFIX connecting assembly N200A is stored in the component storage groove N121A.

In one example, the component storage groove N121A may be provided on the bottom support member N120A, for example, on the bottom side of the bottom support member N120A. It should be noted that the component storage groove N121A shown in FIG. 37 is provided in the middle part of the bottom side of the bottom support member N120A (i.e., centrally located on the bottom side of the bottom support member N120A), but the present disclosure is not limited thereto, and the component storage groove N121A may also be provided at a position offset from the middle part along the longitudinal direction ND3.

As shown in FIGS. 37 and 38, the carrier N1A of this embodiment also comprises a locking mechanism N400A to keep the ISOFIX connecting assembly N200A in the storage state. Specifically, the locking mechanism N400A may be provided on the bottom support member N120A of the box N100A and may lock the connecting part N220A to keep the ISOFIX connecting assembly N200A in the component storage groove N121A. In one example, the locking mechanism N400A may be provided at the edge of the component storage groove N121A. Specifically, when the ISOFIX connecting assembly N200A is stored in the component storage groove N121A (i.e., in the storage state), the locking mechanism N400A may be provided at the edge of the component storage groove N121A close to the synchronizing member N222A and may lock the synchronizing member N222A of the connecting part N220A.

However, it should be understood that the locking mechanism N400A of the present disclosure is not limited to the above position, and it may also be provided to be close to and lock the sliding member N221A and/or the connecting member N223A of the connecting part N220A, or it may also be provided to be close to and lock the engaging part N210A, as long as the ISOFIX connecting assembly N200A may be kept in the component storage groove N121A.

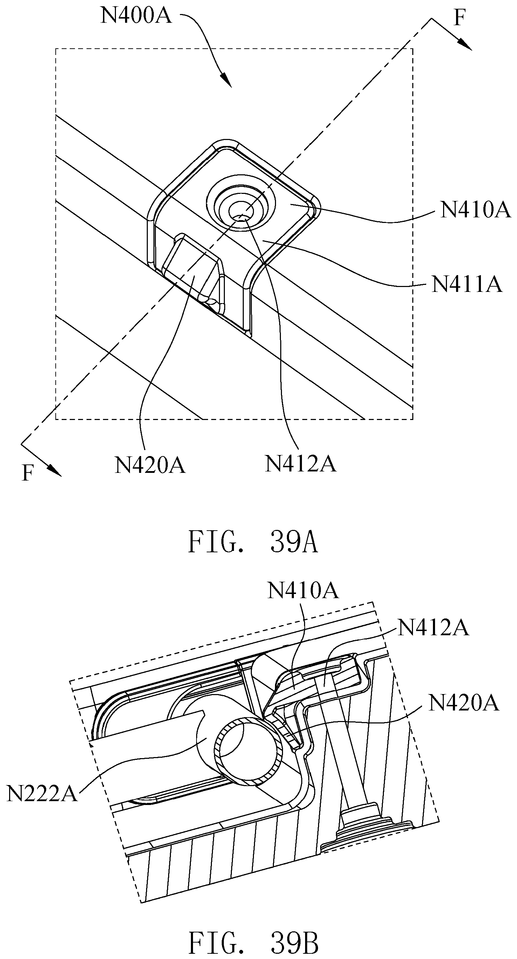

Further referring to FIGS. 39A and 39B, FIG. 39A shows a partial enlarged view of part E shown in FIG. 38, and FIG. 39B shows a partial sectional view taken along line F-F in FIG. 39A to show a specific structure of the locking mechanism N400A.

In this embodiment, the locking mechanism N400A may comprise a connecting seat N410A and a locking member N420A. The connecting seat N410A may be fixedly provided on the bottom support member N120A. For example, the upper surface N411A of the connecting seat N410A may have a mounting hole N412A, and a fastener such as a screw may pass through the mounting hole N412A to be connected with the bottom support member N120A, thereby fixedly connecting the connecting seat N410A to the bottom support member N120A.

The locking member N420A is provided on the side of the connecting seat N410A close to the connecting part N220A, for example, when the ISOFIX connecting assembly is in the storage state, the locking member N420A is located on the side surface of the connecting seat N410A close to the synchronizing member N222A. In one example, as shown in FIG. 39B, the locking member N420A may be a locking buckle, for example, a reverse buckle protruding from one side of the connecting seat N410A (i.e., the side close to the connecting part N220A) and may be in interference fit with the connecting part N220A (specifically the synchronizing member N222A) to lock the ISOFIX connecting assembly N200A, that is, to keep the ISOFIX connecting assembly N200A to be locked in the component storage groove N121A. When it is necessary to use the ISOFIX connecting assembly N200A, the connecting part N220A may be forcefully pulled relative to the mounting part N230A to across the locking buckle to achieve unlocking. Optionally, the locking buckle may be made of plastic, but the present disclosure is not limited thereto.

In another example, the locking member N420A may also be a spring tab protruding from one side of the connecting seat N410A (not shown). When the ISOFIX connecting assembly N200A is stored (i.e., when it is placed in the component storage groove N121A), at least a part of the connecting part N220A (such as the synchronizing member N222A in this embodiment) may press against the spring tab to be deformed, thereby moving across the spring tab and being locked between the spring tab and the bottom support member N120A. When it is necessary to use the ISOFIX connecting assembly N200A, the synchronizing member N222A may be forcefully pulled relative to the mounting part N230A to leave the space between the spring tab and the bottom support member N120A, thereby achieving unlocking.

In addition, in yet another example, the locking member N420A may also be an elastic protrusion provided on the bottom support member (not shown), with a corresponding recess provided on the synchronizing member N222A, and the ISOFIX connecting assembly N200A is locked by the cooperation between the elastic protrusion and the groove. It should be understood that the positions of the protrusion and the groove in this example may be interchanged.

Certainly, the locking member N420A of the present disclosure is not limited to the above structures, and may also have other hard or soft structures, as long as it can achieve the positioning and/or locking of the ISOFIX connecting assembly N200A (for example, the connecting part N220A).

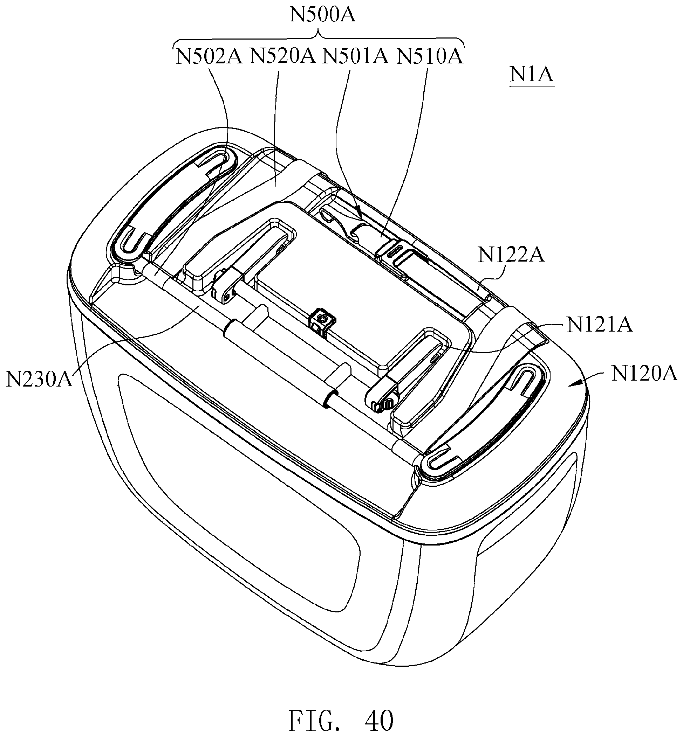

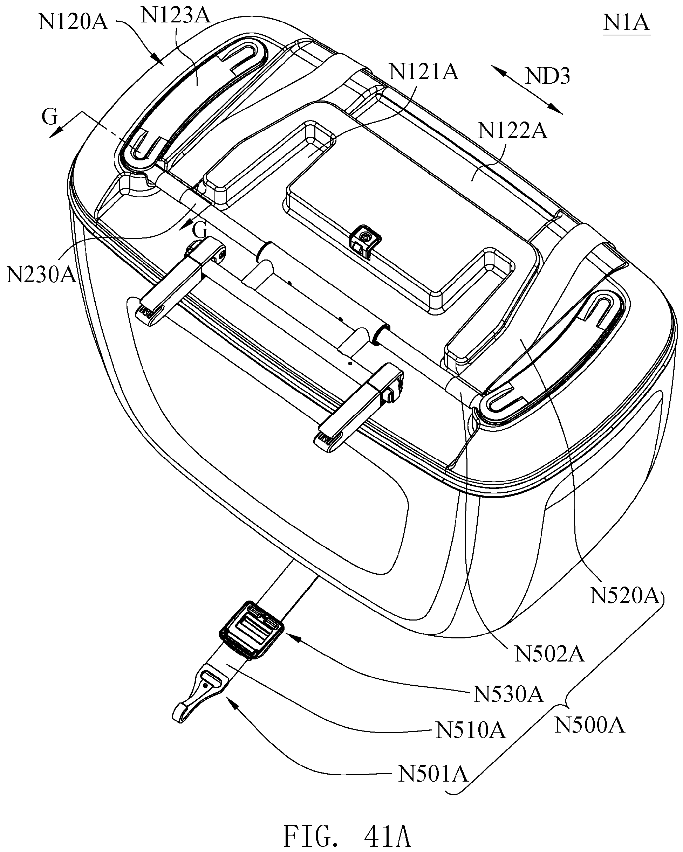

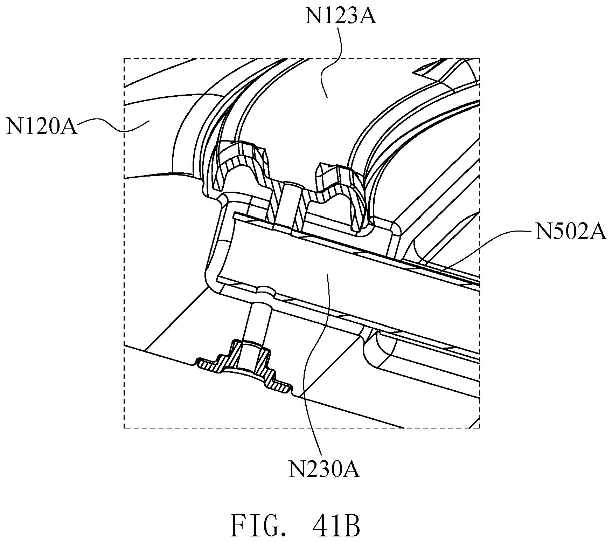

FIG. 40 shows another perspective bottom view of the carrier N1A shown in FIG. 38, in which a bottom covering N102A is removed to more clearly show the structure inside the bottom support member N120A. Specifically, the ISOFIX connecting assembly N200A and the fixing belt assembly N500A of the carrier N1A shown in FIG. 40 are in the storage state. FIG. 41A shows another perspective bottom view of the carrier N1A, in which the ISOFIX connecting assembly N200A and the fixing belt assembly N500A are both in the use state (i.e., the unfolded state), and FIG. 41B shows a partial sectional view taken along line G-G in FIG. 41A.

Referring to FIGS. 40 and 41A in combination, the carrier N1A may comprise a fixing belt assembly N500A, at least a part of which is fixedly connected to the box N100A or provided on the ISOFIX connecting assembly N200A at the bottom of the box N100A in a detachable or non-detachable manner, to fix the box N100A to the vehicle seat. That is, at least a part of the fixing belt assembly N500A is kept in connection with the box N100A no matter whether it is in use or not.

Specifically, the fixing belt assembly N500A may comprise a belt body formed by a first belt N510A and a second belt N520A, as well as a first connecting end N501A and a second connecting end N502A. One end of the first belt N510A forms the first connecting end N501A of the fixing belt assembly N500A and is provided with a first connecting device, such as a Top Tether (top tether) connecting device, for being connected to the top anchoring point on the vehicle seat or the corresponding anchoring point above the vehicle seat. The other end of the first belt N510A is connected to one end of the second belt N520A, and the other end of the second belt N520A forms the second connecting end N502A and is fixedly connected to the box N100A or the ISOFIX connecting assembly N200A. Optionally, the fixing belt assembly N500A may have two second connecting ends N502A. In addition, the second belt N520A in this embodiment may have a structure similar to that in the aforementioned embodiment, and the fixing belt assembly N500A may also be provided with a length adjuster N530A similar to that in the aforementioned embodiment, which will not be described in detail here.

Unlike the embodiments shown in FIGS. 28 to 30, in this embodiment, the two second connecting ends N502A of the fixing belt assembly N500A may be connected to the mounting part N230A of the ISOFIX connecting assembly N200A, and the belt body is routed from the side of the bottom support member N120A opposite to the side where the engaging part N210A is provided, to the top of the box N100A, and then is connected to the vehicle or vehicle seat above the box N100A through the first connecting end N501A, thereby fixing the box N100A to the vehicle seat.

Referring to FIGS. 35, 36, and 41A, the connection positions of the two second connecting ends N502A with the mounting part N230A are respectively located outside a sliding stroke of the sliding member N221A of the connecting part N220A relative to the mounting part N230A to avoid interference between the fixing belt assembly N500A and the sliding member N221A. For example, the two connection positions may be symmetrically located outside the ends of the sliding stroke. In one example, limiting members (not shown) may be provided at both ends of the mounting part N230A to limit the connecting part N220A, thereby preventing interference between the connecting part N220A and the fixing belt assembly N500A and detachment of the connecting part N220A from the mounting part N230A. Specifically, the limiting members may be located between the second connecting end N502A of the fixing belt assembly N500A and the connecting part N220A.

As shown in FIGS. 40 and 41A, the carrier N1A may also be provided with a fixing belt storage groove N122A to provide a space for storing the fixing belt assembly N500A, so that the fixing belt assembly N500A may be stored while being kept in connection with the ISOFIX connecting assembly N200A, avoiding the fixing belt assembly N500A from being scattered around the box N100A. In one example, the fixing belt storage groove N122A may be provided on the side of the bottom support member N120A away from the backrest of the vehicle seat. In addition, referring to FIGS. 38 and 40, the carrier N1A may also be provided with a storage cover N1021A for closing the fixing belt storage groove N122A. Optionally, the storage cover N1021A may be detachably connected to the bottom covering N102A that covers the exterior of the bottom support member N120A, or it may be a part of the bottom covering N102A and detachably connected to the other part of the bottom covering N102A. The above-mentioned detachable connection may be made by a zipper structure, Velcro, hook-and-loop fasteners, etc., but the present disclosure is not limited thereto. In one example, the fixing belt storage groove N122A may be centrally located on the side of the bottom support member N120A away from the backrest of the vehicle seat, but the present disclosure is not limited thereto, and may also be located at other positions on the bottom support member N120A without interfering with the component storage groove N121A.

As shown in FIG. 40, when the fixing belt assembly N500A is not used to fix the box N100A, the first connecting end N501A of the fixing belt assembly N500A and a part of the belt body connected thereto may be stored in the fixing belt storage groove N122A while the second connecting end N502A of the fixing belt assembly N500A is kept in connection with the ISOFIX connecting assembly N200A. In a specific example, the first connecting end N501A and the first belt N510A, and optionally a part of the second belt N520A, are stored in the fixing belt storage groove N122A.

Referring to FIGS. 41A and 41B, the box N100A may also be provided with supporting feet N123A. The supporting feet N123A may be provided on the bottom side of the bottom support member N120A to support the box N100A. In one example, as shown in FIG. 41A, the supporting feet N123A may be provided at both ends of the bottom support member N120A along the longitudinal direction ND3. Specifically, the bottom support member N120A may have a depressed structure for mounting the ISOFIX connecting assembly N200A, especially a depressed structure of the mounting part N230A. The supporting feet N123A are provided above at least a part of the depressed structure to restrict the ends of the mounting part N230A within the depressed structure. In this embodiment, as shown in FIG. 41B, the supporting feet N123A may be fixed to the bottom support member N120A by fasteners, and optionally, the fastener at one end of the supporting feet N123A may pass through that end of the supporting feet N123A and one end of the mounting part N230A in sequence, and fix the supporting feet N123A and the mounting part N230A together to the bottom support member N120A. However, the present disclosure is not limited thereto, and other ways may also be used to fix the supporting feet N123A and/or the ISOFIX connecting assembly N200A.

By providing the ISOFIX connecting assembly of the embodiments of the present disclosure, the box of the carrier may be fixed to different positions on the vehicle seat without one-by-one engagement of the plurality of engaging parts. At the same time, after the box is fixed, the position of the box in the longitudinal direction may also be adaptively adjusted, which improves the convenience of use and the user experience. In addition, the ISOFIX connecting assembly of the present disclosure may be adapted to multiple positions of the vehicle seat through a movable (i.e., slidable) connection, and may be pivoted to be stored on the bottom side of the bottom support member, thereby making the operation convenient, saving the storage space, and avoiding the engaging part of the ISOFIX connecting assembly from knocking into the user or other structures of the vehicle when the box body is lifted alone, thereby improving the safety of use. In addition, by cooperating the ISOFIX connecting assembly and the fixing belt assembly to fix the box to the vehicle seat in the present disclosure, the reliability and stability of the fixation are further ensured, and the safety of the user or pet inside the box body can be ensured, and injury when the box body is impacted can be avoided.

It should be noted that the structures in the above two embodiments of the present disclosure may be combined or interchanged. For example, in the case of no structural conflict, the embodiment shown in FIG. 29 may be provided with a locking mechanism, and the embodiment shown in FIG. 35 may also be provided with a reinforcing bracket, but the present disclosure is not limited thereto.

The technical features of the above-mentioned embodiments may be combined in any way. In order to make the description concise, not all possible combinations of the technical features in the above embodiments have been described. However, as long as there is no contradiction between these technical features, all of them should be considered within the scope of this specification.

The above-mentioned embodiments only express several implementation ways of the present disclosure. Their description is relatively specific and detailed, but it should not be understood as limiting the scope of the patent disclosed. It should be pointed out that for those skilled in the art, on the premise of not departing from the concept of the present disclosure, several deformations and improvements can still be made, and these all belong to the protection scope of the present disclosure. Therefore, the protection scope of the present disclosure should be based on the pending claims.

## Claims

1. A fixing belt assembly for securing a carrier to a vehicle seat, **characterized in that**
the carrier comprises a box body and a bottom support member, the bottom support member is detachably connected to the box body and is arranged below the box body, and
the fixing belt assembly is configured to be connected to the carrier and at least a portion of the fixing belt assembly is capable of being stored in a storage space of the carrier.

2. The fixing belt assembly according to claim 1, **characterized in that** the fixing belt assembly comprises:
a first belt assembly, at least a portion of which being routed from a side of the carrier away from a backrest of the vehicle seat to a bottom of the carrier, and one end of the first belt assembly is provided with a first connecting device connected to a top of the vehicle seat; and
a second belt assembly provided at the bottom of the carrier, one end of the second belt assembly is connected to the other end of the first belt assembly, and the other end of the second belt assembly is provided with a second connecting device, and the second connecting device is connected to the vehicle seat, to secure the carrier to the vehicle seat.

3. The fixing belt assembly according to claim 2, **characterized in that**
the bottom support member is provided with a fixing belt limiting structure, and the fixing belt limiting structure is configured to position the fixing belt assembly, such that at least a portion of the fixing belt assembly is connected to the carrier.

4. The fixing belt assembly according to claim 3, **characterized in that**
the carrier further comprises a reinforcing bracket provided at an underside of the bottom support member, and the fixing belt limiting structure is provided on the reinforcing bracket.

5. The fixing belt assembly according to claim 3, **characterized in that**
the fixing belt limiting structure comprises two first limiting structures and two second limiting structures, and
a spacing between the two second limiting structures is greater than or equal to a spacing between the two first limiting structures.

6. The fixing belt assembly according to claim 3, **characterized in that** the fixing belt limiting structure comprises:
a first tubular structure having a length extending along a longitudinal axis direction of the bottom support member;
a second tubular structure provided to intersect with the first tubular structure;
wherein a clearance gap through which the fixing belt assembly passes is formed on the first tubular structure or the second tubular structure, or between the first tubular structure and the second tubular structure.

7. The fixing belt assembly according to claim 6, **characterized in that**
the first tubular structure is provided substantially perpendicular to the second tubular structure; or
at least a portion of the second tubular structure is inclined relative to both the longitudinal axis direction and a transverse axis direction of the carrier, such that a distance between first ends of the two second tubular structures of the two fixing belt limiting structures is less than a distance between second ends of the two second tubular structures.

8. A carrier, **characterized in that** the carrier comprises
the fixing belt assembly according to any one of claims 1 to 7.

9. A connecting and fixing apparatus for securing a carrier to a vehicle seat, **characterized in that** the connecting and fixing apparatus comprises:
a first belt connecting assembly and a second belt connecting assembly, one end of the first belt connecting assembly forming a first connecting end of the connecting and fixing apparatus, the other end of the first belt connecting assembly being connected to one end of the second belt connecting assembly, and the other end of the second belt connecting assembly forming a second connecting end of the connecting and fixing apparatus, the first connecting end being connected to a first anchoring point, at least a portion of the connecting and fixing apparatus being routed from a side of the carrier away from a backrest of the vehicle seat to the underside of the carrier, so that the second connecting end is connected to a second anchoring point; and
a buffer structure provided on the connecting and fixing apparatus.

10. The connecting and fixing apparatus according to claim 9, **characterized in that** the buffer structure comprises at least one buffer belt, the two ends of which are respectively connected to the connecting and fixing apparatus by a first fixing member and a second fixing member.

11. The connecting and fixing apparatus according to claim 10, **characterized in that** an initial effective length of the buffer belt between the first fixing member and the second fixing member is less than an initial effective length of the connecting and fixing apparatus between the first fixing member and the second fixing member.

12. The connecting and fixing apparatus according to claim 10 or 11, **characterized in that** an elongation of the buffer belt is greater than an elongation of the connecting and fixing apparatus on which the buffer belt is provided.

13. The connecting and fixing apparatus according to claim 10 or 11, **characterized in that** the buffer structure comprises at least one first knot point, and the at least one first knot point is provided on the connecting and fixing apparatus and located between the first fixing member and the second fixing member.

14. The connecting and fixing apparatus according to claim 10 or 11, **characterized in that** the buffer belt is provided with at least one second knot point,
wherein when the at least one second knot point is released, a buffering effective length of the buffer belt between the first fixing member and the second fixing member is greater than an effective length of the connecting and fixing apparatus between the first fixing member and the second fixing member, and an elongation of the buffer belt is less than an elongation of the connecting and fixing apparatus on which the buffer belt is provided.

15. A connecting and fixing apparatus for securing a carrier to a vehicle seat, **characterized in that** the connecting and fixing apparatus has a first connecting end and a second connecting end respectively connected to a first anchoring point and a second anchoring point, at least a portion of the connecting and fixing apparatus is routed around a side of the carrier away from a backrest of the vehicle seat,
the connecting and fixing apparatus comprises a first belt connecting assembly and a second belt connecting assembly detachably connected to each other, and the first belt connecting assembly comprises a first belt structure and a second belt structure,
wherein the first belt structure and the second belt structure are alternatively used and detachably connected to the second belt connecting assembly, and
wherein the first belt structure and the second belt structure have different elongations.

16. The connecting and fixing apparatus according to claim 15, **characterized in that**
the first belt structure comprises a first belt body as well as a first end and a second end located at two ends of the first belt body, when the first belt structure is connected to the second belt connecting assembly, a first end of the first belt structure forms a first connecting end of the connecting and fixing apparatus, and the second end is detachably connected to the second belt connecting assembly;
the second belt structure comprises a second belt body as well as a first end and a second end located at two ends of the second belt body, when the second belt structure is connected to the second belt connecting assembly, a first end of the second belt structure forms a first connecting end of the connecting and fixing apparatus, and the second end is detachably connected to the second belt connecting assembly; and
the second end of the second belt connecting assembly forms the second connecting end.

17. The connecting and fixing apparatus according to claim 15, **characterized in that**
the elongation of the first belt structure is greater than the elongation of the second belt structure,
when the first anchoring point is close to the carrier, the first belt structure is connected to the second belt connecting assembly; and
when the first anchoring point is away from the carrier, the second belt structure is connected to the second belt connecting assembly.

18. The connecting and fixing apparatus according to any one of claims 15 to 17, **characterized in that** a buffer structure is provided on at least one of the first belt structure, the second belt structure, and the second belt connecting assembly.

19. A carrier, **characterized in that**
the carrier is secured to a vehicle seat by the connecting and fixing apparatus according to any one of claims 9 to 18.

20. An ISOFIX connecting assembly for securing a box of a carrier to a vehicle seat, **characterized in that** the ISOFIX connecting assembly comprises:
an engaging part connected to an ISOFIX interface provided on the vehicle seat;
a mounting part fixedly connected to the box; and
a connecting part fixedly connected to the engaging part and movably connected to the mounting part, to drive the engaging part to move relative to the mounting part.

21. The ISOFIX connecting assembly according to claim 20, **characterized in that** the connecting part comprises:
a sliding member slidably pivoted to the mounting part; and
a connecting component connected between the engaging part and the sliding member, to drive the engaging part to slide and/or pivot relative to the mounting part.

22. The ISOFIX connecting assembly according to claim 21, **characterized in that**
the ISOFIX connecting assembly is provided with at least two engaging parts; and
the connecting component comprises:
a synchronizing member connecting the at least two engaging parts together to drive the at least two engaging parts to move synchronously; and
a connecting member connected between the synchronizing member and the sliding member.

23. The ISOFIX connecting assembly according to any one of claims 20 to 22, **characterized in that** the ISOFIX connecting assembly further comprising:
a locking device provided between the connecting part and the mounting part to lock the connecting part to the mounting part and unlock the connecting part from the mounting part.

24. The ISOFIX connecting assembly according to claim 20, **characterized in that**
the mounting part is provided with a locking part, the locking part comprising a first locking part and a second locking part,
the first locking part and the second locking part are respectively located at different positions of the mounting part along a longitudinal direction of the box, to lock the connecting part relative to the mounting part at different positions.

25. The ISOFIX connecting assembly according to claim 24, **characterized in that**
the connecting part is pivotable relative to the mounting part, so that the connecting part and the engaging part are stored in the box, and
the locking device further comprises a locking member cooperatable with the locking part, the locking part further comprises a third locking part located on an opposite side of the first locking part and the second locking part to be engaged with the locking member to lock the connecting part stored.

26. The ISOFIX connecting assembly according to any one of claims 20 to 22, **characterized in that** the connecting part is pivotable relative to the mounting part, so that the connecting part and the engaging part are stored in the box, and the box is provided with a locking mechanism to lock the connecting part stored in the box.

27. A carrier, **characterized in that** the carrier comprises:
a box providing an accommodating space, and comprising:
a box body;
a bottom support member detachably connected to the box body,
wherein the ISOFIX connecting assembly according to any one of claims 20 to 26 is provided on the bottom support member.

28. The carrier according to claim 27, **characterized in that**
the bottom support member is provided with a component storage groove, and the component storage groove provides a storage space for storing the ISOFIX connecting assembly.

29. The carrier according to claim 28, **characterized in that** the bottom support member is provided with a locking mechanism, when the ISOFIX connecting assembly is stored in the component storage groove, the locking mechanism locks the connecting part of the ISOFIX connecting assembly to keep the ISOFIX connecting assembly within the component storage groove.

30. The carrier according to claim 27, **characterized in that**
the carrier further comprises a fixing belt assembly connected to the box to secure the box to the vehicle seat, and the fixing belt assembly comprising a belt body, a first connecting end, and a second connecting end,
the belt body is located between the first connecting end and the second connecting end, the first connecting end is connected to the vehicle seat, at least a portion of the belt body is routed to a side of the box away from the backrest of the vehicle seat, and the second connecting end is connected to the bottom support member or the ISOFIX connecting assembly.

31. The carrier according to claim 30, **characterized in that**
the bottom support member is provided with a belt fixing structure to connect at least a portion of the fixing belt assembly to the bottom support member,
the belt fixing structure is arranged on a side of the bottom support member away from the backrest of the vehicle seat, and the second connecting end of the fixing belt assembly is connected to the belt fixing structure.
